# EUROPEAN PATENT SPECIFICATION

(11) **EP 3 343 392 B1**
(45) Date of publication and mention of the grant of the patent: **10.11.2021**
(21) Application number: 17207532.7
(22) Date of filing: 14.12.2017
(51) Int. Cl.: G06F 17/16, G06F 16/22, G06F 16/28, G06N 20/00

(54) **HARDWARE ACCELERATOR ARCHITECTURE AND TEMPLATE FOR WEB-SCALE K-MEANS CLUSTERING**
HARDWARE-BESCHLEUNIGER-ARCHITEKTUR UND -TEMPLATE ZUM K-MEANS-CLUSTERING AUF WEBEBENE
ARCHITECTURE D'ACCÉLÉRATEUR MATÉRIEL ET GABARIT POUR ALGORITHME DES K-MOYENNES À L'ÉCHELLE DU WEB

(30) Priority: 31.12.2016 US 201615396515
(43) Date of publication of application: 04.07.2018
(73) Proprietor: INTEL Corporation, Santa Clara, CA 95054 (US)
(72) Inventor: NURVITADHI, Eriko, Hillsboro, OR 97124 (US); VENKATESH, Ganesh, San Jose, CA 95125-4538 (US); KRISHNAN, Srivatsan, Hillsboro, OR 97124 (US); SUBHASCHANDRA, Suchit, Portland, OR 97229 (US); MARR, Deborah, Portland, OR 97210 (US)
(74) Representative: Samson & Partner Patentanwälte mbB

(56) References cited:
- NURVITADHI ERIKO ET AL: "A sparse matrix vector multiply accelerator for support vector machine", 2015 INTERNATIONAL CONFERENCE ON COMPILERS, ARCHITECTURE AND SYNTHESIS FOR EMBEDDED SYSTEMS (CASES), IEEE, 4 October 2015 (2015-10-04), pages 109-116, XP032809059, DOI: 10.1109/CASES.2015.7324551 [retrieved on 2015-11-10]
- ERIKO NURVITADHI ET AL: "Hardware accelerator for analytics of sparse data", DESIGN, AUTOMATION & TEST IN EUROPE, EDA CONSORTIUM, 111 WEST SAINT JOHN STREET, SUITE 220 SAN JOSE CA 95113 USA, 14 March 2016 (2016-03-14), pages 1616-1621, XP058279566, ISBN: 978-3-9815370-6-2
- YAVITS L ET AL: "Sparse Matrix Multiplication On An Associative Processor", IEEE TRANSACTIONS ON PARALLEL AND DISTRIBUTED SYSTEMS, IEEE SERVICE CENTER, LOS ALAMITOS, CA, US, vol. 26, no. 11, 1 November 2015 (2015-11-01), pages 3175-3183, XP011586282, ISSN: 1045-9219, DOI: 10.1109/TPDS.2014.2370055 [retrieved on 2015-10-07]
- Anonymous (joe K): "High throughput vs low latency in HDFS", , 23 May 2013 (2013-05-23), XP055474703, Retrieved from the Internet: URL:https://stackoverflow.com/questions/16 718095/high-throughput-vs-low-latency-in-h dfs [retrieved on 2018-05-14]
- Erik Saule ET AL: "Performance Evaluation of Sparse Matrix Multiplication Kernels on Intel Xeon Phi" In: "Medical image computing and computer-assisted intervention - MICCAI 2015 : 18th international conference, Munich, Germany, October 5-9, 2015; proceedings", 5 February 2013 (2013-02-05), Springer International Publishing, Cham 032548, XP055476927, ISSN: 0302-9743 ISBN: 978-3-319-69952-3 vol. 8384, pages 559-570, DOI: 10.1007/978-3-642-55224-3_52, * abstract * * sections 1, 2.1, 3-4 *
- Sander Lijbrink: "Irregular algorithms on the Xeon Phi", , 17 June 2015 (2015-06-17), XP055476934, Retrieved from the Internet: URL:http://esc.fnwi.uva.nl/thesis/centraal /files/f1908787907.pdf [retrieved on 2018-05-18]
- Aydin Buluç ET AL: "Highly Parallel Sparse Matrix-Matrix Multiplication", , 10 June 2010 (2010-06-10), XP055476942, Retrieved from the Internet: URL:https://arxiv.org/ftp/arxiv/papers/100 6/1006.2183.pdf [retrieved on 2018-05-18]

## Description

### TECHNICAL FIELD

The disclosure relates generally to electronics, and, more specifically, embodiments relate to hardware accelerator architectures and templates for clustering tasks such as web-scale k-means clustering.

### BACKGROUND

In recent years, algorithms from the relatively nascent field of machine learning have been widely applied for many types of practical applications, resulting in technologies such as self-driving vehicles, improved Internet search engines, speech, audio, and/or visual recognition systems, human health data and genome analysis, recommendation systems, fraud detection systems, etc. The growth of the use of these algorithms has in part been fueled by massive increases in the amount and types of data being produced by both humans and non-humans. As the amount of data available for analysis has skyrocketed, so too has the interest in machine learning.

In many different contexts, machine learning algorithms are commonly being implemented using large matrices. Many of these matrices are "sparse" matrices in that they have a significant number of "empty" or "background" values - e.g., zero values. For example, social graphs can be modeled as matrices (e.g., "adjacency matrices") that have as many rows and columns as there are people in the data set, where the elements in the cells of the matrix represent some information about the connections between each pair of people.

When storing and utilizing sparse matrices, it is useful (and sometimes, strictly necessary) to use specialized algorithms and data structures that can take advantage of the sparse structure of the matrix. This is because performing matrix operations using regular dense-matrix structures and algorithms will be quite inefficient when applied to large, sparse matrices as processing and storage resources are effectively "wasted" due to the existence of the substantial amount of zeroes. Thus, sparse data can be easily compressed to require significantly less storage, and particular algorithms and computing architectures can be implemented to accommodate these compressed structures.

However, algorithms involving matrix manipulations, which include many machine learning algorithms, tend to be computationally expensive, as they can involve performing huge numbers of non-trivial operations with huge amounts of data. As a result, it is extremely important to implement these algorithms as efficiently as possible, as any small inefficiency is quickly magnified due to the large scale of computation.

For example, cluster analysis (which is also known as clustering), is the task of grouping a set of objects in such a way that objects in the same group (or "cluster") are more similar to each other than to those in other clusters. Clustering can employ a variety of different algorithms, but typically involves analyzing large multi-dimensional datasets, which are often represented as matrices, and performing a variety of computations (e.g., distances, densities) involving the data. As a result of the computations and the often-large amount of data, many clustering algorithms take a long time to execute, which can prohibit the use of clustering in many applications that would require near-real time updates.

Accordingly, techniques and processing architectures that can enhance the performance of these operations involving sparse matrix data are strongly desired.

NURVITADHI ERIKO ET AL: "A sparse matrix vector multiply accelerator for support vector machine", 2015 INTERNATIONAL CONFERENCE ON COMPILERS, ARCHITECTURE AND SYNTHESIS FOR EMBEDDED SYSTEMS (CASES), IEEE, 4 October 2015 (2015-10-04), pages 109-116, describes a sparse matrix vector multiplication (SpMV) algorithm tailored for machine learning (ML) and a hardware accelerator architecture design based on this algorithm. The algorithm and hardware accelerator achieves significant efficiency improvements over the conventional SpMV algorithm used in the SVM software (libSVM).

ERIKO NURVITADHI ET AL: "Hardware accelerator for analytics of sparse data", DESIGN, AUTOMATION & TEST IN EUROPE, EDA CONSORTIUM, 111 WEST SAINT JOHN STREET, SUITE 220 SAN JOSE CA 95113 USA, 14 March 2016 (2016-03-14), pages 1616-1621, describes a hardware accelerator to perform machine learning (ML) algorithms and sparse matrix operations with extreme efficiency.

### SUMMARY

The present invention is defined in the independent claims. The dependent claims define embodiments of thereof.

### BRIEF DESCRIPTION OF THE DRAWINGS

The invention may best be understood by referring to the following description and accompanying drawings that are used to illustrate some embodiments. In the drawings:
**Figure 1** is a block diagram illustrating a hardware accelerator architecture for web-scale k-means clustering according to some embodiments.
**Figure** 2 is a block diagram illustrating data and exemplary clusters identified within the data according to some embodiments.
**Figure 3** is a block diagram illustrating an exemplary algorithm for mini-batch k-means clustering that can be implemented according to some embodiments.
**Figure 4** is a block diagram illustrating an exemplary sparse matrix, very-sparse matrix, and hyper-sparse matrix.
**Figure 5** is a block diagram illustrating additional components of a hardware accelerator to perform web-scale k-means clustering according to some embodiments.
**Figure 6** is a flow diagram illustrating a flow for initiating web-scale k-means clustering utilizing a hardware accelerator architecture according to some embodiments.
**Figure** 7 is a flow diagram illustrating another flow for performing web-scale k-means clustering utilizing a hardware accelerator architecture according to some embodiments.
**Figure** 8 illustrates an exemplary implementation in which an accelerator is communicatively coupled to a plurality of cores through a cache coherent interface according to some embodiments.
**Figure 9** illustrates another view of an accelerator according to some embodiments.
**Figure 10** illustrates an exemplary set of operations performed by the processing elements according to some embodiments.
**Figure 11a** depicts an example of a multiplication between a sparse matrix A against a vector x to produce a vector y according to some embodiments.
**Figure 11b** illustrates the CSR representation of matrix A in which each value is stored as a (value, row index) pair according to some embodiments.
**Figure 11c** illustrates a CSC representation of matrix A which uses a (value, column index) pair according to some embodiments.
**Figures 12a, 12b,** and **12c** illustrate pseudo code of each compute pattern, in which:

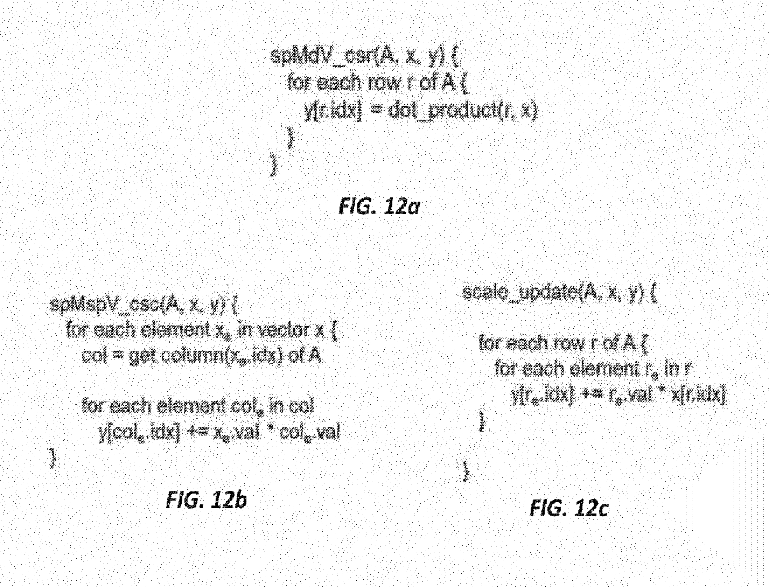

**Figure 12a** illustrates a row-oriented sparse matrix dense vector multiply (spMdV_csr) according to some embodiments.
**Figure 12b** illustrates a column-oriented sparse matrix sparse vector multiply (spMspC_csc) according to some embodiments.
**Figure 12c** illustrates a scale and update operation (scale_update) according to some embodiments.

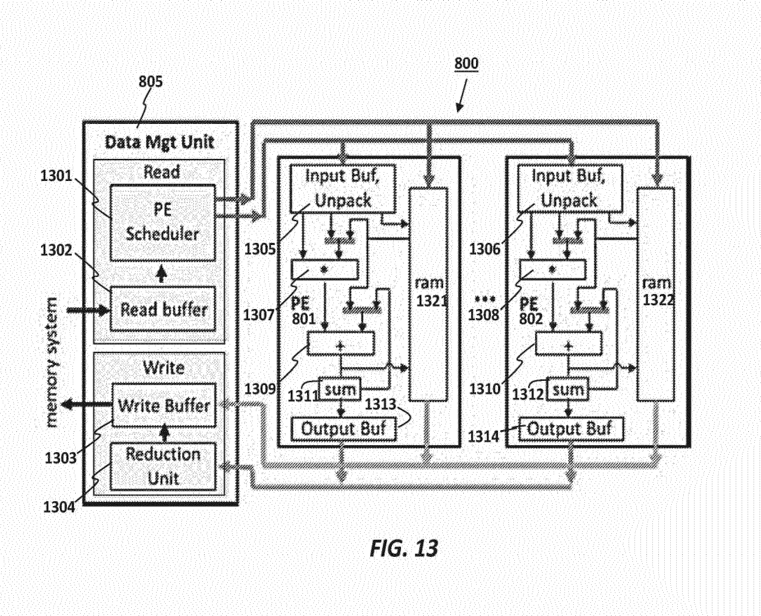

**Figure 13** illustrates the processing flow for one implementation of the data management unit and the processing elements according to some embodiments.

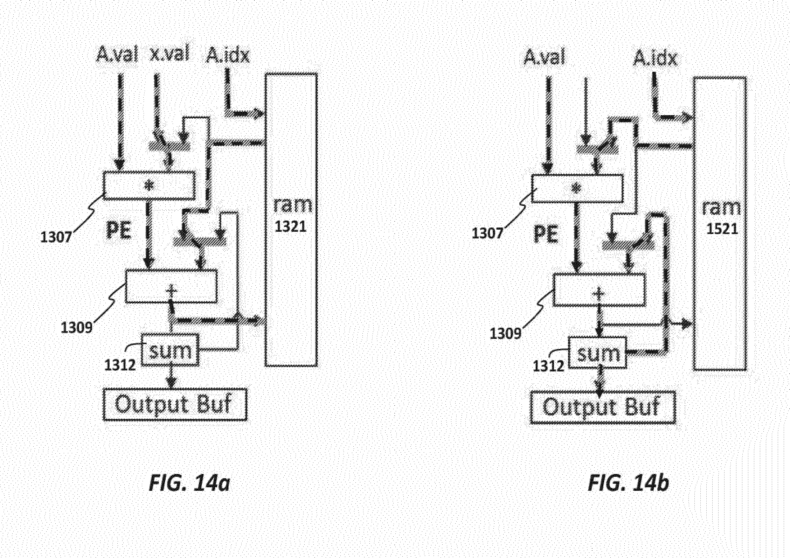

**Figure 14a** highlights paths for spMspV_csc and scale_update operations according to some embodiments.
**Figure 14b** illustrates paths for a spMdV _csr operation according to some embodiments.

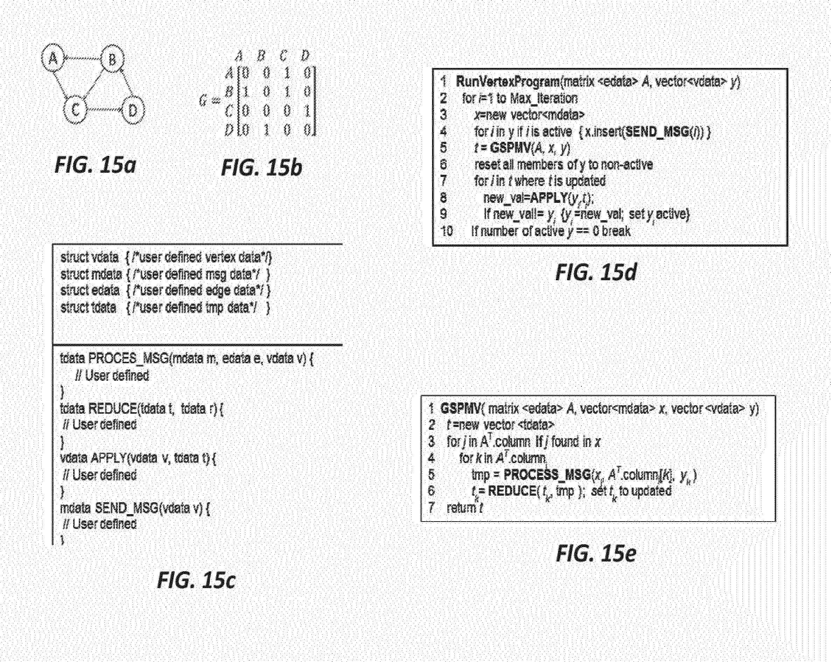

**Figures 15a-15b** show an example of representing a graph as an adjacency matrix.
**Figure 15c** illustrates a vertex program according to some embodiments.
**Figure 15d** illustrates exemplary program code for executing a vertex program according to some embodiments.
**Figure 15e** shows a generalized sparse matrix vector multiply (GSPMV) formulation according to some embodiments.

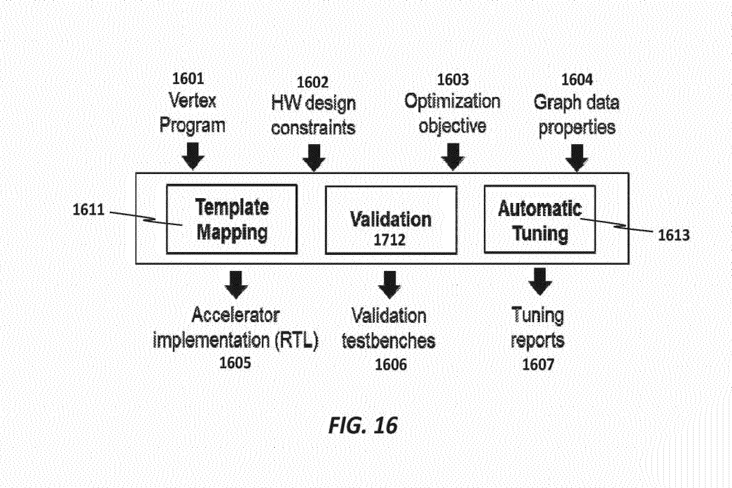

**Figure 16** illustrates one implementation of a design framework for GSPMV according to some embodiments.

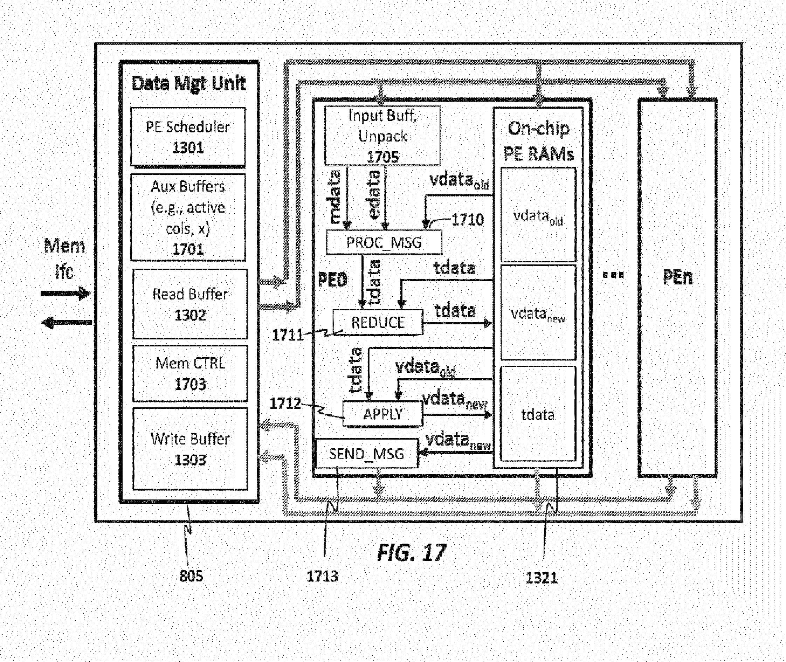

**Figure 17** shows one implementation of an architecture template for GSPMV according to some embodiments.

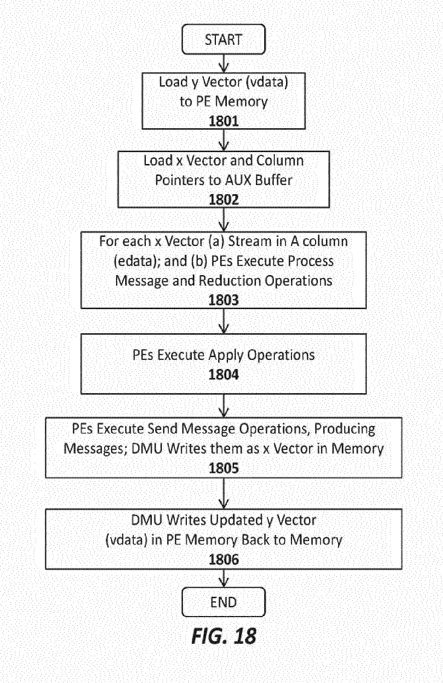

**Figure 18** illustrates a summarization of the operation of each accelerator tile according to some embodiments.

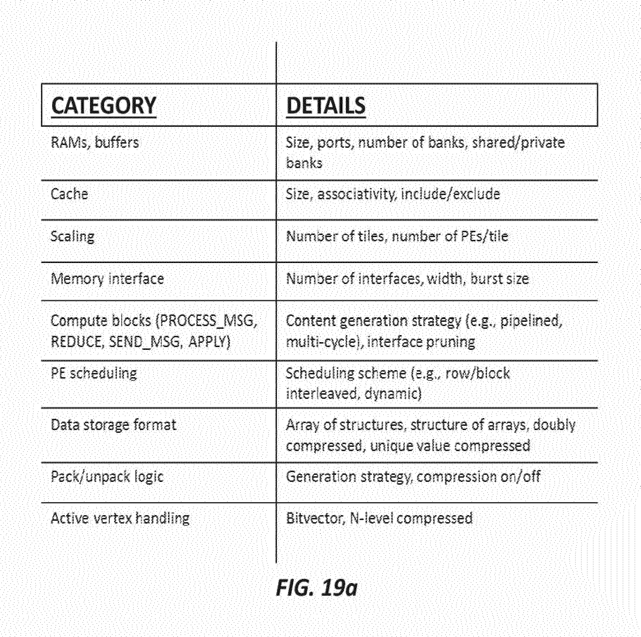

**Figure 19a** illustrates a table summarizing the customizable parameters of one implementation of the template according to some embodiments.

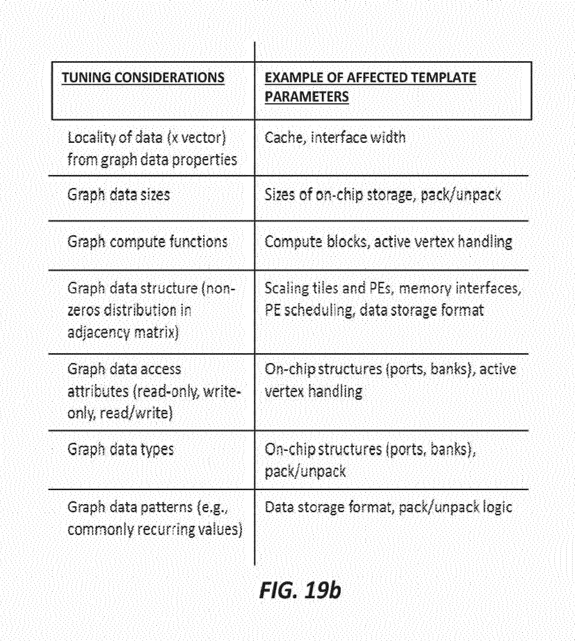

**Figure 19b** illustrates tuning considerations of one implementation of the framework that performs automatic tuning to determine the best design parameters to use to customize the hardware architecture template in order to optimize it for the input vertex program and (optionally) graph data according to some embodiments.

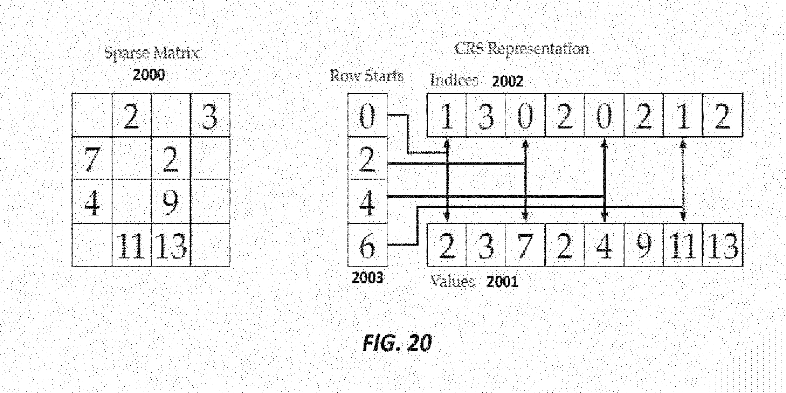

**Figure 20** illustrates the compressed row storage (CRS, sometimes abbreviated CSR) sparse-matrix format according to some embodiments.

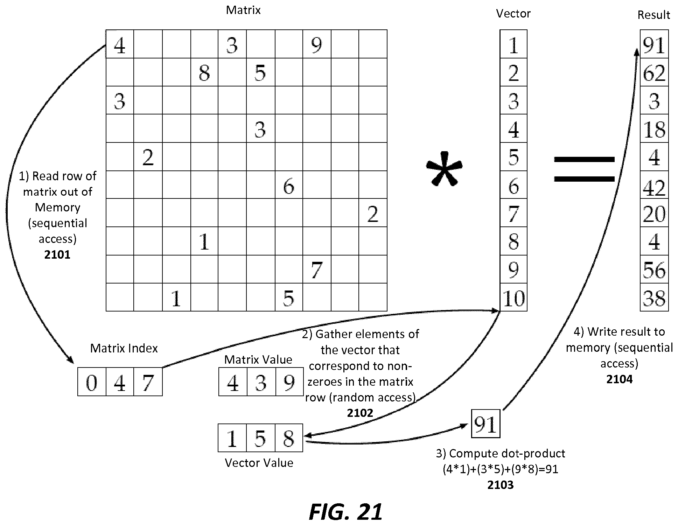

**Figure 21** shows exemplary steps involved in an implementation of sparse matrix-dense vector multiplication using the CRS data format according to some embodiments.

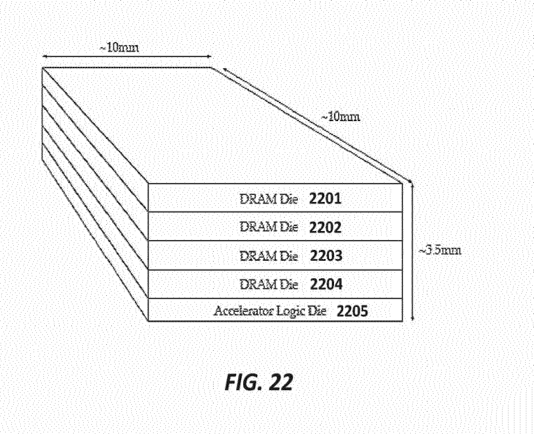

**Figure 22** illustrates one implementation of an accelerator includes an accelerator logic die and one of more stacks of DRAM die according to some embodiments.

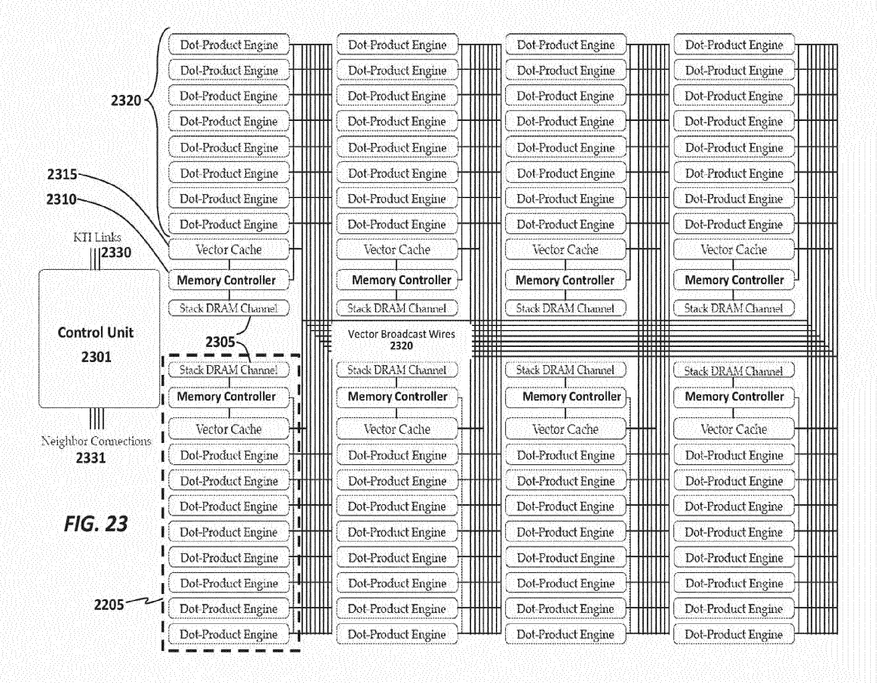

**Figure 23** illustrates one implementation of the accelerator logic chip, oriented from a top perspective through the stack of DRAM die according to some embodiments.

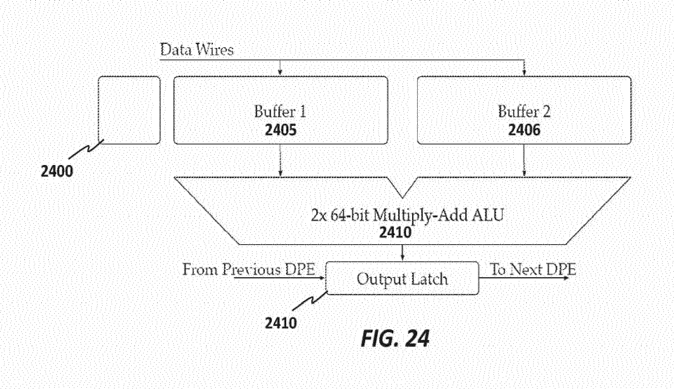

**Figure 24** provides a high-level overview of a dot-product engine (DPE) which contains two buffers, two 64-bit multiply-add arithmetic logic units (ALUs), and control logic according to some embodiments.

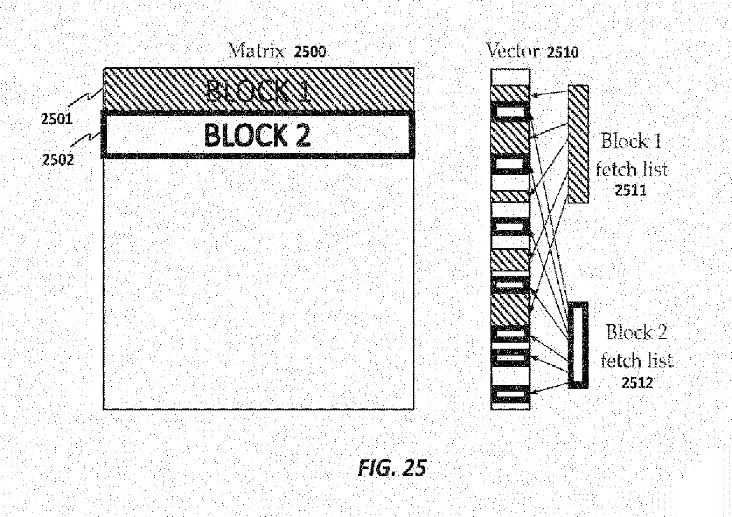

**Figure 25** illustrates a blocking scheme for large sparse-matrix computations according to some embodiments.

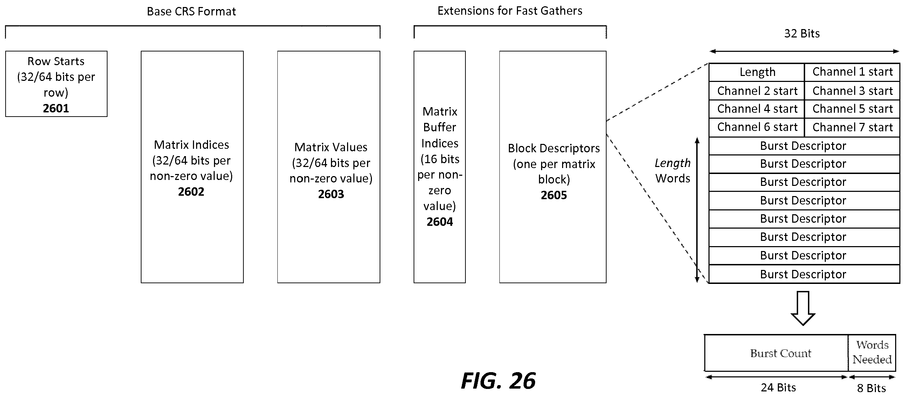

**Figure 26** illustrates a format of block descriptors according to some embodiments.

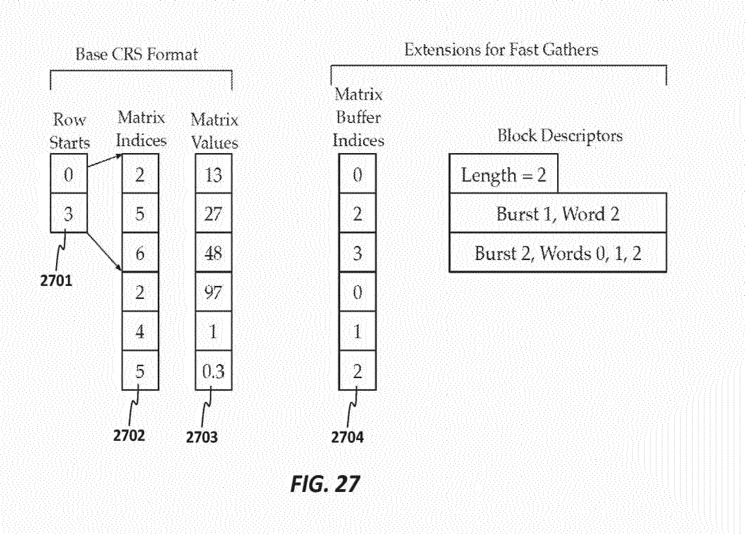

**Figure 27** illustrates the use of block descriptors for a two-row matrix that fits within the buffers of a single dot-product engine, on a system with only one stacked dynamic random access memory (DRAM) data channel and four-word data bursts, according to some embodiments.

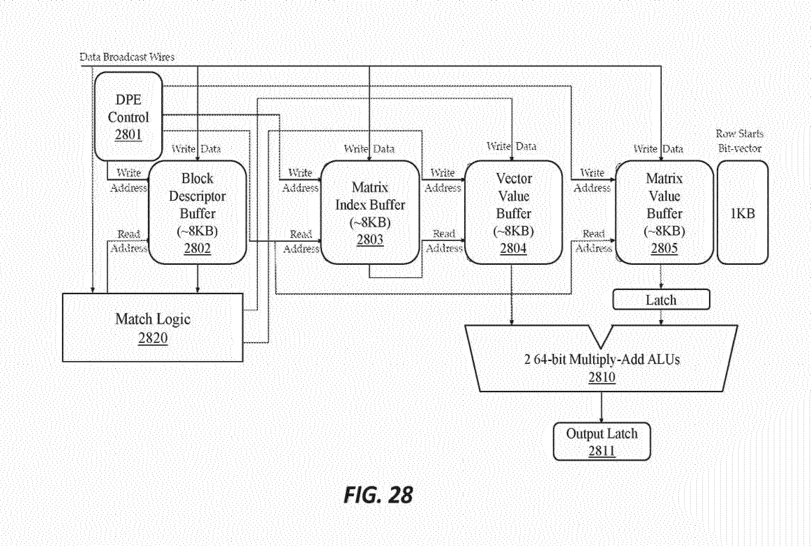

**Figure 28** illustrates one implementation of the hardware in a dot-product engine according to some embodiments.

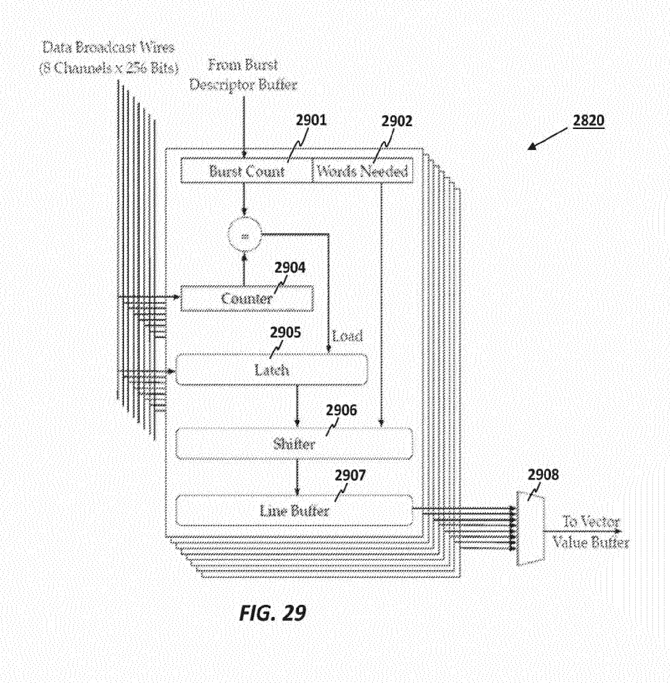

**Figure 29** illustrates the contents of the match logic 3020 unit that does capturing according to some embodiments.

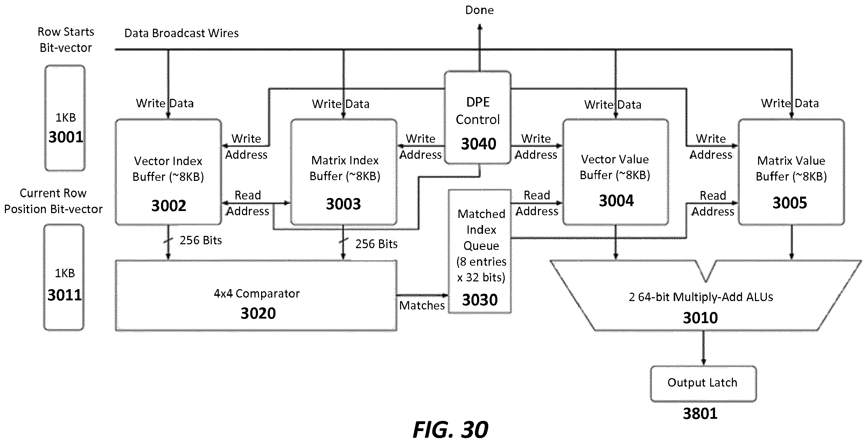

**Figure 30** shows the details of a dot-product engine design to support sparse matrix-sparse vector multiplication according to some embodiments.

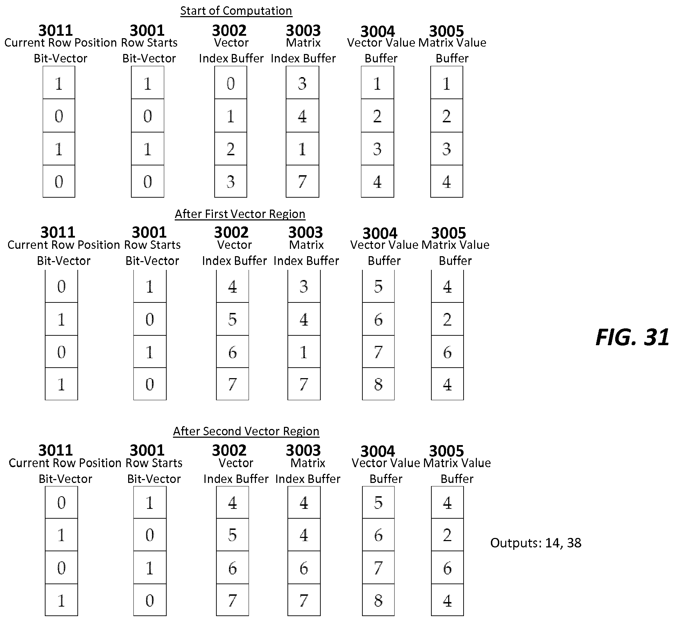

**Figure 31** illustrates an example multi-pass approach using specific values according to some embodiments.

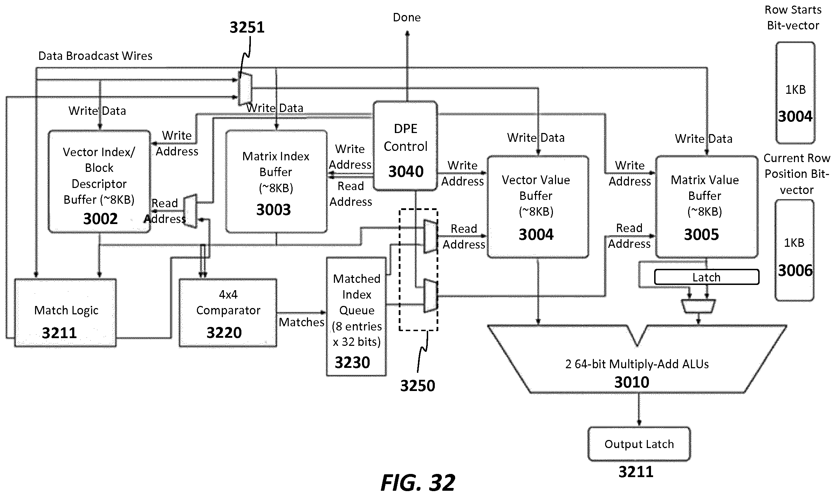

**Figure 32** shows how the sparse-dense and sparse-sparse dot-product engines described above can be combined according to some embodiments.

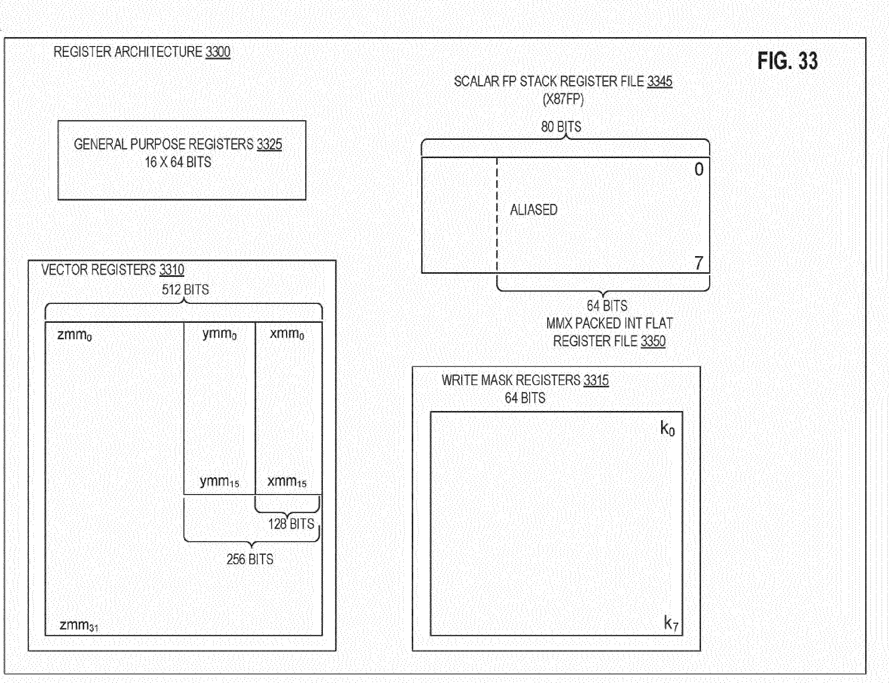

**Figure 33** is a block diagram of a register architecture according to some embodiments.

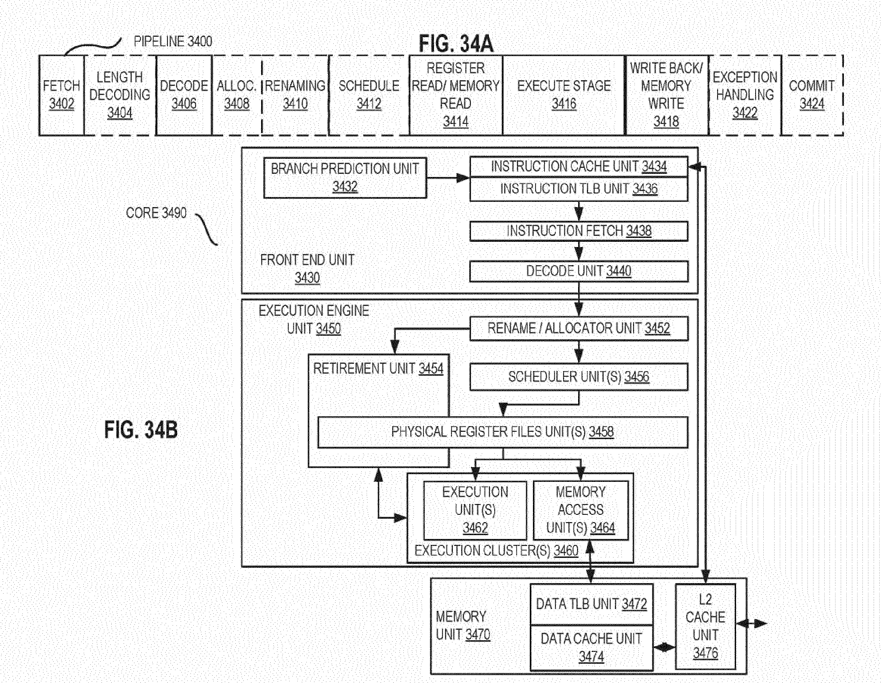

**Figure 34A** is a block diagram illustrating both an exemplary in-order pipeline and an exemplary register renaming, out-of-order issue/execution pipeline according to some embodiments.
**Figure 34B** is a block diagram illustrating both an exemplary embodiment of an in-order architecture core and an exemplary register renaming, out-of-order issue/execution architecture core to be included in a processor according to some embodiments.

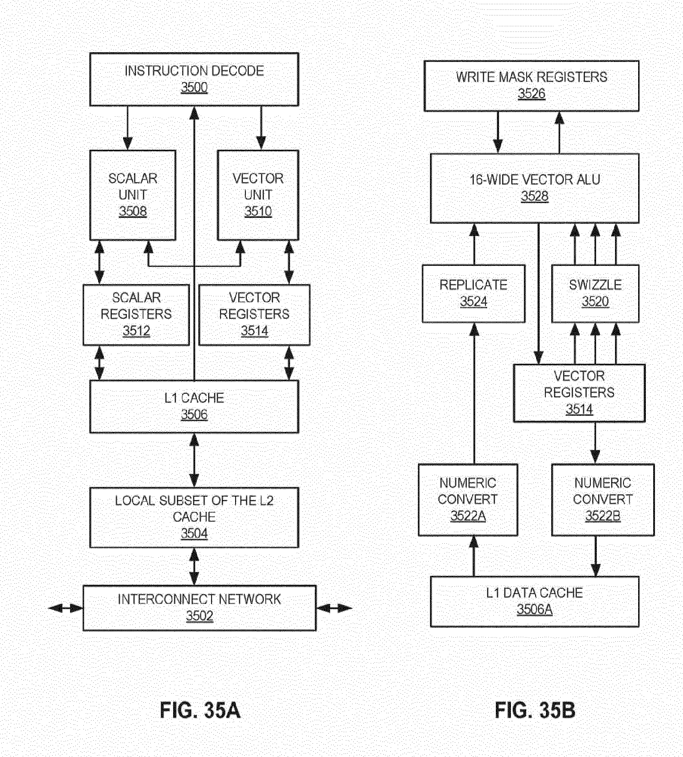

**Figures 35A-B** illustrate a block diagram of a more specific exemplary in-order core architecture, which core would be one of several logic blocks (including other cores of the same type and/or different types) in a chip:
**Figure 35A** is a block diagram of a single processor core, along with its connection to the on-die interconnect network and with its local subset of the Level 2 (L2) cache, according to some embodiments.
**Figure 35B** is an expanded view of part of the processor core in **Figure 35A** according to some embodiments.

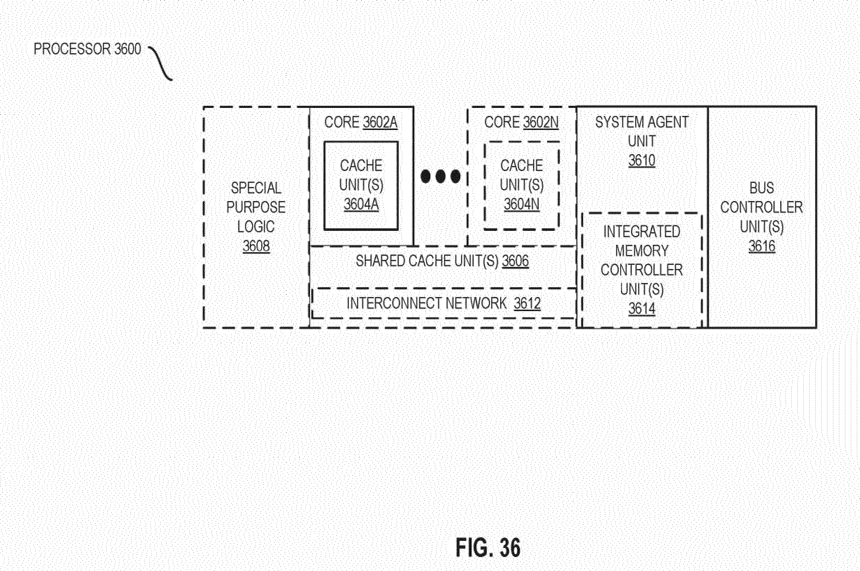

**Figure 36** is a block diagram of a processor that may have more than one core, may have an integrated memory controller, and may have integrated graphics according to some embodiments.

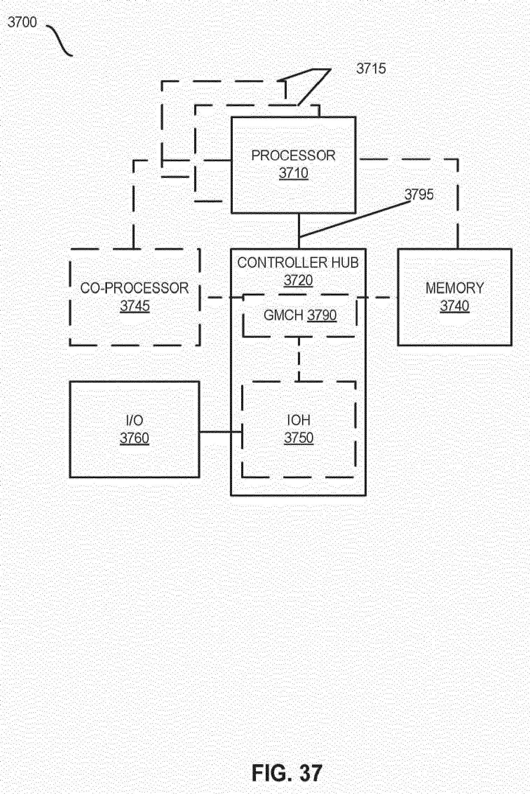

**Figures 37-40** are block diagrams of exemplary computer architectures:
**Figure 37** shown a block diagram of a system in accordance with some embodiments.

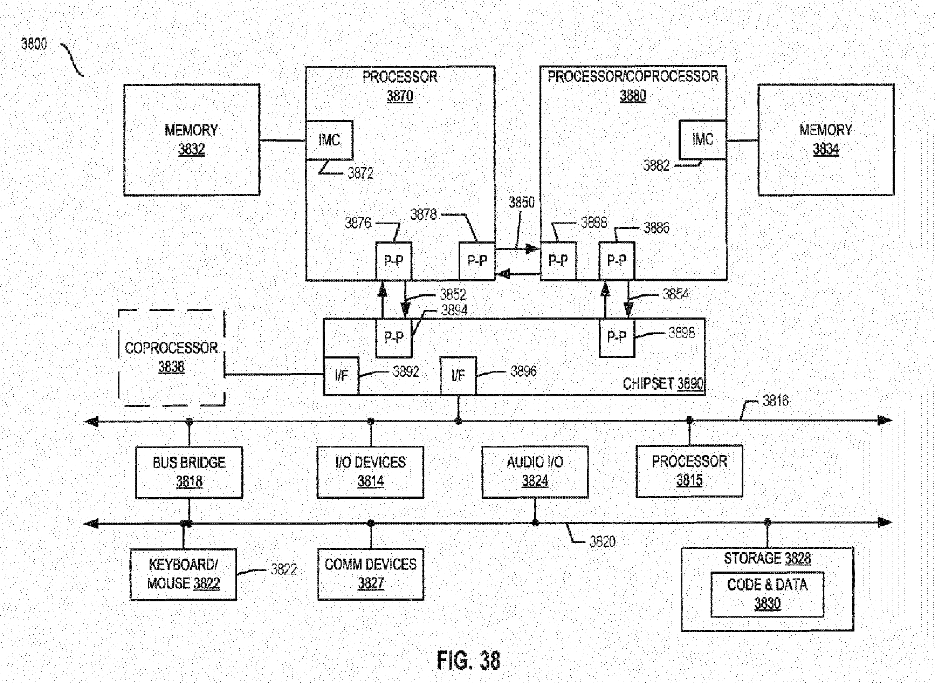

**Figure 38** is a block diagram of a first more specific exemplary system in accordance with some embodiments.

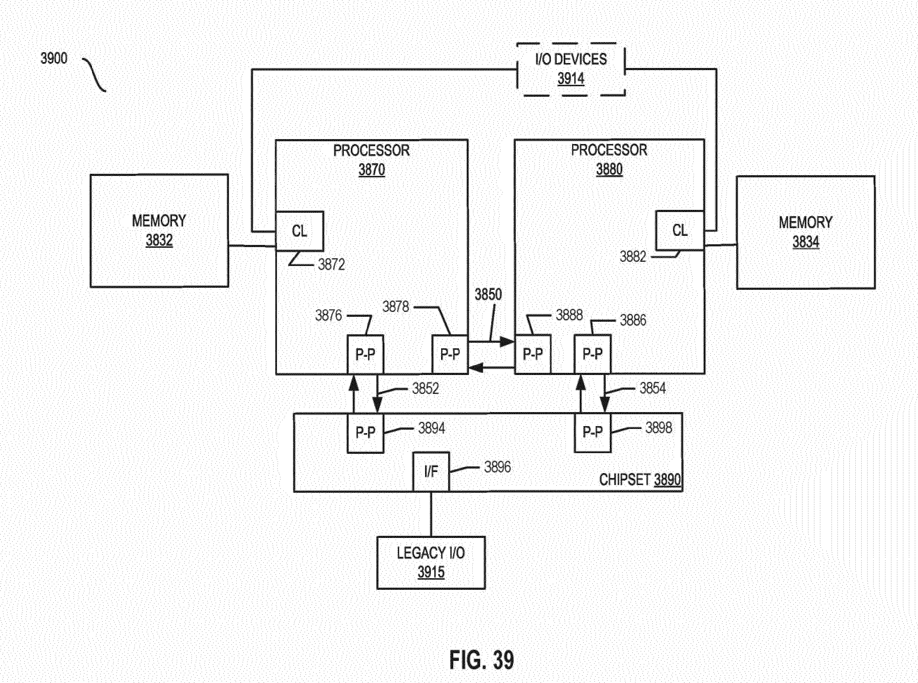

**Figure 39** is a block diagram of a second more specific exemplary system in accordance with some embodiments.

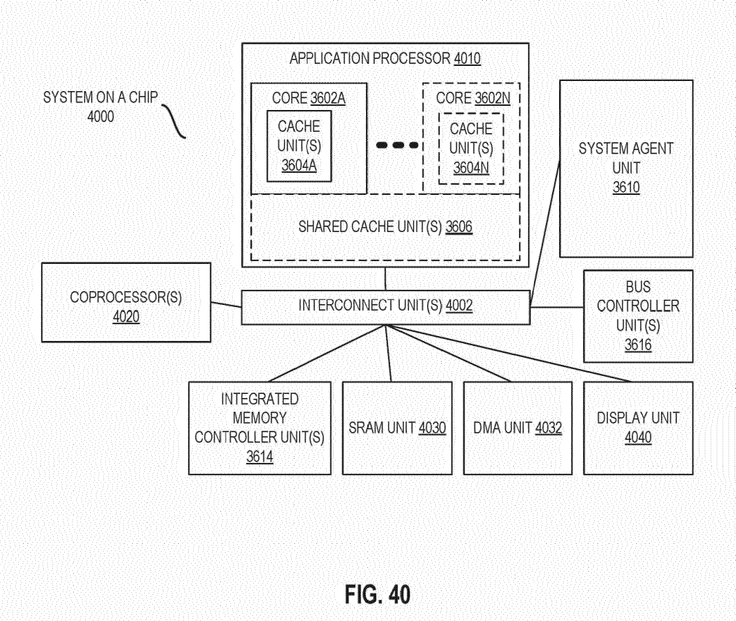

**Figure 40** is a block diagram of a SoC in accordance with some embodiments.

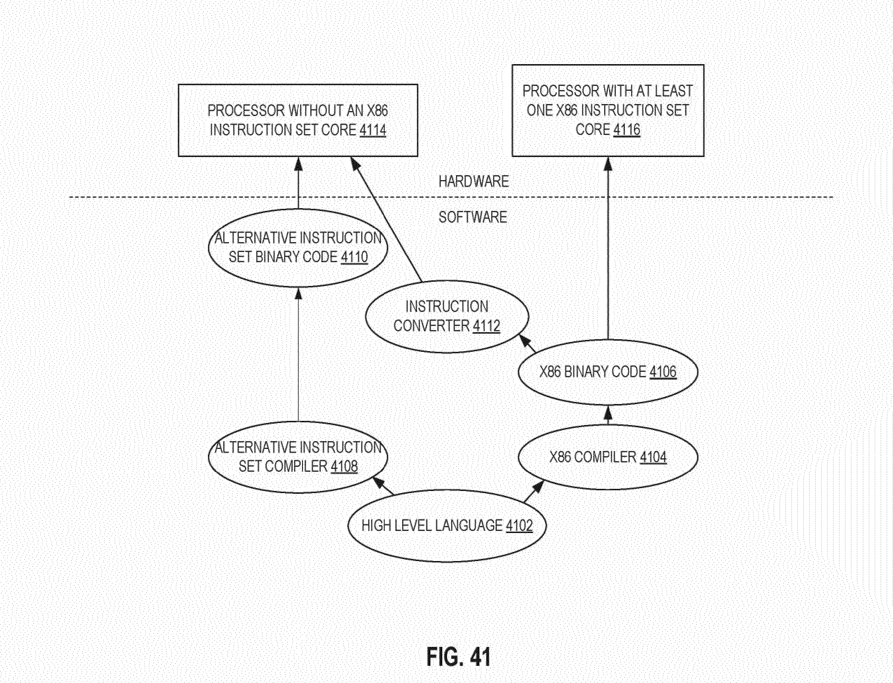

**Figure 41** is a block diagram contrasting the use of a software instruction converter to convert binary instructions in a source instruction set to binary instructions in a target instruction set according to some embodiments.

### DETAILED DESCRIPTION

The following description describes hardware accelerator architectures for clustering such as web-scale k-means clustering. In this description, numerous specific details such as logic implementations, types and interrelationships of system components, etc., may be set forth in order to provide a more thorough understanding of some embodiments. It will be appreciated, however, by one skilled in the art that the invention may be practiced without such specific details. In other instances, control structures, gate level circuits, and/or full software instruction sequences have not been shown in detail in order not to obscure the invention. Those of ordinary skill in the art, with the included descriptions, will be able to implement appropriate functionality without undue experimentation.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

Bracketed text and blocks with dashed borders (e.g., large dashes, small dashes, dot-dash, and dots) may be used herein to illustrate optional operations that add additional features to embodiments of the invention. However, such notation should not be taken to mean that these are the only options or optional operations, and/or that blocks with solid borders are not optional in certain embodiments of the invention.

Throughout this description, the use of a letter character at the end of a reference numeral (corresponding to an illustrated entity) is not meant to indicate that any particular number of that entity must necessarily exist, but merely that the entity is one of potentially many similar entities. For example, processing elements 506A-506Z include both "A" and "Z" letter suffixes, which means that there could be two processing elements, three processing elements, sixteen processing elements, etc. Moreover, the use of dashed lines, as described above, indicates that one or more of the entities could be optional; thus, in some embodiments only one sparse tile 112A may utilized, whereas in other embodiments multiple sparse tiles 112A-112N may be utilized. Additionally, the use of different letter characters as reference suffixes for different entities is not meant to indicate that there must be different numbers of these entities. For example, although the sparse tiles 112A-112N and the memory units 116A-116M include different letter suffixes - i.e., "N" and "M" - there could be the same number (or different numbers) of these in various embodiments. Similarly, the use of the same letter character as a reference suffix for different entities is not meant to indicate that there must be the same numbers of these entities, although there could be in some embodiments.

Embodiments disclosed herein provide a heterogeneous hardware accelerator architecture for efficiently performing web-scale k-means clustering. In some embodiments, an accelerator can utilize both sparse tiles and very/hyper sparse tiles to perform k-means clustering of data in a matrix by having a set of sparse tiles perform operations for portions of the matrix that are sparse, and having a set of very/hyper sparse tiles perform operations for portions of the matrix that are very- or hyper-sparse.

In some embodiments, the sparse tiles can be architected according to a first architecture enabling regular "sparse" matrix portions to be processed extremely efficiently, and in some embodiments, the very/hyper sparse tiles can be architected according to a second architecture enabling very- or hyper-sparse matrix portions to be processed extremely efficiently.

The output (or results) generated by the sparse tile(s) and the very/hyper-sparse tile(s) can be combined to yield the ultimate result for the originally-requested k-means clustering operation. Accordingly, embodiments utilizing separate matrix-processing architectures (via the tiles) can provide substantial performance increases compared to solutions using just one such architecture, and an extremely large performance increase compared to general-purpose matrix processing systems.

Moreover, embodiments disclosed herein provide a customizable hardware accelerator architecture template that can be used to dramatically improve the processing efficiency of k-means clustering (e.g., with mini-batch and projected-gradient optimizations) on field programmable gate array (FPGA) based systems.

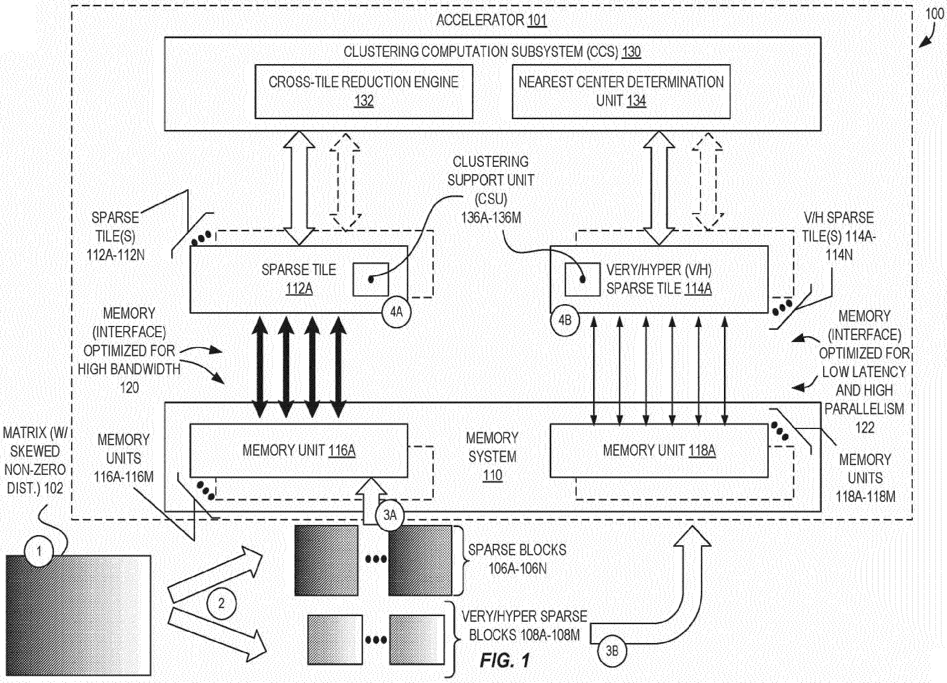

**Figure 1** is a block diagram illustrating a hardware accelerator architecture 100 for web-scale k-means clustering according to some embodiments. **Figure 1** illustrates various components of an exemplary hardware accelerator 101 at a high-level to allow for clarity and ease of understanding. **Figure 1** includes one or more sparse tile(s) 112A-112N coupled with one or more memory unit(s) 116A-116M (e.g., using one or more interconnects), where the interface and/or memory is optimized for high-bandwidth data transfers between the memory unit(s) 116A-116M and the sparse tile(s) 112A-112N.

**Figure 1** also includes one or more very/hyper sparse tiles 114A-114N coupled with one or more memory unit(s) 118A-118M (e.g., using one or more interconnects), where the interface/memory is optimized for low-latency, random, highly-parallel data transfers between the memory units 118A-118M and the very/hyper-sparse tile(s) 114A-114N.

**Figure 1** also illustrates a clustering computation subsystem (CCS) 130, including a cross-tile reduction engine 132 and a nearest center determination unit 134 (also referred to as a nearest cluster determination unit), which is communicatively coupled with the sparse tile(s) 112A-112N and the very/hyper-sparse tile(s) 114A-114N. In some embodiments, the CCS 130 can be used to support the sparse tile(s) 112A-112N and the very/hyper-sparse tile(s) 114A-114N in performing certain operations, such as operations for performing k-means clustering.

The sparse tile(s) 112A-112N, very/hyper-sparse tile(s) 114A-114N, and CCS 130 may all be implemented on a same microchip or hardware processor, which may be (or be part of) an accelerator device.

An accelerator 101 may receive a request (or command) to perform one or more computational tasks involving data of one or more matrices. For example, a central processing unit (CPU) may offload an instruction to the accelerator 101 to perform a machine learning task such as performing clustering, finding a dot-product of matrices, performing matrix multiplications, etc.

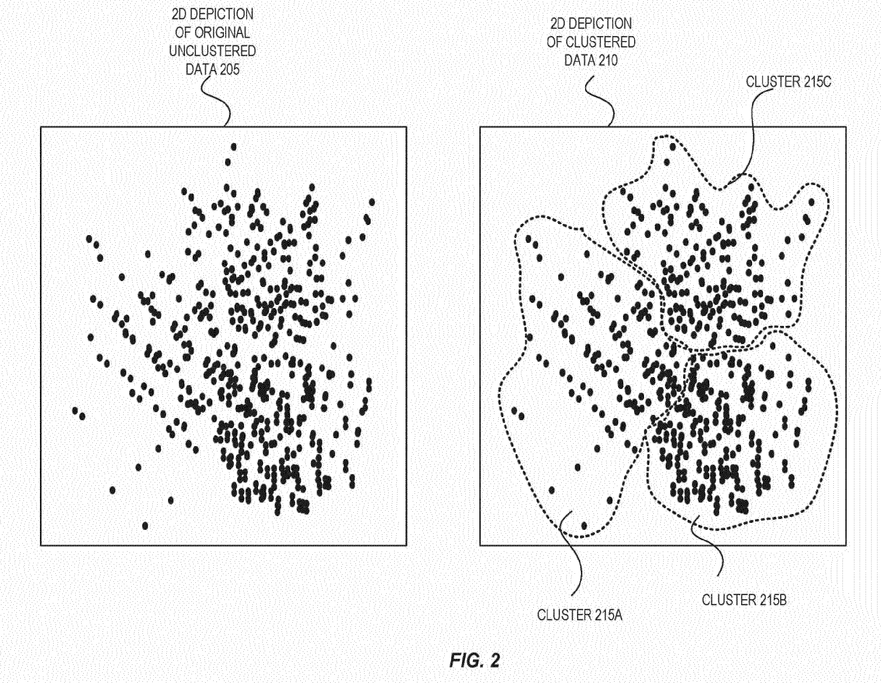

The accelerator 101 utilizes an architecture 100 providing enhanced processing for performing clustering. **Figure 2** is a block diagram illustrating data 205 and exemplary clusters 215A-215C identified within the data according to some embodiments. Clustering is an unsupervised method (i.e., does not require labeled "training" data) where a process can identify groups of like data points and "cluster" these data points into clusters. For example, a dataset 205 is shown in a two-dimensional format as including a number of dots. A clustering algorithm can analyze aspects of this data and automatically find ways to create groups of these data points that are similar in some aspect. Accordingly, one possible set of clusters 215A-215C could be determined as shown in the 2-dimensional depiction of clustered data 210. To perform such a clustering, many algorithms use the dataset in the form of a matrix (or similar data structure) and iteratively scan through these data points, assigning and perhaps re-assigning the data points to different clusters until an ending condition (i.e., a stasis) is reached.

One very popular and well-known clustering algorithm is referred to as "k-means" clustering, which is an unsupervised clustering of data into a set of clusters, where the number of sets is referred to as "k." Modern web-based applications, or applications related to or involving data available via the web, utilize k-means clustering operations for a wide variety of scenarios, such as news aggregation, search result grouping, etc. In many of these deployments, a clustering may need to be updated frequently due to the ever-changing nature of information on the web in order to provide "current" results. Accordingly, being able to execute such operations as efficiently as possible is of critical importance.

There are several variants of k-means algorithms. For web-scale applications, the datasets are typically very large, sparse matrices, where the rows of the matrices may represent data samples (e.g., web pages) and the columns represent features (e.g., attributes of words appearing in the webpage). One k-means algorithm variant that is particularly well suited for such datasets modifies the k-means algorithm to include mini-batch as well as projected-gradient optimizations, which reduce computation cost by orders of magnitude compared to the original k-means algorithm and induces additional sparsity, respectively. The use of this k-means variant can be referred to as web-scale k-means clustering.

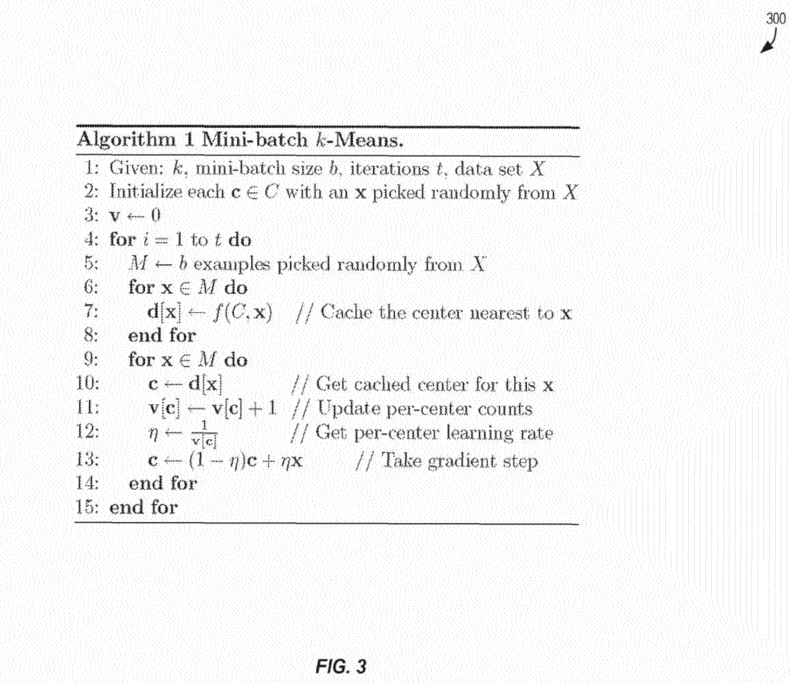

For example, **Figure 3** is a block diagram illustrating an exemplary algorithm for mini-batch k-means clustering that can be implemented according to some embodiments. This algorithm 300, shown using pseudo-code, includes two modifications to the popular k-means clustering algorithm to address the extreme requirements for latency, scalability, and sparsity encountered in user-facing web applications. First, a "mini-batch" optimization is introduced that reduces computation cost by orders of magnitude compared to the classic batch algorithm while yielding better solutions than online stochastic gradient descent (SGD). Second, a "projected gradient descent" optimization is introduced that provides increased sparsity, meaning that differences between the clusters can be more easily and accurately identified.

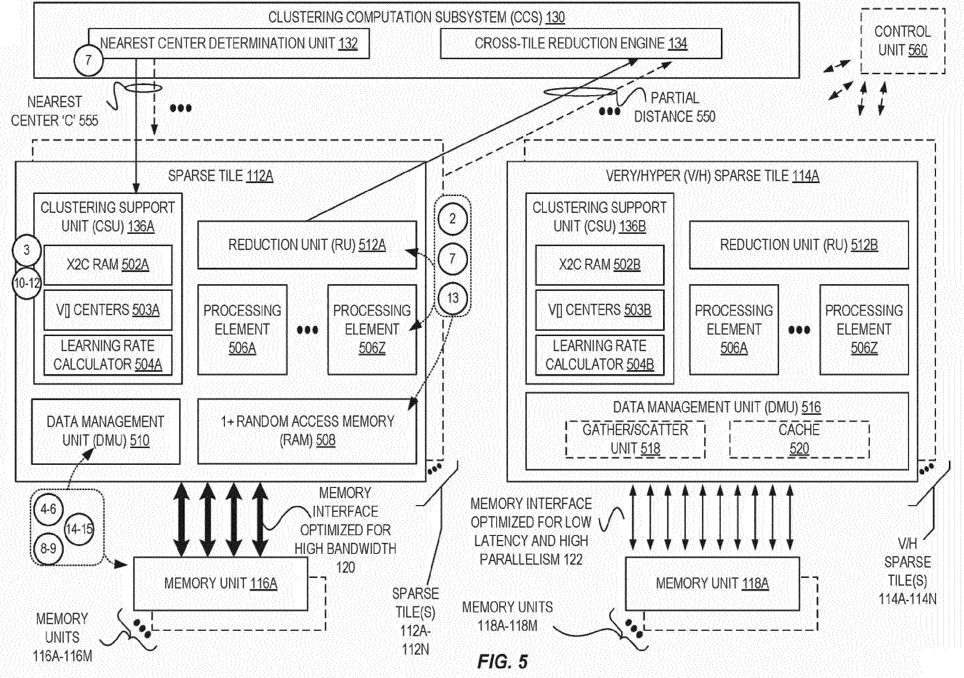

Notably, this pseudo-code algorithm 300 includes line numbers 1-15 that will be referenced again with regard to **Figure 5****.** This algorithm 300 randomly assigns data points as a set of centers (at line 2), and from lines 4-15, performs a number ("t") of iterations to refine the assignments of data points to the "k" number of clusters. At line 5, a number ("b") of samples are selected from the data set X, and from lines 6-8, each of these sample data points is "assigned" to a center that it is nearest to. From lines 9-14, for each of these sample data points, a counter for its currently-assigned center is incremented (at line 11), a per-center learning rate is updated (at line 12) for that center, and a "gradient step" is taken to move the center based upon the updated learning rate. At the end, each of the data points is assigned to one of the "k" clusters.

In many cases, the datasets (often represented as matrices) being clustered are "sparse" in that they include a substantial number of "empty" (or zero) values. These datasets are also often skewed such that certain portions of these datasets are more or less sparse than other portions. Thus, sparse matrix datasets can have skewed distribution of non-zeros, where part of the matrix is sparse (e.g., with a particular threshold number of non-zeros per column or row) and other parts are very-sparse (e.g., with only a few non-zeros per column or row) or hyper-sparse (e.g., with empty columns or rows, such that number of non-zeros could be less than the number of rows and columns in the matrix), for example.

Moreover, skewed non-zero distributions can result from natural graphs that follow a power law distribution, such as where a graph has a few "popular" nodes that have many edges to other nodes, while a large majority of the other nodes have only a few edges. Furthermore, in machine learning datasets, where matrix columns and rows represent features and samples, respectively, it is typical that some features will occur more frequently than others, resulting in skewed non-zeros across columns. Similarly, in user/item matrices used in recommender systems, some users and/or items are more popular than others. Hence, popular users/items will form "denser" rows/columns in an overall sparse matrix.

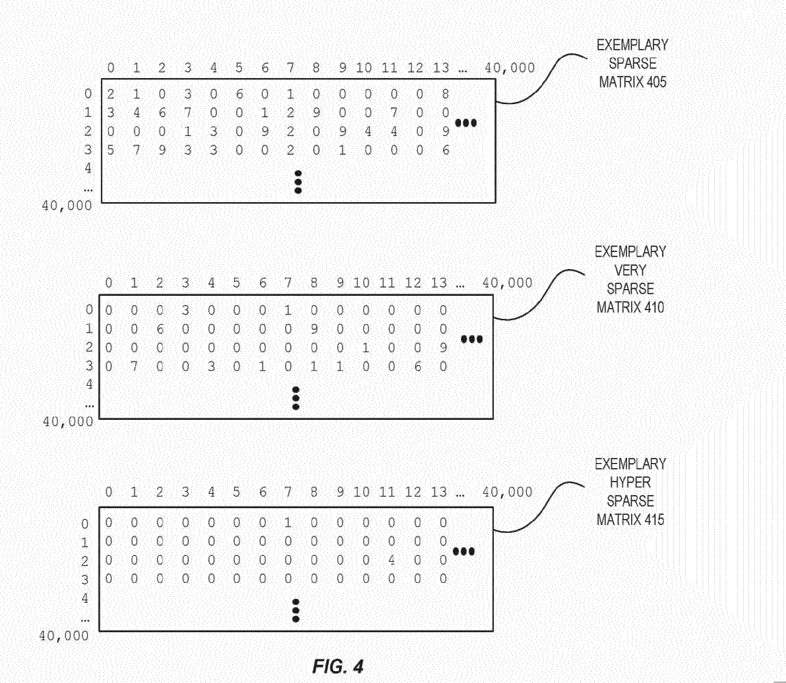

For a further discussion of "sparse" matrices, along with "very-sparse" and "hyper-sparse" matrices, we turn to **Figure 4****,** which is a block diagram illustrating an exemplary sparse matrix 405, very-sparse matrix 410, and hyper-sparse matrix 415 according to some embodiments.

For the purposes of this description, a differentiation can be made between different types of sparse matrices. There are a variety of ways to denote a data structure (e.g., matrix, graph) as being sparse. For example, a graph may be referred to as being sparse if nnz = O(n), where nnz is the number of edges in the graph, and n is the number of vertices.

Another way to distinguish between sparse and not-sparse (or "dense") matrices is based upon how many of the elements of the matrix (or portion of the matrix) are zero. As used herein, a "sparse" matrix or vector is a matrix or vector in which a substantial number of the elements in the region are zero, such that the number/percentage of zeros in that region meets or exceeds a threshold amount (e.g. greater than 10% are zero, 25% or more are zero, etc.). Thus, in some scenarios, a matrix or vector may be sparse when at least half of its elements are zero, though in other scenarios the threshold can be different - e.g., a matrix or vector is sparse if at least thirty percent of its elements are zero, sixty-percent of its elements are zero, etc. Similarly, a "dense" matrix or vector is a matrix or vector in which the number of non-zero elements in a particular space does not exceed this threshold.

The "sparsity" of a matrix/vector may be defined based on the number of zero-valued elements divided by the total number of elements (e.g., m × n for an m × n matrix). Thus, in one implementation, a matrix/vector is considered "sparse" if its sparsity is above a specified threshold.

The category of "sparse" matrices and vectors can further be broken up into sub-segments - e.g., "regular" sparse matrices, "very-sparse" matrices, and "hyper-sparse" matrices.

For example, some literature defines a subset of sparse data structures as being "hyper-sparse" when, for graphs, the condition nnz < n holds, which is fairly rare in numerical linear algebra but occurs often in computations on graphs, particularly in parallel graph computations. Put another way, a hyper-sparse matrix may be one where an extremely large ratio of the elements of the matrix are zero, such that its sparsity is greater than a particular threshold. Of course, the threshold for determining whether a matrix is hyper-sparse can differ based upon the particular application. For example, a matrix may be deemed hyper-sparse when the sparsity of the matrix is at least 80%, or 90%, or 95%, or 97%, or 99%, or 99.5%, etc.

A further category of sparse matrix deemed a "very-sparse" matrix can be defined as satisfying the threshold for "regular" sparse matrices but not satisfying the sparsity threshold to be considered a "hyper-sparse" matrix. Thus, a "very-sparse" matrix can be one having a sparsity that meets or exceeds a first threshold (e.g., the "regular" sparse threshold) but that does not meet or exceed a second threshold (e.g., the hyper-sparse threshold). Again, the precise formulations may vary based upon the particular application, but in some embodiments a "regular" sparse matrix could be one having a sparsity of 50-70% (i.e., a minimum threshold of 50% and a maximum threshold of 75%), a "very-sparse" matrix could be one having a sparsity greater than 70% but less than 98%, and a hyper-sparse matrix could be one having a sparsity greater than 98%. As another example, a regular sparse matrix could be one having a sparsity between 25-75%, a very-sparse matrix could be one having 75-95%, and a hyper-sparse matrix could be one having a sparsity in excess of 95%. Thus, it is to be understood that there are many different ways to align the particular thresholds.

Accordingly, in **Figure 4** a small portion of an exemplary sparse matrix 405 (40,000 × 40,000) is illustrated to convey that a substantial number of its values are zero (here, 25 of the 56 values), whereas the small portion of an exemplary "very-sparse" matrix 410 includes more zero values (here, 44 of the 56 values), while the illustrated small portion of the hyper-sparse matrix 415 includes a very large number of zeros (here, 54 of the 56 values). Assuming that the distribution of zeros and non-zeros is shown here is perfectly representative of the rest of these matrices, one possible breakdown of the involved sparsity thresholds could be that "regular" sparse matrices are at least 20% sparse but are less than 50% sparse, "very-sparse" matrices are at least 50% sparse but not more than 90%, and that "hyper-sparse" matrices are greater than 90% sparse.

In addition to categorizing the sparseness of a matrix based upon its sparsity ratio, in some scenarios the sparseness type (or category) can be based (in whole or in part) upon whether a certain number of rows or columns are completely empty. For example, in some embodiments, a very-sparse or hyper-sparse matrix may be defined as a matrix including a particular number of rows and/or columns that are empty. This determination of the sparseness type may be independent of the particular sparsity ratio of the matrix (e.g., a matrix with a very large sparsity ratio may not, in some cases, qualify as a very- or hyper-sparse matrix if it does not have a requisite threshold number of empty rows and/or columns), or may the determination may be a combination of both the sparsity ratio and the row/column-emptiness criteria, or either.

Turning back to **Figure 1****,** as web-scale k-means clustering algorithms typically utilize matrix and vector operations (as well as other operations), some embodiments use a matrix/vector accelerator architecture 100 including explicit support for additional functionalities needed by the K-means algorithm (e.g., clustering support unit 136A-136M (CSUs) and/or CCS 130). Moreover, embodiments can implement this architecture as a customizable hardware template where optimized custom instances can be derived therefrom (i.e., given design parameters, the template could output a register transfer language (RTL) implementation of the architecture).

For ease of understanding, we now present a high-level overview of an exemplary use of the architecture 100. In **Figure 1**, the illustrated matrix 102 (e.g., representing the dataset to be clustered) is shown with a gradient background in which the left side, having a darker shading, indicates parts (or amounts) of the matrix 102 that are generally sparse, meaning that these parts may have small non-sparse sub-portions, but that as a whole, these portions are typically more sparse than not, include a threshold number of sparse rows/columns, etc. Similarly, the right side of the illustrated matrix 102, having a lighter shading, indicates parts (or amounts) of the matrix 102 that are generally "very-sparse" and/or "hyper-sparse."

Various techniques exist where, for many different matrix operations, sub-portions of a matrix can be separately processed / operated upon in "blocks" (or "chunks"), and the results of the individual processing of these blocks can be combined (or aggregated) to yield the proper result.

Accordingly, at circle '2', the accelerator can perform matrix partitioning to split the matrix 102 into a set of sparse blocks 106A-106N and a set of very/hyper sparse blocks 108A-108M. Thus, the accelerator can determine block boundaries of the matrix such that parts of the matrix having similar properties are placed in the same block. Various components of the accelerator can perform this partitioning, including but not limited to a control unit (not illustrated), or one or more of the tiles (sparse or very/hyper). Moreover, in some embodiments, a device that is separate from the accelerator could perform the partitioning, such as an external control unit, central processing unit (CPU), etc.

The size of each of the sparse blocks 106A-106N may be the same or different, the size of each of the set of very/hyper sparse blocks 108A-108M may be the same or different, and the sizes of the sparse blocks 106A-106N and the very/hyper sparse blocks 108A-108M may be the same or different.

Additionally, the number of blocks in the set of very/hyper sparse blocks 108A-108M and the set of sparse blocks 106A-106N may be the same or different, and the amount of matrix data included within each of the sets may be the same or different. For example, as illustrated, the size of each of the sparse blocks 106A-106N is larger than the size of the very/hyper sparse blocks 108A-108M.

However the size of the particular blocks can be selected based upon properties of the particular type of tile that will act upon it, which will be discussed in additional detail later herein.

During the partitioning represented by circle '2', in some embodiments the accelerator can also perform optimizations to improve the processing efficiency of the blocks. As an example, one optimization used in some embodiments includes changing the matrix format (or representation) for each block. For example, in some embodiments, each hyper-sparse block be reformatted in a doubly-compressed format (e.g., Doubly Compressed Sparse Column (DCSC) format, as discussed below), and in some embodiments, identified "skinny" and tall matrix blocks (e.g., having a small number of columns but many rows) can be reformatted into a matrix representation in a row-oriented format to avoid memory scatter. In some embodiments, other optimizations can include optimizing the scheduling of the blocks for processing and producing scheduling hints for the heterogeneous architecture to use.

At this point, the accelerator can cause one or more sparse tiles 112A-112N to perform operations for the clustering using the set of sparse blocks 106A-106N and further cause the one or more very/hyper sparse tiles 114A-114N to perform operations for the clustering using the very/hyper sparse blocks 108A-108M. This includes, at circle '3A', causing the sparse blocks 106A-106N (in a raw matrix format, in a compressed matrix format, etc.) to be placed in one or more memory unit(s) 116A-116M, and at circle '3B', causing the very/hyper sparse blocks 108A-108M to be placed in one or more memory unit(s) 118A-118M. Again, these operations (at circles '3A' and '3B') may be performed by the accelerator in some embodiments, but in other embodiments they may be performed by a different device (e.g., an external control unit, CPU).

At circles '4A' and '4B', the accelerator can then cause the sparse tile(s) 112A-112N to begin operating upon the sparse blocks 106A-106N using the memory interface 120 that has been optimized for high bandwidth, and cause the very/hyper-sparse tile(s) 114A-114N to begin operating upon the very/hyper sparse blocks 108A-108M using the memory interface 122 that has been optimized for low-latency, random, short, and/or parallel requests. Details regarding these particular architectures will be presented below. However, with this heterogeneous architecture using both types of tiles, both the sparse tile(s) 112A-112N and the very/hyper-sparse tile(s) 114A-114N can efficiently process their respective blocks to produce results that can be combined to create a final result for the originally-requested computational tasks.

In many systems, "raw" matrices can be stored as two-dimensional arrays. Each entry in the array represents an element aᵢ,ⱼ of the matrix and is accessed by the two indices, i (typically, the row index) and *j* (typically, the column index). For an m × n matrix, the amount of memory required to store the matrix in this format is somewhat proportional to m × n, though additional data also needs to be stored (e.g., the dimensions of the matrix, data structure "bookkeeping" data).

In the case of sparse matrices, significant memory reductions can be gained by storing only non-zero entries. Various data structures have been developed to do just this, and different ones of these structures can be utilized which, based upon the number and distribution of the non-zero entries, can result in significant savings in memory when compared to the basic array-based approach. However, a trade-off arises in that accessing the individual elements can become more complex (e.g., require additional memory accesses due to following pointers, calculating memory addresses, etc.), and additional data structures may be needed to be able to recover the original matrix in a lossless manner.

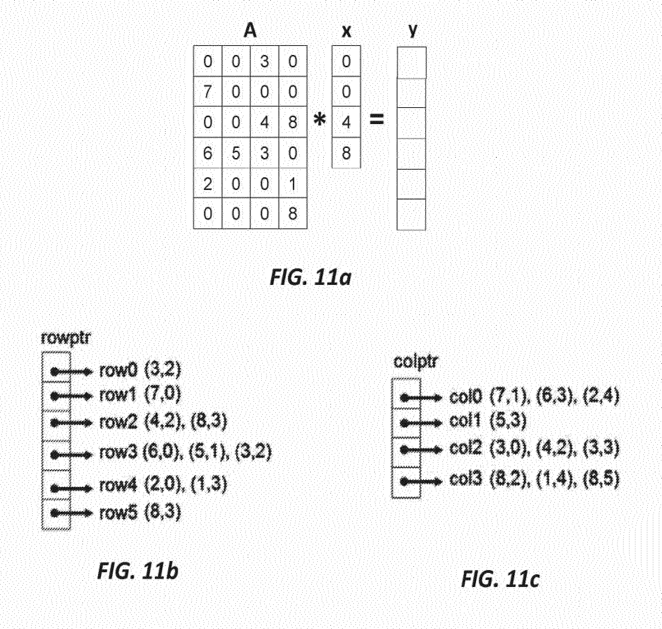

For example, many different compressed matrix formats exist, including but not limited to Compressed Sparse Column (CSC), Compressed Sparse Row (CSR), Dictionary of Keys (DOK), List of Lists (LL), Doubly Compressed Sparse Column (DCSC), etc. Examples of CSC and CSR will be presented in further detail with regard to **Figure 11b** and **Figure 11c****;** however, we will briefly discuss them now.

In CSC, a matrix (e.g., a 6 × 4 matrix, having 6 rows and 4 columns) can be represented using a data structure (e.g., an array, list, vector) that we will call "colptr" includes four values, each of which represents a column of the matrix and stores a pointer to one or more elements within the column. Each element can have two data elements: a first being a particular value stored in the matrix, and a second being an index of that value as it is stored in the matrix. For example, a column pointer that points to "co10" (the first column) could include three elements - (7, 1), (6, 3), and (2, 4) - indicating that the value "7" is stored in row[1] (i.e., the second row), value "6" is stored in row[3], and value "2" is stored in row[4]. Of course, in many implementations, additional "bookkeeping" type data (and/or data structures) may also be stored and utilized (e.g., to demarcate the beginning/end of an element, to demarcate the end of the elements for a particular column) which will be discussed in further detail later herein.

To perform a matrix computation using a matrix in CSC format, the values of the "colptr" (short for "column pointer") data structure (i.e., the pointers / memory addresses) must be first loaded from memory, and these pointers must be followed (e.g., via another load from memory) to find the particular elements of each corresponding column. Additionally, each element of the columns may or may not be stored contiguously in memory, which could require additional pointer chasing. For example, for a particular column having three elements, these elements may or may not be stored at contiguous memory locations, and thus, there might be additional bookkeeping data (e.g., underlying structural data of the data structure, which could be pointers) that allows for the locations of these elements to be determined. Accordingly, to perform this operation, there may need to be several "loads" of data from memory - loads of metadata/pointers and/or loads of actual elements representing values of the matrix.

Similar to the CSC format, a matrix in CSR format uses a similar representation, but instead the values of the matrix are arranged according to rows, not columns. Thus, a matrix in CSR format could use a "rowptr" (short for "row pointer") data structure including pointers to elements of each of the rows.

Another matrix representation that is commonly utilized is the DCSC format, which is a further-compressed (e.g., a doubly-compressed) version of CSC utilizing another layer of pointers, in which the repetitions in a column pointer structure can be eliminated. For example, a "JC" array (which is parallel to a column pointer array), provides the column numbers, and the column pointer array is compressed to avoid the repetitions of the CSC format. Thus, the DCSC representation can be viewed as a sparse array of sparse columns, whereas the CSC representation is a dense array of sparse columns.

Accordingly, a variety of low-level matrix representations exist that can be used for performing matrix operations that are storage efficient, though perhaps at the expense of some administrative and utilization overheads (e.g., pointer chasing, additional loads). Many of these matrix representations are particularly useful for use with sparse matrices having a significant amount of non-zero values.

Accordingly, various compute architectures can be developed to optimize performance for sparse matrices stored in certain compressed formats.

An interesting observation is that while the various matrix representations commonly utilized provide significant benefits for storing and using sparse matrices, for a subset of sparse matrices, these matrix representations introduce significant overheads and inefficiencies.

Thus, some types of sparse matrices - especially those that have many (or nearly all) non-zeros - are not processed very efficiently by previous architectures. Moreover, it has been determined that a particular architecture, while being extremely efficient for sparse data, can be out-performed by a separate architecture when processing very-sparse or hyper-sparse data. Accordingly, as described herein, embodiments can use a heterogeneous architecture including sparse tile(s) 112A-112N for efficiently operating upon sparse data, and very/hyper-sparse tile(s) 114A-114N for efficiently operating upon very/hyper-sparse data. These two types of tiles can be combined with additional components (e.g., CSUs 136A-136M, CCS 130) to enable extremely efficient k-means clustering.

For further detail, we turn to **Figure 5****,** which is a block diagram illustrating additional components of a hardware accelerator to perform web-scale k-means clustering according to some embodiments. The architecture includes heterogeneous processing tiles, each including one or more processing elements 506A-506Z, to perform the computations for the k-means algorithm 300 shown in **Figure 3****.** To facilitate input datasets that are sparse, very-sparse, hyper-sparse, and/or a combination of two or more of these, the architecture includes both "Hot" and "Cold" processing tiles - i.e., sparse tile(s) 112A-112N and very/hyper-sparse tile(s) 114A-114N. Each of the processing elements 506A-506Z may comprise circuitry to execute one or more instructions to perform operations, and may or may not be part of a processor core. Thus, a processing element may be thought of as one type of a hardware processor or one part of a hardware processor.

As a quick overview, the "hot" tiles (i.e., sparse tile(s) 112A-112N) can be used to process blocks of input matrix X (from **Figure 3**)) where the columns (i.e., features) are not very sparse. Because features of matrix X (and therefore, M) are not very sparse in this case, there is substantial reuse of the dense C matrix elements being operated against (as lines 7 and 13 in **Figure 3**)**.** Thus, the reusable subset of the dense cluster matrix C columns can be kept in an on-chip RAM, which could include a RAM that is dedicated per processing element, a single RAM shared by the processing elements, etc. Then, a DMU 510 may stream in the "x" random samples (rows of sparse matrix M) from memory unit(s) 116A-116M to the PEs 506A-506Z (e.g., within registers of the PEs). The PEs 506A-506Z may then perform distance calculations and scale-update operations (lines 7 and 13 in **Figure 3**) using the "C" elements that are kept in the RAM 508, which can include the use of the CCS 130.

The "cold" tiles (i.e., very/hyper-sparse tile(s) 114A-114N) can used to process very-sparse or hyper-sparse matrix blocks, in which there is not much reuse of the "C" matrix elements of the algorithm 300. In this case, a gather/scatter unit 518 of a DMU 516 can operate on the "C" elements as they remain in the memory system (i.e., memory unit(s) 118A-118M). Accordingly, these "cold" tiles are optimized for gather/scatter performance from the memory system.

In some example implementations the tiles are extended to include hardware support for other operations needed by the k-means algorithm 300, such as keeping track of samples-to-center mappings (using X2C RAM 502A-502B), counting how many samples belong to each cluster (using V[] Centers 503A-503B, or a "set of center values"), and performing the learning rate calculation (using learning rate calculator 504A-504B), which involve/correspond to the variables x2c, v[], and ncal in **Figure 3**). Examples further include a CCS 130 including hardware support for "reducing" (or aggregating) data across tiles (using cross-tile reduction engine 134 and/or the on-tile reduction unit (RU) 512A-512B) and finding a nearest cluster c for a data element (using nearest center determination unit 132).

We now consider the architecture of **Figure 5** in additional detail. This block diagram illustrates the components of a hardware processor according to some embodiments. The hardware processor can be an accelerator device that can perform operations that have been offloaded by another hardware processor (e.g., a CPU via one or more interconnections / buses / etc.). Further details regarding accelerators as well as this architecture for processing sparse matrices is presented later herein with regard to later figures.

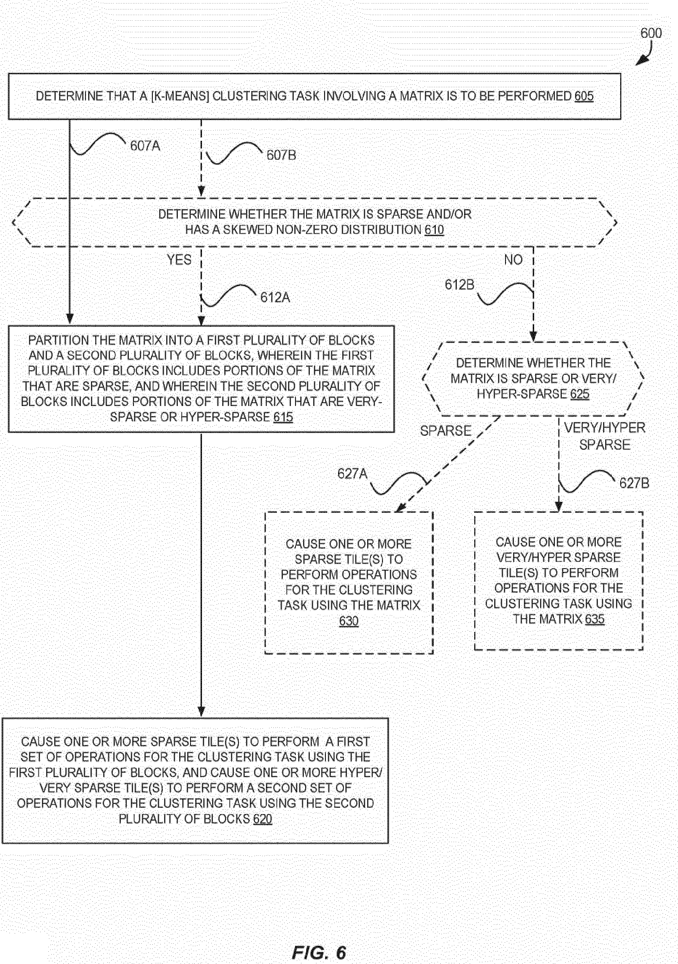

The accelerator 101 can include a control unit 560 (or communicate with an external control unit 560) that can perform the matrix partitioning operations described with regard to **Figure** 1 and later with regard to **Figure 6****,** etc. The control unit 560 can be implemented in a variety of ways in a straightforward manner, which can be via hardware circuitry, a software module, or a combination of both software and hardware.

As one example, the control unit 560 can include a matrix partitioning engine, which can include a matrix property analysis engine, a block partitioning engine, and/or an optimization engine. The matrix property analysis engine can perform the initial matrix analysis as described herein, including determining whether the matrix is sparse (as a whole) and/or determining whether the matrix has a skewed non-zero distribution. For example, the matrix property analysis engine can analyze matrix properties such as the number of non-zeros per row and/or column, or other properties helpful to determine whether (and how) to partition the matrix into blocks. The block partitioning engine can, in some embodiments, make partitioning decisions based upon the analysis performed by the matrix property analysis engine such that parts of the matrix with similar properties are placed together, which can include identifying the boundaries within the matrix of the various sparse blocks 106A-106N and very/hyper sparse blocks 108A-108M.

The accelerator 101 can also include one or more hardware schedulers (not illustrated), which can dynamically and statically (e.g., using the aforementioned scheduling hints) determine the processing schedule of the matrix blocks on the tiles to improve the overall efficiency (e.g., by minimizing load imbalance across the tiles) of the system.

### Sparse Tiles

The accelerator 101 includes one or more "sparse" tiles 112A-112N. Each of the sparse tiles 112A-112N includes one or more processing elements (PEs) 506A-506Z, though in many embodiments each tile includes multiple PEs. PEs 506A-506Z can be thought of as similar to a processor core, and the details of which are presented in additional detail with regard to the later figures.

Each sparse tile (e.g., sparse tile 112A) can also include a random access memory (RAM) 508 (e.g., an on-chip cache) as well as a data management unit (DMU) 510 that provides access to one or more (possibly off-tile) memory unit(s) 116A-116M (e.g., storing the matrices involved in the operations) via a memory interface 120 that is optimized for high bandwidth data transfers.

This accelerator 101 can utilize a variety of techniques to optimize the execution efficiency of sparse matrix operations. First, in some example implementations the accelerator 101 can partition the matrix into small enough blocks such that each vector subset being operated against each block can fit in the on-chip RAM(s) 508, so that it can be efficiently accessed in an irregular/random manner locally and reused when operated against the non-zero elements in the matrix block. Thus, the "X" vectors and/or "Y" vectors (e.g., the second operand of a matrix operation, and the result of the matrix operand, respectively) can be kept on-chip in the RAM 508 for very fast, low-latency updates.

Second, the accelerator 101 can stream the non-zeros of the rows (or columns) of the sparse blocks 106A-106N from the (possibly off-chip) memory unit(s) 116A-116M to saturate the available, large memory bandwidth. Each of the streamed non-zeros can be applied against the vector subset being kept on-chip, as explained above. Thus, the values of the sparse blocks 106A-106N can be streamed over a high bandwidth connection to be processed by the processing elements 506A-506Z (as opposed to being requested by the processing elements 506A-506Z using individual random accesses).

Accordingly, these techniques work especially well with sparse matrices where there are sufficient amounts of non-zeros per block. However, this architecture is not as effective for very-sparse and hyper-sparse matrices. This is due to the following reasons:

First, because a very/hyper-sparse matrix has very few non-zeros, it incurs relatively higher blocking overhead (e.g., due to row or column pointers). This means that there is larger overhead for processing "bookkeeping" data (e.g., different data structures, pointers, etc.) as well as making memory accesses to them, relative to the processing of the actual non-zero matrix elements.

Additionally, because very/hyper-sparse matrices have very few non-zeros per column (or row), accessing the columns (or rows) involves making a large number of small (or "short") memory accesses. This is not efficient for an architecture optimizing memory accesses to be high bandwidth (e.g., at the expense of latency). This also means that there is less data reuse on the vector being operated against. For hyper-sparse matrices, there is also a heightened amount of additional short reads when using doubly-compressed formats (e.g., DCSC) to more efficiently represent empty rows/columns.

Further, any data dependence from having to access column (or row) pointer to access the non-zeros of the column (or row) is exposed because there are few non-zeros to be accessed and processed that could potentially hide the access to the next column (or row) pointer. This results in performance being negatively impacted by the relatively-large memory latency. Thus, the very/hyper-sparse tile(s) 114A-114N can be used to process the set of very/hyper sparse blocks 108A-108M.

### Very/Hyper-Sparse Tiles

Accordingly, the architecture can perform operations involving very- and/or hyper-sparse matrices utilizing very/hyper sparse tile(s) 114A-114N. This architecture can dramatically improve the processing efficiency of very/hyper-sparse matrix data (i.e., very/hyper sparse blocks 108A-108M) for the accelerator 101, which can be implemented in a variety of ways, e.g., using Application-Specific Integrated Circuits (ASICs), Field-Programmable Gate Arrays (FPGAs), etc.

As shown in **Figure 5****,** the accelerator 101 includes one or more very/hyper-sparse tiles 114A-114N, each including one or more processing elements 506A-506Z (which can be the same or different than processing elements 506A-506Z) and a DMU 516. The DMU 516 can provide the one or more processing elements 506A-506Z access to one or more (possibly off-tile) memory units 118A-118M via a memory interface 122 that is optimized for low-latency random accesses (e.g., as opposed to the high-bandwidth accesses, such as streaming, of the sparse tile(s) 112A-112N) with high parallelism (e.g., using heavily-banked memory). In some embodiments, the DMU 516 can include a gather-scatter unit 518 to perform gathers and scatters (e.g., irregular accesses via following pointers, etc.) without, perhaps, requiring the involvement of the requesting one or more processing elements 506A-506Z.

Using this architecture, the accelerator 101 is optimized for processing large matrix blocks (e.g., which can be generated by the matrix partitioning phase) with a low-latency memory sub-system capable of handling parallel small/short random memory accesses.

In some example implementations, the accelerator 101 can minimize blocking overhead by using large blocks, even if it means that the vector subset being operated against the matrix block also becomes large.

In some example implementations, the accelerator 101 can thus use a larger vector subset, which can be kept in the memory unit(s) 118A-118M (as opposed to brining it onto RAM 508, as is done by the sparse tile(s) 112A-112N and shown in **Figure 5**). Hence, the DMU 516 can be adapted (e.g., via gather/scatter unit 518) to efficiently handle parallel gather/scatter (i.e., irregular) memory accesses to this vector subset.

Optionally, in some example implementations, the DMU 516 can include a comparatively small on-chip cache 520 to capture the modest data re-use available in this vector subset. For example, when access values of a column of a matrix, in some cases there may be several values of the column stored in contiguous memory locations. Thus, depending upon the granularity of the memory system (e.g., the size/amount of data returned for a read) and the size of the matrix values (e.g., a data type of the values/indices), a memory access may possibly return a next-needed value/index. For example, if a value and an index (representing an element of a matrix) are each 4 bytes in size, a 16-byte memory access may retrieve two elements, the second of which might be a next-needed element, which provides the benefits of spatial locality.

In some example implementations, the DMU 516 is also optimized for low latency to limit exposure to column (or row) pointer chasing dependencies, as well as support parallel memory short accesses tailored for short matrix columns (or rows).

Thus, the memory 118A-118M is adapted for low latency, parallel, short, irregular accesses, even if this comes at the expense of lessened bandwidth. To implement these features, there are many memory optimizations known to those of ordinary skill in the art that can be used (smaller rows, narrow prefetch buffers, etc.).

As these very/hyper-sparse matrix operations are memory-intensive, the number of PEs 506A-506Z involved in the operations can be minimized to match the rate of data capable of being brought from memory unit 118A-118M.

Thus, embodiments using this heterogeneous architecture can perform, using this very/hyper-sparse tiles 114A-114N, the same matrix operations as the sparse tiles 112A-112N, but at a better execution efficiency for very-sparse or hyper-sparse data.

This results from, among other things, accesses to the very/hyper sparse blocks 108A-108M using short, irregular, low-latency memory accesses, whereas the architecture of the sparse tile(s) 112A-112N as shown in **Figure 5** (which provides efficient sparse matrix computations for "regular" sparse matrices) may stream non-zero elements of the rows (or columns) of the sparse blocks 106A-106N, and/or localizing/re-using the vector subset being operated against in an on-chip memory (e.g., RAM 508), e.g., through properly blocking the matrix data.

Again, the number of PEs 506A-506Z can be specifically chosen, for example, based upon the memory connection technology (i.e., the latency and/or bandwidth of the memory providing the low-latency, parallel, random accesses). For example, a simulation modeling can be performed to determine the optimal amount of PEs 506A-506Z to properly saturate the memory to not under-utilize the memory or set of PEs 506A-506Z.

### K-Means Operations and Support

As described herein, the architecture can include additional hardware support for performing k-means clustering. For ease of understanding, the lines of the k-means algorithm 300 will be discussed in relation to how/where these lines could be executed by the sparse tile 112A as shown in **Figure 5** with circled numbers.

However, it is to be understood that these lines can be performed by the very/hyper-sparse tile(s) 114A-114N, although some aspects would be different as apparent by this disclosure. As one example, elements of the "C" matrix may be stored and operated upon within the sparse tile 112A as described above, whereas the elements of the "C" matrix may be stored in the memory unit 118A and not "cached" by the very/hyper-sparse tile(s) 114A-114N (aside from, perhaps temporarily storing them in a register, etc.) However, other differences can also exist, as made obvious by this description.

As line 1 of the algorithm is more of a non-executable comment, line 2 initializes the "C" matrix, and could be performed by the PEs 506A-506Z (in RAM(s) 508). Line 3, involving clearing the per-center counters, can be performed by the CSU 136A - specifically, the V[] Centers 503A data structure / storage.

Lines 4-6 (or, 5-6), involving selecting "b" samples randomly from "X", can be performed by the DMU 510 by accessing the "X" from memory unit(s) 116A-116M.

Line 7, involving determining the center nearest to x and then caching this center, can be performed by the PEs 506A-506Z, using RAM 508, reduction unit 512A (for performing multiple distance-type calculations), sending partial distance values 550 to a cross-tile reduction engine 134 of CCS 130, which can perform the same calculations across data from other tiles, and then, the nearest center determination unit 132 can determine the nearest center, and provide this nearest center 'C' 555 back to the CSU136A for storage (e.g., in X2C RAM 502A).

The reduction unit(s) 512A-512B, along with the cross-tile reduction engine 134 of the CCS 130, can include hardware for certain "reduction" operations, e.g., performing summations using known reduction architectures, including but not limited to utilizing a reduction tree (i.e., adders arranged in a particular fashion) at simply the cost of adders, or if performance is not as critical, by implementing fewer adders that instead perform multiple iterations to achieve the same result. Thus, the reduction unit 512A, cross-tile reduction system 134, as well as the CCS 130 (and possibly the nearest center determination unit 132) can each be a hardware block that is a part of the accelerator.

Lines 8-9, which are control type code segments, can again be under the control of the DMU 510, and then lines 10-12, which pertain to getting a cached center for an x (e.g., from X2C RAM 502A) and getting (and updating) a per-center count (e.g., from the V[] centers unit 503A), may involve the CSU 136A. Similarly, updating the per-center learning rate at line 12 can also involve the learning rate calculator 504A of the CSU 136A. For example, the learning rate calculator 504A can include hardware logic for performing a division or approximating a division operation - e.g., logic for full division, a bit shift to serve as an approximation, etc.

Line 13, involving taking a gradient step by performing a calculation and updating a "C" value, can involve the PEs 506A-506Z and RAM(s) 508. Lines 14-15, which are the end of control blocks, can again be performed by the DMU 510.

### Hardware Template

As indicated above, example implemnetations can implement this heterogeneous architecture as a customizable hardware template where optimized custom instances can be derived therefrom (i.e., given design parameters, the template could output a register transfer language (RTL) implementation of the architecture), which can be used to dramatically improve the processing efficiency of k-means clustering (e.g., with mini-batch and projected-gradient optimizations) on field programmable gate array (FPGA) based systems. Such a template can be thought of as describing a superset of many possible instances of this architecture, and that allows particular instances to be generated based upon parameters.

There are many user-specifiable customization parameters to this hardware template. For example, the number and types of the involved tiles are template parameters in some embodiments, which allows users to instantiate an accelerator with a particular mix of tiles optimized for the user's target use case. A few examples of other template parameters include, a number of PEs, the sizes of storage structures (e.g., RAMs), etc.

As another example, a parameter can include an exemplary matrix serving as a sample of the type/size/complexity of matrix that will be operated upon. With such a sample matrix, embodiments can analyze its characteristics/attributes (e.g., number of rows/columns, number of empty rows/columns, overall sparsity, how skewed the matrix is, etc.) and generate a recommended architecture that should best serve that type of matrix.

Thus, given a target FPGA-based system, the k-means parameters of interest (e.g., k, b, t, X of **Figure 3**, and properties of the input datasets (e.g., non-zero distribution of X), the hardware template can be customized to produce an optimized hardware implementation instance (e.g., in RTL Verilog) to be deployed on the target FPGA-based system to perform K-means clustering very efficiently. Further detail pertaining to hardware templates is provided later herein with regard to later figures.

### Exemplary Flows

**Figure 6** is a flow diagram illustrating a flow 600 for initiating clustering (e.g., web-scale k-means clustering) utilizing a hardware accelerator architecture according to some embodiments.

The operations in this and other flow diagrams will be described with reference to the exemplary implementations of the other figures. However, it should be understood that the operations of the flow diagrams can be performed by implementations other than those discussed with reference to the other figures, and the implementations discussed with reference to these other figures can perform operations different than those discussed with reference to the flow diagrams. In some implementations this flow 600 is performed by an accelerator 101 of **Figure 1** or **Figure 5**. In some implementations the flow 600 can be performed by a control unit 560, which can be a part of the accelerator or external to the accelerator.

Flow 600 includes, at block 605, determining that a clustering task (e.g., web-scale k-means clustering) involving a matrix is to be performed. This determination can be based upon an offload of one or more computational tasks to the accelerator, etc.

In some implementations the flow 600 continues via arrow 607A directly to block 615, which includes partitioning the matrix into a first plurality of blocks and a second plurality of blocks. The first plurality of blocks includes portions of the matrix that are sparse, and the second plurality of blocks includes portions of the matrix that are very-sparse or hyper-sparse. In some implementations block 615 includes analyzing the amount and/or locations of zeros and/or non-zeros of the matrix to determine whether portions of the matrix are less than or greater than certain thresholds (e.g., thresholds defining the bounds of what is sparse, what is very-sparse, and what is hyper-sparse). In some implementations block 615 includes identifying boundaries of the blocks within the matrix according to this analysis, and in some implementations block 615 includes performing one or more optimizations based upon these blocks - e.g., changing the matrix representation/format of one or more of the blocks, providing hints to a hardware scheduler, etc.

Flow 600 may then proceed to block 620, which includes causing one or more sparse tiles to perform operations for the clustering task using the first plurality of blocks, and causing one or more hyper/very sparse tiles to perform operations for the clustering task using the second plurality of blocks. In some implementations block 620 includes copying the blocks to memory units corresponding to the one or more sparse tiles and the one or more hyper/very sparse tiles, but in some implementations, block 620 includes providing identifiers of the blocks (e.g., memory locations) to the sparse tile(s) and very/hyper-sparse tile(s).

After block 605, in some implementations the flow 600 may optionally continue via arrow 607B to an optional decision block 610, which includes determining whether the matrix is "generally" sparse (overall) and has a skewed non-zero distribution. Block 610 can include, in some embodiments, analyzing the numbers and locations of the zero and/or non-zero values of the matrix, and may include, determining whether higher frequencies of non-zeros exist at least a threshold amount more at one side of the matrix compared to another side (e.g., the opposite side).

If the matrix is sparse and has a skewed non-zero distribution, the flow 600 may continue via arrow 612A to block 615, and thereafter the flow may continue to block 620. However, if the matrix is not sparse and/or does not have a skewed non-zero distribution, the flow 600 may optionally continue via arrow 612B to another decision block 625.

Decision block 625 includes determining whether the matrix is sparse (as a whole) or if it is very- or hyper-sparse (as a whole). If neither, the flow 600 may terminate (not illustrated) or simply flow to block 630 (e.g., have only the sparse tiles process the entire matrix).

If the matrix is found to be sparse, the flow 600 may continue via arrow 627A to block 630, which includes causing one or more sparse tiles to perform operations for the clustering task using the "entire" matrix (which may be, for example, only the non-zeros, or could be both the zeros and non-zeros). If, at block 625, it is determined that the matrix as a whole is very-sparse or hyper-sparse, the flow 600 may continue via arrow 627B to block 635, which includes causing one or more very/hyper sparse tiles to perform operations for the clustering task using the matrix.

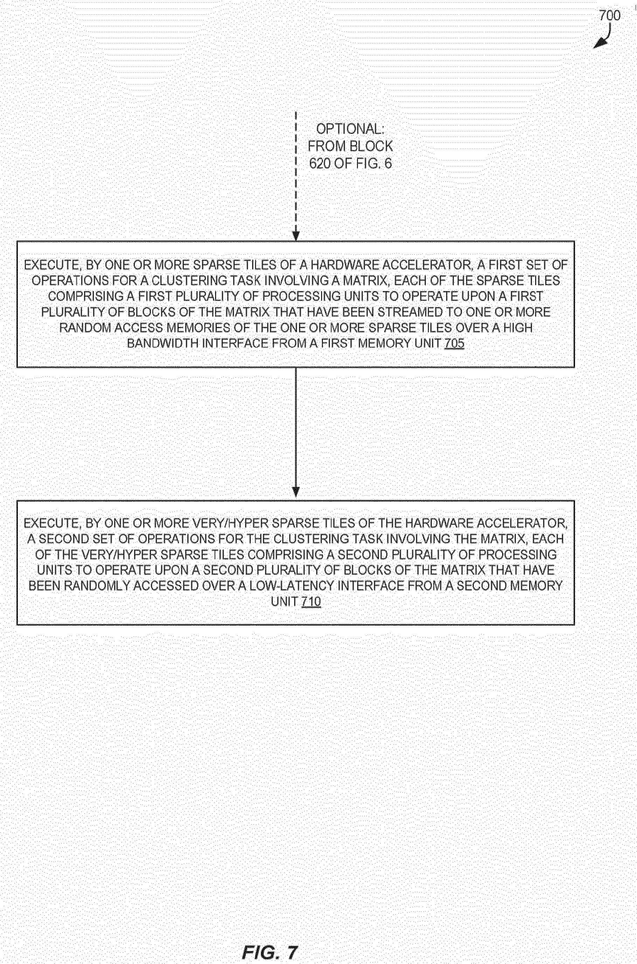

**Figure 7** is a flow diagram illustrating another flow 700 for performing clustering (e.g., web-scale k-means clustering) utilizing a hardware accelerator architecture according to some implementations. Flow 700 could be performed, for example, by the accelerator depicted in **Figure 1** or **Figure 5****.** Additionally, flow 700 could optionally be performed after (or responsive to) block 620 of **Figure 6****.**

Flow 700 includes, at block 705, executing, by one or more sparse tiles of a hardware accelerator, operations for a clustering task involving a matrix, where each of the sparse tiles comprises a first plurality of processing units to operate upon a first plurality of blocks of the matrix that have been streamed to one or more random access memories of the one or more sparse tiles over a high bandwidth interface from a first memory unit. Flow 700 also includes, at block 710, executing, by one or more very/hyper sparse tiles of the hardware accelerator, operations for the clustering task involving the matrix, where each of the very/hyper-sparse tiles comprises a second plurality of processing units to operate upon a second plurality of blocks of the matrix that have been randomly accessed over a low-latency interface from a second memory unit.

### Examples

According to the invention, a hardware accelerator comprises: one or more sparse tiles to execute operations for a clustering task involving a matrix, each of the sparse tiles comprising a first plurality of processing units to operate upon a first plurality of sparse blocks of the matrix that have been streamed to one or more random access memories of the one or more sparse tiles over a high bandwidth interface from a first memory unit; and one or more very/hyper sparse tiles to execute operations for the clustering task involving the matrix, each of the very/hyper sparse tiles comprising a second plurality of processing units to operate upon a second plurality of very/hyper sparse blocks of the matrix that have been randomly accessed over a low-latency interface from a second off-tile memory unit adapted for low latency, parallel, short, irregular access.

In some embodiments, the hardware accelerator further comprises a control unit to: determine that the clustering task involving the matrix is to be performed; and partition the matrix into the first plurality of blocks and the second plurality of blocks, wherein the first plurality of blocks includes one or more sections of the matrix that are sparse, and wherein the second plurality of blocks includes another one or more sections of the data that are very-sparse or hyper-sparse. In some embodiments, the hardware accelerator is further to: cause the one or more sparse tiles to execute the operations using the first plurality of blocks and further cause the one or more very/hyper sparse tiles to execute the operations using the second plurality of blocks. In some embodiments, the one or more sparse tiles, to execute the operations, are to update a set of center values within one or more random access memories of the one or more sparse tiles. In some embodiments, the one or more sparse tiles, to execute the operations, are further to: stream, by one or more data management units of the one or more sparse tiles, values of a plurality of rows of the matrix over the high bandwidth interface from the first memory unit to local memories of the first plurality of processing elements. In some embodiments, the one or more sparse tiles, to execute the operations, are further to: execute, by the first plurality of processing elements, a plurality of distance calculations using at least some of the streamed values and a clustering computation subsystem that is separate from the one or more sparse tiles. In some embodiments, the one or more sparse tiles, to execute the operations, are further to: execute, by the first plurality of processing elements, one or more scale-update operations using the set of center values. In some embodiments, the one or more very/hyper sparse tiles, to execute the operations, are to: update, during the operations, a set of center values within the second memory unit over the low-latency interface. In some embodiments, the one or more very/hyper sparse tiles, to execute the operations, are further to: retrieve, by one or more data management units of the one or more very/hyper sparse tiles through use of random access requests, values of a plurality of rows of the matrix over the low-latency interface from the second memory unit. In some embodiments, each of the one or more very/hyper sparse tiles and each of the one or more sparse tiles, while executing the respective operations, are to: provide partial distance values to a clustering computation subsystem that is separate from the one or more sparse tiles and separate from the one or more very/hyper sparse tiles; and obtain nearest center identifiers from the clustering computation subsystem.

According to the invention, a method performed by a hardware accelerator for efficiently executing clustering comprises: executing, by one or more sparse tiles of the hardware accelerator, operations for a clustering task involving a matrix, each of the sparse tiles comprising a first plurality of processing units to operate upon a first plurality of sparse blocks of the matrix that have been streamed to one or more random access memories of the one or more sparse tiles over a high bandwidth interface from a first memory unit; and executing, by one or more very/hyper sparse tiles of the hardware accelerator, operations for the clustering task involving the matrix, each of the very/hyper sparse tiles comprising a second plurality of processing units to operate upon a second plurality of very/hyper sparse blocks of the matrix that have been randomly accessed over a low-latency interface from a second off-tile memory unit adapter for low latency, parallel, short, irregular accesses.

In some embodiments, the method further comprises: determining, by the hardware accelerator, that the clustering task involving a matrix is to be performed; and partitioning, by the hardware accelerator, the matrix into the first plurality of blocks and the second plurality of blocks, wherein the first plurality of blocks includes one or more sections of the matrix that are sparse, and wherein the second plurality of blocks includes another one or more sections of the matrix that are very- or hyper-sparse. In some embodiments, the method further comprises causing the one or more sparse tiles of the hardware processor to perform the operations using the first plurality of blocks and further causing the one or more very/hyper sparse tiles of the hardware processor to perform the operations using the second plurality of blocks. In some embodiments, executing the operations comprises: updating, by the first plurality of processing elements of each of the one or more sparse tiles, a set of center values within one or more random access memories of the one or more sparse tiles. In some embodiments, executing the operations further comprises: streaming, by one or more data management units of the one or more sparse tiles, values of a plurality of rows of the matrix over the high bandwidth interface from the first memory unit to local memories of the first plurality of processing elements. In some embodiments, executing the operations further comprises: executing, by the first plurality of processing elements of each of the one or more sparse tiles, a plurality of distance calculations using at least some of the streamed values and a clustering computation subsystem that is separate from the one or more sparse tiles. In some embodiments, executing the operations further comprises: executing, by the first plurality of processing elements of each of the one or more sparse tiles, one or more scale-update operations using the set of center values.

In some embodiments, executing the operations comprises: updating, by the second plurality of processing elements of each of the one or more very/hyper sparse tiles, a set of center values within the second memory unit over the low-latency interface. In some embodiments, executing the operations further comprises: retrieving, by one or more data management units of the one or more very/hyper sparse tiles through use of random access requests, values of a plurality of rows of the matrix over the low-latency interface from the second memory unit. In some embodiments, executing the operations and executing the operations each further comprise: providing partial distance values to a clustering computation subsystem that is separate from the one or more sparse tiles and separate from the one or more very/hyper sparse tiles; and obtaining nearest cluster identifiers from the clustering computation subsystem.

According to some implementations, a system comprises a first memory unit; a second memory unit; one or more sparse tiles to execute operations for a clustering task involving a matrix, each of the sparse tiles comprising a first plurality of processing units to operate upon a first plurality of blocks of the matrix that have been streamed to one or more random access memories of the one or more sparse tiles over a high bandwidth interface from a first memory unit; and one or more very/hyper sparse tiles to execute operations for the clustering task involving the matrix, each of the very/hyper sparse tiles comprising a second plurality of processing units to operate upon a second plurality of blocks of the matrix that have been randomly accessed over a low-latency interface from a second memory unit.

According to some implementations, a hardware accelerator comprises: a first means to execute operations for a clustering task involving a matrix, each of the first means comprising a second means to operate upon a first plurality of blocks of the matrix that have been streamed to one or more random access memories of the one or more sparse tiles over a high bandwidth interface from a third means; and a fourth means to execute operations for the clustering task involving the matrix, each of the fourth means comprising a fifth means to operate upon a second plurality of blocks of the matrix that have been randomly accessed over a low-latency interface from a sixth means.

Implementations disclosed herein utilize electronic devices. An electronic device stores and transmits (internally and/or with other electronic devices over a network) code (which is composed of software instructions and which is sometimes referred to as computer program code or a computer program) and/or data using machine-readable media (also called computer-readable media), such as machinc-rcadablc storage media (e.g., magnetic disks, optical disks, read only memory (ROM), flash memory devices, phase change memory) and machine-readable transmission media (also called a carrier) (e.g., electrical, optical, radio, acoustical or other form of propagated signals - such as carrier waves, infrared signals). Thus, an electronic device (e.g., a computer) includes hardware and software, such as a set of one or more processors coupled to one or more machine-readable storage media to store code for execution on the set of processors and/or to store data. For instance, an electronic device may include non-volatile memory containing the code since the non-volatile memory can persist code/data even when the electronic device is turned off (when power is removed), and while the electronic device is turned on that part of the code that is to be executed by the processor(s) of that electronic device is typically copied from the slower non-volatile memory into volatile memory (e.g., dynamic random access memory (DRAM), static random access memory (SRAM)) of that electronic device. Typical electronic devices also include a set or one or more physical network interface(s) to establish network connections (to transmit and/or receive code and/or data using propagating signals) with other electronic devices. One or more parts of an embodiment of the invention may be implemented using different combinations of software, firmware, and/or hardware.

### Exemplary Accelerator Architectures

### Overview

In some implementations, an accelerator is coupled to processor cores or other processing elements to accelerate certain types of operations such as graphics operations, machine-learning operations, pattern analysis operations, and (as described in detail below) sparse matrix multiplication operations, to name a few. The accelerator may be communicatively coupled to the processor/cores over a bus or other interconnect (e.g., a point-to-point interconnect) or may be integrated on the same chip as the processor and communicatively coupled to the cores over an internal processor bus/interconnect. Regardless of the manner in which the accelerator is connected, the processor cores may allocate certain processing tasks to the accelerator (e.g., in the form of sequences of instructions or µops) which includes dedicated circuitry/logic for efficiently processing these tasks.

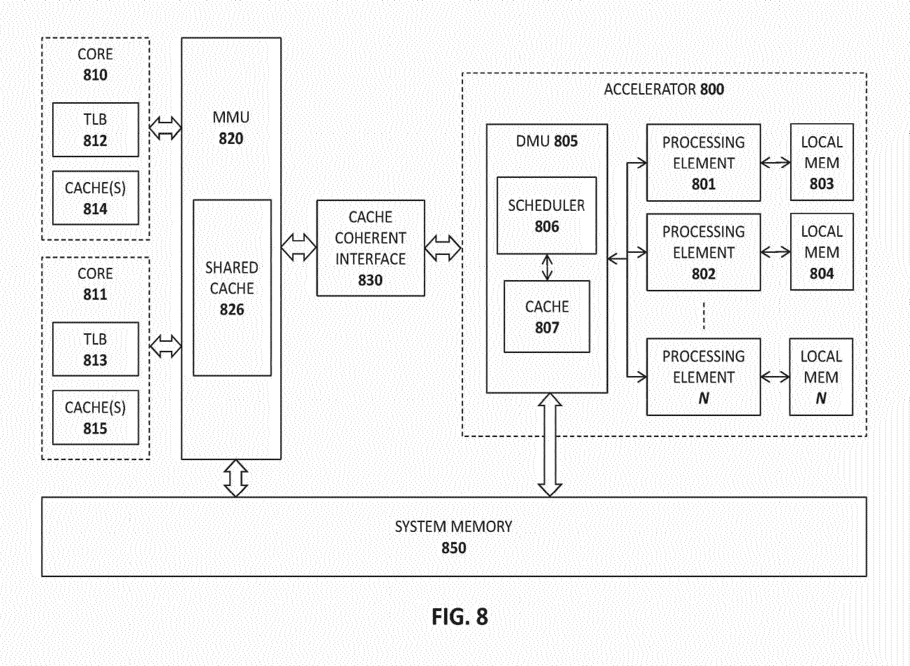

**Figure 8** illustrates an exemplary implementation in which an accelerator 800 is communicatively coupled to a plurality of cores 810-811 through a cache coherent interface 830. Each of the cores 810-811 includes a translation lookaside buffer 812-813 for storing virtual to physical address translations and one or more caches 814-815 (e.g., L1 cache, L2 cache, etc.) for caching data and instructions. A memory management unit 820 manages access by the cores 810-811 to system memory 850 which may be a dynamic random access memory DRAM. A shared cache 826 such as an L3 cache may be shared among the processor cores 810-811 and with the accelerator 800 via the cache coherent interface 830. In one implementation, the cores ATA1010T-1011, MMU 820 and cache coherent interface 830 are integrated on a single processor chip.

The illustrated accelerator 800 includes a data management unit 805 with a cache 807 and scheduler 806 for scheduling operations to a plurality of processing elements 801-802, N. In the illustrated implementation, each processing element has its own local memory 803-804, N. As described in detail below, each local memory 803-804, N may be implemented as a stacked DRAM.

In one implementation, the cache coherent interface 830 provides cache-coherent connectivity between the cores 810-811 and the accelerator 800, in effect treating the accelerator as a peer of the cores 810-811. For example, the cache coherent interface 830 may implement a cache coherency protocol to ensure that data accessed/modified by the accelerator 800 and stored in the accelerator cache 807 and/or local memories 803-804, N is coherent with the data stored in the core caches 810-811, the shared cache 826 and the system memory 850. For example, the cache coherent interface 830 may participate in the snooping mechanisms used by the cores 810-811 and MMU 820 to detect the state of cache lines within the shared cache 826 and local caches 814-815 and may act as a proxy, providing snoop updates in response to accesses and attempted modifications to cache lines by the processing elements 801-802, N. In addition, when a cache line is modified by the processing elements 801-802, N, the cache coherent interface 830 may update the status of the cache lines if they are stored within the shared cache 826 or local caches 814-815.

In one implementation, the data management unit 1005 includes memory management circuitry providing the accelerator 800 access to system memory 850 and the shared cache 826. In addition, the data management unit 805 may provide updates to the cache coherent interface 830 and receiving updates from the cache coherent interface 830 as needed (e.g., to determine state changes to cache lines). In the illustrated implementation, the data management unit 805 includes a scheduler 806 for scheduling instructions/operations to be executed by the processing elements 801-802, N. To perform its scheduling operations, the scheduler 806 may evaluate dependences between instructions/operations to ensure that instructions/operations are executed in a coherent order (e.g., to ensure that a first instruction executes before a second instruction which is dependent on results from the first instruction). Instructions/operations which are not inter-dependent may be executed in parallel on the processing elements 801-802, N.

### Accelerator Architecture for Matrix and Vector Operations

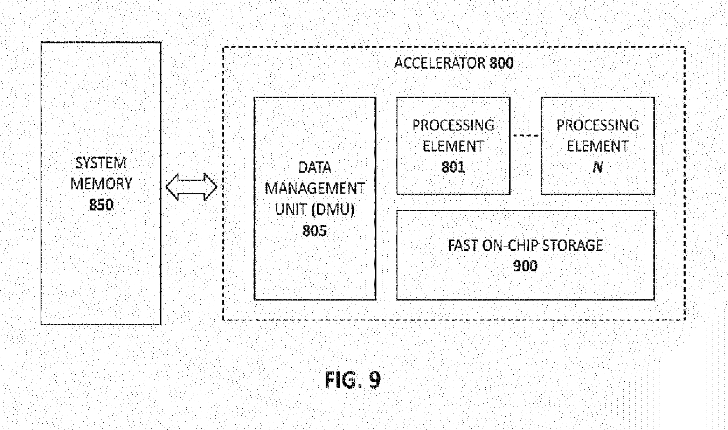

**Figure 9** illustrates another view of accelerator 800 and other components previously described including a data management unit 805, a plurality of processing elements 801-N, and fast on-chip storage 900 (e.g., implemented using stacked local DRAM in one implementation). In one implementation, the accelerator 800 is a hardware accelerator architecture and the processing elements 801-N include circuitry for performing matrix ^{∗} vector and vector ^{∗} vector operations, including operations for sparse/dense matrices. In particular, the processing elements 801-N may include hardware support for column and row-oriented matrix processing and may include microarchitectural support for a "scale and update" operation such as that used in machine learning (ML) algorithms.

The described implementations perform matrix/vector operations which are optimized by keeping frequently used, randomly accessed, potentially sparse (e.g., gather/scatter) vector data in the fast on-chip storage 900 and maintaining large, infrequently used matrix data in off-chip memory (e.g., system memory 850), accessed in a streaming fashion whenever possible, and exposing intra/inter matrix block parallelism to scale up.

Implementations of the processing elements 801-N process different combinations of sparse matrixes, dense matrices, sparse vectors, and dense vectors. As used herein, a "sparse" matrix or vector is a matrix or vector in which most of the elements are zero. By contrast, a "dense" matrix or vector is a matrix or vector in which most of the elements are non-zero. The "sparsity" of a matrix/vector may be defined based on the number of zero-valued elements divided by the total number of elements (e.g., m × n for an m × n matrix). In one implementation, a matrix/vector is considered "sparse" if its sparsity if above a specified threshold.

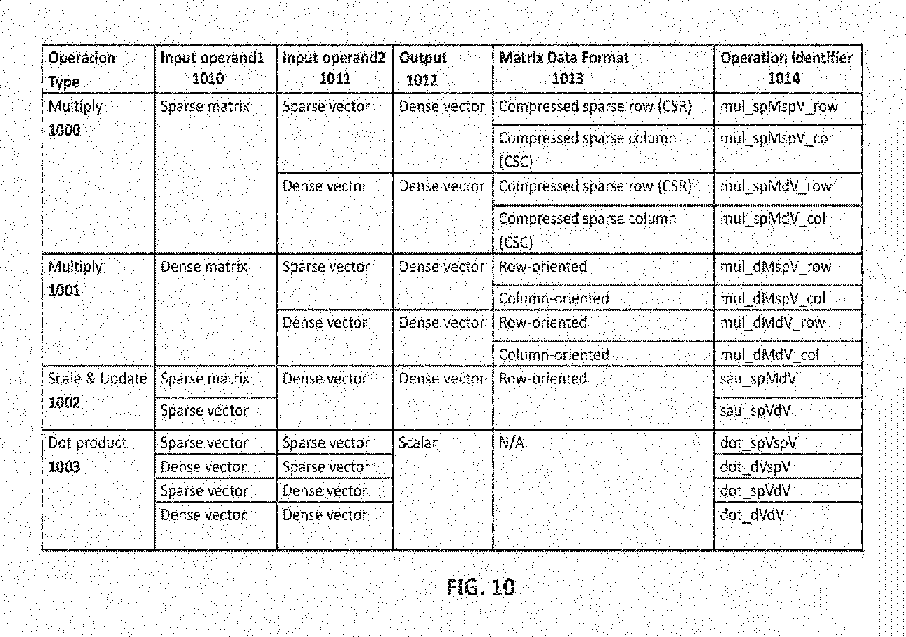

An exemplary set of operations performed by the processing elements 801-N is illustrated in the table in **Figure 10****.** In particular the operation types include a first multiply 1000 using a sparse matrix, a second multiply 1001 using a dense matrix, a scale and update operation 1002m and a dot product operation 1003. Columns are provided for a first input operand 1010 and a second input operand 1011 (each of which may include sparse or dense matrix/vector); an output format 1013 (e.g., dense vector or scalar); a matrix data format (e.g., compressed sparse row, compressed sparse column, row-oriented, etc.); and an operation identifier 1014.

The runtime-dominating compute patterns found in some current workloads include variations of matrix multiplication against a vector in row-oriented and column-oriented fashion. They work on well-known matrix formats: compressed sparse row (CSR) and compressed sparse column (CSC). **Figure 11a** depicts an example of a multiplication between a sparse matrix A against a vector x to produce a vector y. **Figure 11b** illustrates the CSR representation of matrix A in which each value is stored as a (value, row index) pair. For example, the (3,2) for row0 indicates that a value of 3 is stored in element position 2 for row 0. **Figure 11c** illustrates a CSC representation of matrix A which uses a (value, column index) pair.

**Figures 14a, 14b**, and **14c** illustrate pseudo code of each compute pattern, which is described below in detail. In particular, **Figure 12a** illustrates a row-oriented sparse matrix dense vector multiply (spMdV_csr); **Figure 12b** illustrates a column-oriented sparse matrix sparse vector multiply (spMspC_csc); and **Figure 12c** illustrates a scale and update operation (scale_update).

### A. Row-Oriented Sparse Matrix Dense Vector Multiplication (spMdV _csr)

This is a well-known compute pattern that is important in many application domains such as high-performance computing. Here, for each row of matrix A, a dot product of that row against vector x is performed, and the result is stored in the y vector element pointed to by the row index. This computation is used in a machine-learning (ML) algorithm that performs analysis across a set of samples (i.e., rows of the matrix). It may be used in techniques such as "mini-batch." There are also cases where ML algorithms perform only a dot product of a sparse vector against a dense vector (i.e., an iteration of the spMdV_csr loop), such as in the stochastic variants of learning algorithms.

A known factor that can affect performance on this computation is the need to randomly access sparse x vector elements in the dot product computation. For a conventional server system, when the x vector is large, this would result in irregular accesses (gather) to memory or last level cache.

To address this, one implementation of a processing element divides matrix A into column blocks and the x vector into multiple subsets (each corresponding to an A matrix column block). The block size can be chosen so that the x vector subset can fit on chip. Hence, random accesses to it can be localized on-chip.

### B. Column-Oriented Sparse Matrix Sparse Vector Multiplication (spMspV_csc)

This pattern that multiplies a sparse matrix against a sparse vector is not as well-known as spMdV_csr. However, it is important in some ML algorithms. It is used when an algorithm works on a set of features, which are represented as matrix columns in the dataset (hence, the need for column-oriented matrix accesses).

In this compute pattern, each column of the matrix A is read and multiplied against the corresponding non-zero element of vector x. The result is used to update partial dot products that are kept at the y vector. After all the columns associated with non-zero x vector elements have been processed, the y vector will contain the final dot products.

While accesses to matrix A is regular (i.e., stream in columns of A), the accesses to the y vector to update the partial dot products is irregular. The y element to access depends on the row index of the A vector element being processed. To address this, the matrix A can be divided into row blocks. Consequently, the vector y can be divided into subsets corresponding to these blocks. This way, when processing a matrix row block, it only needs to irregularly access (gather/scatter) its y vector subset. By choosing the block size properly, the y vector subset can be kept on-chip.

### C. Scale and Update (scale update)

This pattern is typically used by ML algorithms to apply scaling factors to each sample in the matrix and reduced them into a set of weights, each corresponding to a feature (i.e., a column in A). Here, the x vector contains the scaling factors. For each row of matrix A (in CSR format), the scaling factors for that row are read from the x vector, and then applied to each element of A in that row. The result is used to update the element of y vector. After all rows have been processed, the y vector contains the reduced weights.

Similar to prior compute patterns, the irregular accesses to the y vector could affect performance when y is large. Dividing matrix A into column blocks and y vector into multiple subsets corresponding to these blocks can help localize the irregular accesses within each y subset.

One implementation includes a hardware accelerator 1000 that can efficiently perform the compute patterns discussed above. The accelerator 1000 is a hardware IP block that can be integrated with general purpose processors, similar to those found in existing accelerator-based solutions (e.g., IBM® PowerEN, Oracle® M7). In one implementation, the accelerator 800 independently accesses memory 850 through an interconnect shared with the processors to perform the compute patterns. It supports any arbitrarily large matrix datasets that reside in off-chip memory.

**Figure 13** illustrates the processing flow for one implementation of the data management unit 805 and the processing elements 801-802. In this implementation, the data management unit 805 includes a processing element scheduler 1301, a read buffer 1302, a write buffer 1303 and a reduction unit 1304. Each PE 801-802 includes an input buffer 1305-1306, a multiplier 1307-1308, an adder 1309-1310, a local RAM 1321-1322, a sum register 1311-1312, and an output buffer 1313-1314.

The accelerator supports the matrix blocking schemes discussed above (i.e., row and column blocking) to support any arbitrarily large matrix data. The accelerator is designed to process a block of matrix data. Each block is further divided into sub-blocks which are processed in parallel by the Pes 801-802.

In operation, the data management unit 805 reads the matrix rows or columns from the memory subsystem into its read buffer 1302, which is then dynamically distributed by the PE scheduler 1301 across PEs 801-802 for processing. It also writes results to memory from its write buffer 1303.

Each PE 801-802 is responsible for processing a matrix sub-block. A PE contains an on-chip RAM 1321-1322 to store the vector that needs to be accessed randomly (i.e., a subset of x or y vector, as described above). It also contains a floating point multiply-accumulate (FMA) unit including multiplier 1307-1308 and adder 1309-1310 and unpack logic within input buffers 1305-1306 to extract matrix elements from input data, and a sum register 1311-1312 to keep the accumulated FMA results.

One implementation of the accelerator achieves extreme efficiencies because (1) it places irregularly accessed (gather/scatter) data in on-chip PE RAMs 1321-1322, (2) it utilizes a hardware PE scheduler 1301 to ensure PEs are well utilized, and (3) unlike with general purpose processors, the accelerator consists of only the hardware resources that are essential for sparse matrix operations. Overall, the accelerator efficiently converts the available memory bandwidth provided to it into performance.

Scaling of performance can be done by employing more PEs in an accelerator block to process multiple matrix subblocks in parallel, and/or employing more accelerator blocks (each has a set of PEs) to process multiple matrix blocks in parallel. A combination of these options is considered below. The number of PEs and/or accelerator blocks should be tuned to match the memory bandwidth.

One implementation of the accelerator 800 can be programmed through a software library (similar to Intel® Math Kernel Library). Such library prepares the matrix data in memory, sets control registers in the accelerator 800 with information about the computation (e.g., computation type, memory pointer to matrix data), and starts the accelerator. Then, the accelerator independently accesses matrix data in memory, performs the computation, and writes the results back to memory for the software to consume.

The accelerator handles the different compute patterns by setting its PEs to the proper datapath configuration, as depicted in **Figures 14a-14b****.** In particular, **Figure 14a** highlights paths (using dotted lines) for spMspV_csc and scale_update operations and **Figure 14b** illustrates paths for a spMdV_csr operation. The accelerator operation to perform each compute pattern is detailed below.

For spMspV_csc, the initial y vector subset is loaded in to PE's RAM 1321 by the DMU 805. It then reads x vector elements from memory. For each x element, the DMU 805 streams the elements of the corresponding matrix column from memory and supplies them to the PE 801. Each matrix element contains a value (A.val) and an index (A.idx) which points to the y element to read from PE's RAM 1321. The DMU 1005 also provides the x vector element (x.val) that is multiplied against A.val by the multiply-accumulate (FMA) unit. The result is used to update the y element in the PE's RAM pointed to by A.idx. Note that even though not used by our workloads, the accelerator also supports column-wise multiplication against a dense x vector (spMdV_csc) by processing all matrix columns instead of only a subset (since x is dense).

The scale_update operation is similar to the spMspV_csc, except that the DMU 805 reads the rows of an A matrix represented in a CSR format instead of a CSC format. For the spMdV_csr, the x vector subset is loaded in to the PE's RAM 1321. DMU 805 streams in matrix row elements (i.e., {A.val,A.idx} pairs) from memory. A.idx is used to read the appropriate x vector element from RAM 1321, which is multiplied against A.val by the FMA. Results are accumulated into the sum register 1312. The sum register is written to the output buffer each time a PE sees a marker indicating an end of a row, which is supplied by the DMU 805. In this way, each PE produces a sum for the row sub-block it is responsible for. To produce the final sum for the row, the sub-block sums produced by all the PEs are added together by the Reduction Unit 1304 in the DMU (see **Figure 13****).** The final sums are written to the output buffer 1313-1314, which the DMU 1005 then writes to memory.

### Graph Data Processing

In one implementation, the accelerator architectures described herein are configured to process graph data. Graph analytics relies on graph algorithms to extract knowledge about the relationship among data represented as graphs. The proliferation of graph data (from sources such as social media) has led to strong demand for and wide use of graph analytics. As such, being able to do graph analytics as efficient as possible is of critical importance.

To address this need, one implementation automatically maps a user-defined graph algorithm to a hardware accelerator architecture "template" that is customized to the given input graph algorithm. The accelerator may comprise the architectures described above and may be implemented as a FPGA/ASIC, which can execute with extreme efficiency. In summary, one implementation includes:
(1) a hardware accelerator architecture template that is based on a generalized sparse matrix vector multiply (GSPMV) accelerator. It supports arbitrary graph algorithm because it has been shown that graph algorithm can be formulated as matrix operations.
(2) an automatic approach to map and tune a widely-used "vertex centric" graph programming abstraction to the architecture template.

There are existing sparse matrix multiply hardware accelerators, but they do not support customizability to allow mapping of graph algorithms.

One implementation of the design framework operates as follows.
(1) A user specifies a graph algorithm as "vertex programs" following vertex-centric graph programming abstraction. This abstraction is chosen as an example here due to its popularity. A vertex program does not expose hardware details, so users without hardware expertise (e.g., data scientists) can create it.
(2) Along with the graph algorithm in (1), one implementation of the framework accepts the following inputs:
   a. The parameters of the target hardware accelerator to be generated (e.g., max amount of on-chip RAMs). These parameters may be provided by a user, or obtained from an existing library of known parameters when targeting an existing system (e.g., a particular FPGA board).
   b. Design optimization objectives (e.g., max performance, min area).
   c. The properties of the target graph data (e.g., type of graph) or the graph data itself. This is optional, and is used to aid in automatic tuning.
(3) Given above inputs, one implementation of the framework performs auto-tuning to determine the set of customizations to apply to the hardware template to optimize for the input graph algorithm, map these parameters onto the architecture template to produce an accelerator instance in synthesizable RTL, and conduct functional and performance validation of the generated RTL against the functional and performance software models derived from the input graph algorithm specification.

In one implementation, the accelerator architecture described above is extended to support execution of vertex programs by (1) making it a customizable hardware template and (2) supporting the functionalities needed by vertex program. Based on this template, a design framework is described to map a user-supplied vertex program to the hardware template to produce a synthesizable RTL (e.g., Verilog) implementation instance optimized for the vertex program. The framework also performs automatic validation and tuning to ensure the produced RTL is correct and optimized. There are multiple use cases for this framework. For example, the produced synthesizable RTL can be deployed in an FPGA platform (e.g., Xeon-FPGA) to efficiently execute the given vertex program. Or, it can be refined further to produce an ASIC implementation.

It has been shown that graphs can be represented as adjacency matrices, and graph processing can be formulated as sparse matrix operations. **Figures 15a-15b** show an example of representing a graph as an adjacency matrix. Each non-zero in the matrix represents an edge among two nodes in the graph. For example, a 1 in row 0 column 2 represents an edge from node A to C.

One of the most popular models for describing computations on graph data is the vertex programming model. One implementation supports the vertex programming model variant from Graphmat software framework, which formulates vertex programs as generalized sparse matrix vector multiply (GSPMV). As shown in **Figure 15c****,** a vertex program consists of the types of data associated with edges/vertices in the graph (edata/vdata), messages sent across vertices in the graph (mdata), and temporary data (tdata) (illustrated in the top portion of program code); and stateless user-defined compute functions using pre-defined APIs that read and update the graph data (as illustrated in the bottom portion of program code).

**Figure 15d** illustrates exemplary program code for executing a vertex program. Edge data is represented as an adjacency matrix A (as in **Figure 15b****),** vertex data as vector y, and messages as sparse vector x. **Figure 15e** shows the GSPMV formulation, where the multiply() and add() operations in SPMV is generalized by user-defined PROCESS_MSG() and REDUCE().

One observation here is that the GSPMV variant needed to execute vertex program performs a column-oriented multiplication of sparse matrix A (i.e., adjacency matrix) against a sparse vector x (i.e., messages) to produce an output vector y (i.e., vertex data). This operation is referred to as col_spMspV (previously described with respect to the above accelerator).

Design Framework. One implementation of the framework is shown in **Figure 16** which includes a template mapping component 1611, a validation component 1612 and an automatic tuning component 1613. Its inputs are a user-specified vertex program 1601, design optimization goals 1603 (e.g., max performance, min area), and target hardware design constraints 1602 (e.g., maximum amount of on-chip RAMs, memory interface width). As an optional input to aid automatic-tuning, the framework also accepts graph data properties 1604 (e.g., type=natural graph) or a sample graph data.

Given these inputs, the template mapping component 1611 of the framework maps the input vertex program to a hardware accelerator architecture template, and produces an RTL implementation 1605 of the accelerator instance optimized for executing the vertex program 1601. The automatic tuning component 1613 performs automatic tuning 1613 to optimize the generated RTL for the given design objectives, while meeting the hardware design constraints. Furthermore, the validation component 1612 automatically validates the generated RTL against functional and performance models derived from the inputs. Validation test benches 1606 and tuning reports 1607 are produced along with the RTL.

### Generalized Sparse Matrix Vector Multiply (GSPMV) Hardware Architecture Template

One implementation of an architecture template for GSPMV is shown in **Figure 17****,** which is based on the accelerator architecture described above (see, e.g., **Figure 13** and associated text). Many of the components illustrated in **Figure 17** are customizable (as highlighted with grey lines). In one implementation, the architecture to support execution of vertex programs has been extended as follows.

As illustrated in **Figure 17****,** customizable logic blocks are provided inside each PE to support PROCESS_MSG() 1910, REDUCE() 1711, APPLY 1712, and SEND_MSG() 1713 needed by the vertex program. In addition, one implementation provides customizable on-chip storage structures and pack/unpack logic 1705 to support user-defined graph data (i.e., vdata, edata, mdata, tdata). The data management unit 805 illustrated in **Figure 17** includes a PE scheduler 1301 (for scheduling PEs as described above), aux buffers 1701 for storing active column, x data), a read buffer 1302, a memory controller 1703 for controlling access to system memory, and a write buffer 1304. In addition, in the implementation shown in **Figure 17** old and new vdata and tdata is stored within the local PE memory 1321. Various control state machines may be modified to support executing vertex programs, abiding to the functionalities specified by the algorithms in **Figure 15d** and **15e**.

The operation of each accelerator tile is summarized in **Figure 18****.** At 1801, the y vector (vdata) is loaded to the PE RAM 1321. At 1802, the x vector and column pointers are loaded to the aux buffer 1701. At 1803, for each x vector element, the A column is streamed in (edata) and the PEs execute PROC_MSG() 1710 and REDUCE() 1711. At 1804, the PEs execute APPLY() 1712. At 1805, the PEs execute SEND_MSG() 1713, producing messages, and the data management unit 805 writes them as x vectors in memory. At 1806, the data management unit 805 writes the updated y vectors (vdata) stored in the PE RAMs 1321 back to memory. The above techniques conform to the vertex program execution algorithm shown in **Figures 17d** and **17e**. To scale up performance, the architecture allows increasing the number of PEs in a tile and/or the number of tiles in the design. This way, the architecture can take advantage of multiple levels of parallelisms in the graph (i.e., across subgraphs (across blocks of adjacency matrix) or within each subgraph). The Table in **Figure 19a** summarizes the customizable parameters of one implementation of the template. It is also possible to assign asymmetric parameters across tiles for optimization (e.g., one tile with more PEs than another tile).

### Automatic mapping, validation, and tuning

*Tuning.* Based on the inputs, one implementation of the framework performs automatic tuning to determine the best design parameters to use to customize the hardware architecture template in order to optimize it for the input vertex program and (optionally) graph data. There are many tuning considerations, which are summarized in the table in **Figure 19b****.** As illustrated, these include locality of data, graph data sizes, graph compute functions, graph data structure, graph data access attributes, graph data types, and graph data patterns.

*Template Mapping.* In this phase, the framework takes the template parameters determined by the tuning phase, and produces an accelerator instance by "filling" in the customizable portions of the template. The user-defined compute functions (e.g., **Figure 15c****)** may be mapped from the input specification to the appropriate PE compute blocks using existing High-Level Synthesis (HLS) tools. The storage structures (e.g., RAMs, buffers, cache) and memory interfaces are instantiated using their corresponding design parameters. The pack/unpack logic may automatically be generated from the data type specifications (e.g., **Figure 15a****).** Parts of the control finite state machines (FSMs) are also generated based on the provided design parameters (e.g., PE scheduling schemes).

*Validation.* In one implementation, the accelerator architecture instance (synthesizable RTL) produced by the template mapping is then automatically validated. To do this, one implementation of the framework derives a functional model of the vertex program to be used as the "golden" reference. Test benches are generated to compare the execution of this golden reference against simulations of the RTL implementation of the architecture instance. The framework also performs performance validation by comparing RTL simulations against analytical performance model and cycle-accurate software simulator. It reports runtime breakdown and pinpoint the bottlenecks of the design that affect performance.

### Accelerator Architecture for Processing Sparse Data

### Introduction

Computations on sparse datasets - vectors or matrices most of whose values are zero - are critical to an increasing number of commercially-important applications, but typically achieve only a few percent of peak performance when run on today's CPUs. In the scientific computing arena, sparse-matrix computations have been key kernels of linear solvers for decades. More recently, the explosive growth of machine learning and graph analytics has moved sparse computations into the mainstream. Sparse-matrix computations are central to many machine-learning applications and form the core of many graph algorithms.

Sparse-matrix computations tend to be memory bandwidth-limited rather than compute-limited, making it difficult for CPU changes to improve their performance. They execute few operations per matrix data element and often iterate over an entire matrix before re-using any data, making caches ineffective. In addition, many sparse-matrix algorithms contain significant numbers of data-dependent gathers and scatters, such as the result[row] += matrix[row][i].value ^{∗} vector[matrix[row][i].index] operation found in sparse matrix-vector multiplication, which are hard to predict and reduce the effectiveness of prefetchers.

To deliver better sparse-matrix performance than conventional microprocessors, a system must provide significantly higher memory bandwidth than current CPUs and a very energy- efficient computing architecture. Increasing memory bandwidth makes it possible to improve performance, but the high energy/bit cost of DRAM accesses limits the amount of power available to process that bandwidth. Without an energy-efficient compute architecture, a system might find itself in the position of being unable to process the data from a high-bandwidth memory system without exceeding its power budget.

One implementation comprises an accelerator for sparse-matrix computations which uses stacked DRAM to provide the bandwidth that sparse-matrix algorithms require combined with a custom compute architecture to process that bandwidth in an energy-efficient manner.

### Sparse-Matrix Overview

Many applications create data sets where the vast majority of the values are zero. Finite-element methods model objects as a mesh of points where the state of each point is a function of the state of the points near it in the mesh. Mathematically, this becomes a system of equations that is represented as a matrix where each row describes the state of one point and the values in the row are zero for all of the points that do not directly affect the state of the point the row describes. Graphs can be represented as an adjacency matrix, where each element {i,j} in the matrix gives the weight of the edge between vertices i and j in the graph. Since most vertexes connect to only a small fraction of the other vertices in the graph, the vast majority of the elements in the adjacency matrix are zeroes. In machine learning, models are typically trained using datasets that consist of many samples, each of which contains a set of features (observations of the state of a system or object) and the desired output of the model for that set of features. It is very common for most of the samples to only contain a small subset of the possible features, for example when the features represent different words that might be present in a document, again creating a dataset where most of the values are zero.

Datasets where most of the values are zero are described as "sparse," and it is very common for sparse datasets to be extremely sparse, having non-zero values in less than 1% of their elements. These datasets are often represented as matrices, using data structures that only specify the values of the non-zero elements in the matrix. While this increases the amount of space required to represent each non-zero element, since it is necessary to specify both the element's location and its value, the overall space (memory) savings can be substantial if the matrix is sparse enough. For example, one of the most straightforward representations of a sparse matrix is the coordinate list (COO) representation, in which each non-zero is specified by a {row index, column index, value} tuple. While this triples the amount of storage required for each non-zero value, if only 1% of the elements in a matrix have non-zero values, the COO representation will take up only 3% of the space that a dense representation (one that represents the value of each element in the matrix) would take.

**Figure 20** illustrates one of the most common sparse-matrix formats, the compressed row storage (CRS, sometimes abbreviated CSR) format. In CRS format, the matrix 2000 is described by three arrays: a values array 2001, which contains the values of the non-zero elements, an indices array 2002, which specifies the position of each non-zero element within its row of the matrix, and a row starts array 2003, which specifies where each row of the matrix starts in the lists of indices and values. Thus, the first non-zero element of the second row of the example matrix can be found at position 2 in the indices and values arrays, and is described by the tuple {0, 7}, indicating that the element occurs at position 0 within the row and has value 7. Other commonly-used sparse-matrix formats include compressed sparse column (CSC), which is the column-major dual to CRS, and ELLPACK, which represents each row of the matrix as a fixed-width list of non-zero values and their indices, padding with explicit zeroes when a row has fewer non-zero elements than the longest row in the matrix.

Computations on sparse matrices have the same structure as their dense-matrix counterparts, but the nature of sparse data tends to make them much more bandwidth-intensive than their dense-matrix counterparts. For example, both the sparse and dense variants of matrix-matrix multiplication find C = A · B by computing Ci,j = Ai, · B,j for all i, j. In a dense matrix-matrix computation, this leads to substantial data re-use, because each element of A participates in N multiply-add operations (assuming N × N matrices), as does each element of B. As long as the matrix-matrix multiplication is blocked for cache locality, this re-use causes the computation to have a low bytes/op ratio and to be compute-limited. However, in the sparse variant, each element of A only participates in as many multiply-add operations as there are non-zero values in the corresponding row of B, while each element of B only participates in as many multiply-adds as there are non-zero elements in the corresponding column of A. As the sparseness of the matrices increases, so does the bytes/op ratio, making the performance of many sparse matrix-matrix computations limited by memory bandwidth in spite of the fact that dense matrix-matrix multiplication is one of the canonical compute-bound computations.

Four operations make up the bulk of the sparse-matrix computations seen in today's applications: sparse matrix-dense vector multiplication (SpMV), sparse matrix-sparse vector multiplication, sparse matrix-sparse matrix multiplication, and relaxation/smoother operations, such as the Gauss-Seidel smoother used in Intel's implementation of the High-Performance Conjugate Gradient benchmark. These operations share two characteristics that make a sparse-matrix accelerator practical. First, they are dominated by vector dot-products, which makes it possible to implement simple hardware that can implement all four important computations. For example, a matrix-vector multiplication is performed by taking the dot-product of each row in the matrix with the vector, while a matrix-matrix multiplication takes the dot- product of each row of one matrix with each column of the other. Second, applications generally perform multiple computations on the same matrix, such as the thousands of multi- plications of the same matrix by different vectors that a support vector machine algorithm performs with training a model. This repeated use of the same matrix makes it practical to transfer matrices to/from an accelerator during program execution and/or to re-format the matrix in a way that simplifies the hardware's task, since the cost of data transfers/transformations can be amortized across many operations on each matrix.

Sparse-matrix computations typically achieve only a few percent of the peak performance of the system they run on. To demonstrate why this occurs, **Figure 21** shows the steps 2101-2104 involved in an implementation of sparse matrix-dense vector multiplication using the CRS data format. First, at 2101, the data structure that represents a row of the matrix is read out of memory, which usually involves a set of sequential reads that are easy to predict and prefetch. Second, at 2102, the indices of the non-zero elements in the matrix row are used to gather the corresponding elements of the vector, which requires a number of data-dependent, hard-to-predict memory accesses (a gather operation). Moreover, these memory accesses often touch only one or two words in each referenced cache line, resulting in significant wasted bandwidth when the vector does not fit in the cache.

Third, at 2103, the processor computes the dot-product of the non-zero elements of the matrix row and the corresponding elements of the vector. Finally, at 2104, the result of the dot-product is written into the result vector, which is also accessed sequentially, and the program proceeds to the next row of the matrix. Note that this is a conceptual/algorithmic view of the computation, and the exact sequence of operations the program executes will depend on the processor's ISA and vector width.

This example illustrates a number of important characteristics of sparse-matrix computations. Assuming 32-bit data types and that neither the matrix nor the vector fit in the cache, computing the first element of the output row requires reading 36 bytes from DRAM, but only five compute instructions (three multiplies and two adds), for a bytes/op ratio of 7.2:1.

Memory bandwidth is not the only challenge to high-performance sparse-matrix computations, however. As **Figure 21** shows, the accesses to the vector in SpMV are data-dependent and hard to predict, exposing the latency of vector accesses to the application. If the vector does not fit in the cache, SpMV performance becomes sensitive to DRAM latency as well as bandwidth unless the processor provides enough parallelism to saturate the DRAM bandwidth even when many threads are stalled waiting for data.

Thus, an architecture for sparse-matrix computations must provide several things to be effective. It must deliver high memory bandwidth to meet the bytes/op needs of sparse computations. It must also support high-bandwidth gathers out of large vectors that may not fit in the cache. Finally, while performing enough arithmetic operations/second to keep up with DRAM bandwidth is not a challenge in and of itself, the architecture must perform those operations and all of the memory accesses they require in an energy-efficient manner in order to remain within system power budgets.

### Implementations

One implementation comprises an accelerator designed to provide the three features necessary for high sparse- matrix performance: high memory bandwidth, high-bandwidth gathers out of large vectors, and energy-efficient computation. As illustrated in **Figure 22****,** one implementation of the accelerator includes an accelerator logic die 2205 and one of more stacks 2201-2204 of DRAM die. Stacked DRAM, which is described in more detail below, provides high memory bandwidth at low energy/bit. For example, stacked DRAMs are expected to deliver 256-512 GB/sec at 2.5 pJ/bit, while LPDDR4 DIMMs are only expected to deliver 68 GB/sec and will have an energy cost of 12 pJ/bit.

The accelerator logic chip 2205 at the bottom of the accelerator stack is customized to the needs of sparse-matrix computations, and is able to consume the bandwidth offered by a DRAM stack 2201-2204 while only expending 2-4 Watts of power, with energy consumption proportional to the bandwidth of the stack. To be conservative, a stack bandwidth of 273 GB/sec is assumed (the expected bandwidth of WIO3 stacks) for the remainder of this application. Designs based on higher-bandwidth stacks would incorporate more parallelism in order to consume the memory bandwidth.

**Figure 23** illustrates one implementation of the accelerator logic chip 2205, oriented from a top perspective through the stack of DRAM die 2201-2204. The stack DRAM channel blocks 2305 towards the center of the diagram represent the through-silicon vias that connect the logic chip 2205 to the DRAMs 2201-2204, while the memory controller blocks 1310 contain the logic that generates the control signals for the DRAM channels. While eight DRAM channels 2305 are shown in the figure, the actual number of channels implemented on an accelerator chip will vary depending on the stacked DRAMs used. Most of the stack DRAM technologies being developed provide either four or eight channels.

The dot-product engines (DPEs) 2320 are the computing elements of the architecture. In the particular implementation shown in **Figure 23****,** each set of eight DPEs is associated with a vector cache 2315. **Figure 24** provides a high-level overview of a DPE which contains two buffers 2405-2406, two 64-bit multiply-add ALUs 2410, and control logic 2400. During computations, the chip control unit 2400 streams chunks of the data being processed into the buffer memories 2405-2406. Once each buffer is full, the DPE's control logic sequences through the buffers, computing the dot-products of the vectors they contain and writing the results out to the DPE's result latch 2410, which is connected in a daisy-chain with the result latches of the other DPE's to write the result of a computation back to the stack DRAM 2201-2204.

In one implementation, the accelerator logic chip 2405 operates at approximately 1GHz and 0.65V to minimize power consumption (although the particular operating frequency and voltage may be modified for different applications). Analysis based on 14nm design studies shows that 32-64 KB buffers meet this frequency spec at that voltage, although strong ECC may be required to prevent soft errors. The multiply-add unit may be operated at half of the base clock rate in order to meet timing with a 0.65V supply voltage and shallow pipeline. Having two ALUs provides a throughput of one double-precision multiply-add/cycle per DPE.

At 273 GB/second and a clock rate of 1.066 MHz, the DRAM stack 2201-2204 delivers 256 bytes of data per logic chip clock cycle. Assuming that array indices and values are at least 32-bit quantities, this translates to 32 sparse-matrix elements per cycle (4 bytes of index + 4 bytes of value = 8 bytes/element), requiring that the chip perform 32 multiply-adds per cycle to keep up. (This is for matrix-vector multiplication and assumes a high hit rate in the vector cache so that 100% of the stack DRAM bandwidth is used to fetch the matrix.) The 64 DPEs shown in **Figure 23** provide 2-4x the required compute throughput, allowing the chip to process data at the peak stack DRAM bandwidth even if the ALUs 2410 are not used 100% of the time.

In one implementation, the vector caches 2315 cache elements of the vector in a matrix-vector multiplication. This significantly increases the efficiency of the matrix-blocking scheme described below. In one implementation, each vector cache block contains 32-64KB of cache, for a total capacity of 256-512KB in an eight-channel architecture.

The chip control unit 2301 manages the flow of a computation and handles communication with the other stacks in an accelerator and with other sockets in the system. To reduce complexity and power consumption, the dot-product engines never request data from memory. Instead, the chip control unit 2301 manages the memory system, initiating transfers that push the appropriate blocks of data to each of the DPEs.

In one implementation, the stacks in a multi-stack accelerator communicate with each other via a network of KTI links 2330 that is implemented using the neighbor connections 2331 shown in the figure. The chip also provides three additional KTI links that are used to communicate with the other socket(s) in a multi-socket system. In a multi-stack accelerator, only one of the stacks' off-package KTI links 2330 will be active. KTI transactions that target memory on the other stacks will be routed to the appropriate stack over the on-package KTI network.

### Implementing Sparse-matrix Operations

In this section, we describe the techniques and hardware required to implement sparse matrix-dense vector and sparse matrix-sparse vector multiplication on one implementation of the accelerator. This design is also extended to support matrix-matrix multiplication, relaxation operations, and other important functions to create an accelerator that supports all of the key sparse-matrix operations.

While sparse-sparse and sparse-dense matrix-vector multiplications execute the same basic algorithm (taking the dot product of each row in the matrix and the vector), there are significant differences in how this algorithm is implemented when the vector is sparse as compared to when it is dense, which are summarized in Table 1 below.

**TABLE 1**

| | **Sparse-Sparse SpMV** | **Sparse-Dense SpMV** |
|---|---|---|
| **Size of Vector** | Typically Small | Often large (5-10% of matrix size) |
| **Location of Vector Elements** | Unpredictable | Determined by Index |
| **Number of operations per matrix element** | Unpredictable | Fixed |

In a sparse matrix-dense vector multiplication, the size of the vector is fixed and equal to the number of columns in the matrix. Since many of the matrices found in scientific computations average approximately 10 non-zero elements per row, it is not uncommon for the vector in a sparse matrix-dense vector multiplication to take up 5-10% as much space as the matrix itself. Sparse vectors, on the other hand, are often fairly short, containing similar numbers of non-zero values to the rows of the matrix, which makes them much easier to cache in on-chip memory.

In a sparse matrix-dense vector multiplication the location of each element in the vector is determined by its index, making it feasible to gather the vector elements that correspond to the non-zero values in a region of the matrix and to pre-compute the set of vector elements that need to be gathered for any dense vector that the matrix will be multiplied by. The location of each element in a sparse vector, however is unpredictable and depends on the distribution of non-zero elements in the vector. This makes it necessary to examine the non- zero elements of the sparse vector and of the matrix to determine which non-zeroes in the matrix correspond to non-zero values in the vector.

It is helpful to compare the indices of the non-zero elements in the matrix and the vector because the number of instructions/operations required to compute a sparse matrix-sparse vector dot-product is unpredictable and depends on the structure of the matrix and vector. For example, consider taking the dot-product of a matrix row with a single non-zero element and a vector with many non-zero elements. If the row's non-zero has a lower index than any of the non-zeroes in the vector, the dot-product only requires one index comparison. If the row's non-zero has a higher index than any of the non-zeroes in the vector, computing the dot- product requires comparing the index of the row's non-zero with every index in the vector. This assumes a linear search through the vector, which is common practice. Other searches, such as binary search, would be faster in the worst case, but would add significant overhead in the common case where the non-zeroes in the row and the vector overlap. In contrast, the number of operations required to perform a sparse matrix-dense vector multiplication is fixed and determined by the number of non-zero values in the matrix, making it easy to predict the amount of time required for the computation.

Because of these differences, one implementation of the accelerator uses the same high-level algorithm to implement sparse matrix-dense vector and sparse matrix-sparse vector multiplication, with differences in how the vector is distributed across the dot-product engines and how the dot-product is computed. Because the accelerator is intended for large sparse-matrix computations, it cannot be assumed that either the matrix or the vector will fit in on-chip memory. Instead, one implementation uses the blocking scheme outlined in **Figure 25****.**

In particular, in this implementation, the accelerator will divide matrices into fixed-size blocks of data 2501-2502, sized to fit in the on-chip memory, and will multiply the rows in the block by the vector to generate a chunk of the output vector before proceeding to the next block. This approach poses two challenges. First, the number of non-zeroes in each row of a sparse matrix varies widely between datasets, from as low as one to as high as 46,000 in the datasets studied. This makes it impractical to assign one or even a fixed number of rows to each dot-product engine. Therefore, one implementation assigns fixed-size chunks of matrix data to each dot product engine and handles the case where a chunk contains multiple matrix rows and the case where a single row is split across multiple chunks.

The second challenge is that fetching the entire vector from stack DRAM for each block of the matrix has the potential to waste significant amounts of bandwidth (i.e., fetching vector elements for which there is no corresponding non-zero in the block). This is particularly an issue for sparse matrix-dense vector multiplication, where the vector can be a significant fraction of the size of the sparse matrix. To address this, one implementation constructs a fetch list 2511-2512 for each block 2501-2502 in the matrix, which lists the set of vector 2510 elements that correspond to non-zero values in the block, and only fetch those elements when processing the block. While the fetch lists must also be fetched from stack DRAM, it has been determined that the fetch list for most blocks will be a small fraction of the size of the block. Techniques such as run-length encodings may also be used to reduce the size of the fetch list.

Thus, a matrix-vector multiplication on Accelerator will involve the following sequence of operations:
1. Fetch a block of matrix data from the DRAM stack and distribute it across the dot-product engines;
2. Generate fetch list based on non-zero elements in the matrix data;
3. Fetch each vector element in the fetch list from stack DRAM and distribute it to the dot-product engines;
4. Compute the dot-product of the rows in the block with the vector and write the results out to stack DRAM; and
5. In parallel with the computation, fetch the next block of matrix data and repeat until the entire matrix has been processed.

When an accelerator contains multiple stacks, "partitions" of the matrix may be statically assigned to the different stacks and then the blocking algorithm may be executed in parallel on each partition. This blocking and broadcast scheme has the advantage that all of the memory references originate from a central control unit, which greatly simplifies the design of the on-chip network, since the network does not have to route unpredictable requests and replies between the dot product engines and the memory controllers. It also saves energy by only issuing one memory request for each vector element that a given block needs, as opposed to having individual dot product engines issue memory requests for the vector elements that they require to perform their portion of the computation. Finally, fetching vector elements out of an organized list of indices makes it easy to schedule the memory requests that those fetches require in a way that maximizes page hits in the stacked DRAM and thus bandwidth usage.

### Implementing Sparse Matrix-Dense Vector Multiplication

One challenge in implementing sparse matrix-dense vector multiplication on the accelerator implementations described herein is matching the vector elements being streamed from memory to the indices of the matrix elements in each dot-product engine's buffers. In one implementation, 256 bytes (32-64 elements) of the vector arrive at the dot-product engine per cycle, and each vector element could correspond to any of the non-zeroes in the dot-product engine's matrix buffer since fixed-size blocks of matrix data were fetched into each dot-product engine's matrix buffer.

Performing that many comparisons each cycle would be prohibitively expensive in area and power. Instead, one implementation takes advantage of the fact that many sparse-matrix applications repeatedly multiply the same matrix by either the same or different vectors and pre-compute the elements of the fetch list that each dot-product engine will need to process its chunk of the matrix, using the format shown in **Figure 26****.** In the baseline CRS format, a matrix is described by an array of indices 2602 that define the position of each non-zero value within its row, an array containing the values of each non-zero 2603, and an array 2601 that indicates where each row starts in the index and values arrays. To that, one implementation adds an array of block descriptors 2605 that identify which bursts of vector data each dot-product engine needs to capture in order to perform its fraction of the overall computation.

As shown in **Figure 26****,** each block descriptor consists of eight 16-bit values and a list of burst descriptors. The first 16-bit value tells the hardware how many burst descriptors are in the block descriptor, while the remaining seven identify the start points within the burst descriptor list for all of the stack DRAM data channels except the first. The number of these values will change depending on the number of data channels the stacked DRAM provides. Each burst descriptor contains a 24-bit burst count that tells the hardware which burst of data it needs to pay attention to and a "Words Needed" bit-vector that identifies the words within the burst that contain values the dot-processing engine needs.

The other data structure included in one implementation is an array of matrix buffer indices (MBIs) 2604, one MBI per non-zero in the matrix. Each MBI gives the position at which the dense vector element that corresponds to the non-zero will be stored in the relevant dot-product engine's vector value buffer (see, e.g., **Figure 28**). When performing a sparse matrix-dense vector multiplication, the matrix buffer indices, rather than the original matrix indices, are loaded into the dot-product engine's matrix index buffer 2604, and serve as the address used to look up the corresponding vector value when computing the dot product.

**Figure 27** illustrates how this works for a two-row matrix that fits within the buffers of a single dot-product engine, on a system with only one stacked DRAM data channel and four-word data bursts. The original CRS representation including row start values 2701, matrix indices 2702 and matrix values 2703 are shown on the left of the figure. Since the two rows have non-zero elements in columns {2, 5, 6} and {2, 4, 5}, elements 2, 4, 5, and 6 of the vector are required to compute the dot-products. The block descriptors reflect this, indicating that word 2 of the first four-word burst (element 2 of the vector) and words 0, 1, and 2 of the second four-word burst (elements 4-6 of the vector) are required. Since element 2 of the vector is the first word of the vector that the dot-product engine needs, it will go in location 0 in the vector value buffer. Element 4 of the vector will go in location 1, and so on.

The matrix buffer index array data 2704 holds the location within the vector value buffer where the hardware will find the value that corresponds to the non-zero in the matrix. Since the first entry in the matrix indices array has value "2", the first entry in the matrix buffer indices array gets the value "0", corresponding to the location where element 2 of the vector will be stored in the vector value buffer. Similarly, wherever a "4" appears in the matrix indices array, a "1" will appear in the matrix buffer indices, each "5" in the matrix indices array will have a corresponding "2" in the matrix buffer indices, and each "6" in the matrix indices array will correspond to a "3" in the matrix buffer indices.

One implementation of the invention performs the pre-computations required to support fast gathers out of dense vectors when a matrix is loaded onto the accelerator, taking advantage of the fact that the total bandwidth of a multi-stack accelerator is much greater than the bandwidth of the KTI links used to transfer data from the CPU to the accelerator. This pre-computed information increases the amount of memory required to hold a matrix by up to 75%, depending on how often multiple copies of the same matrix index occur within the chunk of the matrix mapped onto a dot-product engine. However, because the 16-bit matrix buffer indices array is fetched instead of the matrix indices array when a matrix-vector multiplication is performed, the amount of data fetched out of the stack DRAMs will often be less than in the original CRS representation, particularly for matrices that use 64-bit indices.

**Figure 28** illustrates one implementation of the hardware in a dot-product engine that uses this format. To perform a matrix-vector multiplication, the chunks of the matrix that make up a block are copied into the matrix index buffer 3003 and matrix value buffer 3005 (copying the matrix buffer indices instead of the original matrix indices), and the relevant block descriptor is copied into the block descriptor buffer 3002. Then, the fetch list is used to load the required elements from the dense vector and broadcast them to the dot-product engines. Each dot-product engine counts the number of bursts of vector data that go by on each data channel. When the count on a given data channel matches the value specified in a burst descriptor, the match logic 3020 captures the specified words and stores them in its vector value buffer 3004.

**Figure 29** shows the contents of the match logic 3020 unit that does this capturing. A latch 3105 captures the value on the data channel's wires when the counter matches the value in the burst descriptor. A shifter 3106 extracts the required words 3102 out of the burst 3101 and routes them to the right location in a line buffer 3107 whose size matches the rows in the vector value buffer. A load signal is generated when the burst count 3101 is equal to an internal counter 3104. When the line buffer fills up, it is stored in the vector value buffer 3004 (through mux 3108). Assembling the words from multiple bursts into lines in this way reduces the number of writes/cycle that the vector value buffer needs to support, reducing its size.

Once all of the required elements of the vector have been captured in the vector value buffer, the dot-product engine computes the required dot-product(s) using the ALUs 3010. The control logic 3001 steps through the matrix index buffer 3003 and matrix value buffer 3004 in sequence, one element per cycle. The output of the matrix index buffer 3003 is used as the read address for the vector value buffer 3004 on the next cycle, while the output of the matrix value buffer 3004 is latched so that it reaches the ALUs 3010 at the same time as the corresponding value from the vector value buffer 3004. For example, using the matrix from **Figure 27****,** on the first cycle of the dot-product computation, the hardware would read the matrix buffer index "0" out of the matrix index buffer 3003 along with the value "13" from the matrix value buffer 3005. On the second cycle, the value "0" from the matrix index buffer 3003 acts as the address for the vector value buffer 3004, fetching the value of vector element "2", which is then multiplied by "13" on cycle 3.

The values in the row starts bit-vector 2901 tell the hardware when a row of the matrix ends and a new one begins. When the hardware reaches the end of the row, it places the accumulated dot-product for the row in its output latch 3011 and begins accumulating the dot-product for the next row. The dot-product latches of each dot-product engine are connected in a daisy chain that assembles the output vector for writeback.

### Implementing Sparse Matrix-Sparse Vector Multiplication

In sparse matrix-sparse vector multiplication, the vector tends to take up much less memory than in sparse matrix-dense vector multiplication, but, because it is sparse, it is not possible to directly fetch the vector element that corresponds to a given index. Instead, the vector must be searched, making it impractical to route only the elements that each dot-product engine needs to the dot-product engine and making the amount of time required to compute the dot-products of the matrix data assigned to each dot-product engine unpredictable. Because of this, the fetch list for a sparse matrix-sparse vector multiplication merely specifies the index of the lowest and highest non-zero elements in the matrix block and all of the non-zero elements of the vector between those points must be broadcast to the dot-product engines.

**Figure 30** shows the details of a dot-product engine design to support sparse matrix-sparse vector multiplication. To process a block of matrix data, the indices (not the matrix buffer indices used in a sparse-dense multiplication) and values of the dot-product engine's chunk of the matrix are written into the matrix index and value buffers, as are the indices and values of the region of the vector required to process the block. The dot-product engine control logic 3040 then sequences through the index buffers 3002-3003, which output blocks of four indices to the 4x4 comparator 3020. The 4x4 comparator 3020 compares each of the indices from the vector 3002 to each of the indices from the matrix 3003, and outputs the buffer addresses of any matches into the matched index queue 3030. The outputs of the matched index queue 3030 drive the read address inputs of the matrix value buffer 3005 and vector value buffer 3004, which output the values corresponding to the matches into the multiply-add ALU 3010. This hardware allows the dot-product engine to consume at least four and as many as eight indices per cycle as long as the matched index queue 3030 has empty space, reducing the amount of time required to process a block of data when index matches are rare.

As with the sparse matrix-dense vector dot-product engine, a bit-vector of row starts 3001 identifies entries in the matrix buffers 3092-3003 that start a new row of the matrix. When such an entry is encountered, the control logic 3040 resets to the beginning of the vector index buffer 3002 and starts examining vector indices from their lowest value, comparing them to the outputs of the matrix index buffer 3003. Similarly, if the end of the vector is reached, the control logic 3040 advances to the beginning of the next row in the matrix index buffer 3003 and resets to the beginning of the vector index buffer 3002. A "done" output informs the chip control unit when the dot-product engine has finished processing a block of data or a region of the vector and is ready to proceed to the next one. To simplify one implementation of the accelerator, the control logic 3040 will not proceed to the next block/region until all of the dot-product engines have finished processing.

In many cases, the vector buffers will be large enough to hold all of the sparse vector that is required to process the block. In one implementation, buffer space for 1,024 or 2,048 vector elements is provided, depending on whether 32- or 64-bit values are used.

When the required elements of the vector do not fit in the vector buffers, a multipass approach may be used. The control logic 3040 will broadcast a full buffer of the vector into each dot-product engine, which will begin iterating through the rows in its matrix buffers. When the dot-product engine reaches the end of the vector buffer before reaching the end of the row, it will set a bit in the current row position bit-vector 3011 to indicate where it should resume processing the row when the next region of the vector arrives, will save the partial dot-product it has accumulated in the location of the matrix values buffer 3005 corresponding to the start of the row unless the start of the row has a higher index value than any of the vector indices that have been processed so far, and will advance to the next row. After all of the rows in the matrix buffer have been processed, the dot-product engine will assert its done signal to request the next region of the vector, and will repeat the process until the entire vector has been read.

**Figure 31** illustrates an example using specific values. At the start of the computation 3101, a four-element chunk of the matrix has been written into the matrix buffers 3003, 3005, and a four-element region of the vector has been written into the vector buffers 3002, 3004. The row starts 3001 and current row position bit-vectors 3011 both have the value "1010," indicating that the dot-product engine's chunk of the matrix contains two rows, one of which starts at the first element in the matrix buffer, and one of which starts at the third.

When the first region is processed, the first row in the chunk sees an index match at index 3, computes the product of the corresponding elements of the matrix and vector buffers (4 × 1 = 4) and writes that value into the location of the matrix value buffer 3005 that corresponds to the start of the row. The second row sees one index match at index 1, computes the product of the corresponding elements of the vector and matrix, and writes the result (6) into the matrix value buffer 3005 at the position corresponding to its start. The state of the current row position bit-vector changes to "0101," indicating that the first element of each row has been processed and the computation should resume with the second elements. The dot-product engine then asserts its done line to signal that it is ready for another region of the vector.

When the dot-product engine processes the second region of the vector, it sees that row 1 has an index match at index 4, computes the product of the corresponding values of the matrix and vector (5 × 2 = 10), adds that value to the partial dot-product that was saved after the first vector region was processed, and outputs the result (14). The second row finds a match at index 7, and outputs the result 38, as shown in the figure. Saving the partial dot-products and state of the computation in this way avoids redundant work processing elements of the matrix that cannot possibly match indices in later regions of the vector (because the vector is sorted with indices in ascending order), without requiring significant amounts of extra storage for partial products.

### Unified Dot-Product Engine Design

**Figure 32** shows how the sparse-dense and sparse-sparse dot-product engines described above are combined to yield a dot-product engine that can handle both types of computations. Given the similarity between the two designs, the only required changes are to instantiate both the sparse-dense dot-product engine's match logic 3211 and the sparse-sparse dot-product engine's comparator 3220 and matched index queue 3230, along with a set of multiplexors 3250 that determine which modules drive the read address and write data inputs of the buffers 3004-3005 and a multiplexor 3251 that selects whether the output of the matrix value buffer or the latched output of the matrix value buffer is sent to the multiply-add ALUs 3010. In one implementation, these multiplexors are controlled by a configuration bit in the control unit 3040 that is set at the beginning of a matrix-vector multiplication and remain in the same configuration throughout the operation.

### Instruction Sets

An instruction set may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down though the definition of instruction templates (or subformats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an Instruction Set Architecture (ISA) is expressed using a given instruction format (and, if defined, in a given one of the instruction templates of that instruction format) and includes fields for specifying the operation and the operands. For example, an exemplary ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands. A set of Single Instruction Multiple Data (SIMD) extensions referred to as the Advanced Vector Extensions (AVX) (AVX1 and AVX2) and using the Vector Extensions (VEX) coding scheme has been released and/or published (e.g., see Intel® 64 and IA-32 Architectures Software Developer's Manual, September 2014; and see Intel® Advanced Vector Extensions Programming Reference, October 2014).

Implementations of the instruction(s) described herein may be embodied in different formats. Additionally, exemplary systems, architectures, and pipelines are detailed below. Embodiments of the instruction(s) may be executed on such systems, architectures, and pipelines, but are not limited to those detailed.

### Exemplary Register Architecture

**Figure 33** is a block diagram of a register architecture 3300 according to one implementation of the invention. In the implementation illustrated, there are 32 vector registers 3310 that are 512 bits wide; these registers are referenced as zmm0 through zmm31. The lower order 256 bits of the lower 16 zmm registers are overlaid on registers ymm0-16. The lower order 128 bits of the lower 16 zmm registers (the lower order 128 bits of the ymm registers) are overlaid on registers xmm0-15.

Write mask registers 3315 - in the implementation illustrated, there are 8 write mask registers (k0 through k7), each 64 bits in size. In an alternate implementation, the write mask registers 3315 are 16 bits in size. In one implementation of the invention, the vector mask register k0 cannot be used as a write mask; when the encoding that would normally indicate k0 is used for a write mask, it selects a hardwired write mask of 0xFFFF, effectively disabling write masking for that instruction.

General-purpose registers 3325 - in the implementation illustrated, there are sixteen 64-bit general-purpose registers that are used along with the existing x86 addressing modes to address memory operands. These registers are referenced by the names RAX, RBX, RCX, RDX, RBP, RSI, RDI, RSP, and R8 through R15.

Scalar floating point stack register file (x87 stack) 3345, on which is aliased the MMX packed integer flat register file 3350 - in the implementation illustrated, the x87 stack is an eight-element stack used to perform scalar floating-point operations on 32/64/80-bit floating point data using the x87 instruction set extension; while the MMX registers are used to perform operations on 64-bit packed integer data, as well as to hold operands for some operations performed between the MMX and XMM registers.

Alternative embodiments of the implementation may use wider or narrower registers. Additionally, alternative implementation of the invention may use more, less, or different register files and registers.

### Exemplary Core Architectures, Processors, and Computer Architectures

Processor cores may be implemented in different ways, for different purposes, and in different processors. For instance, implementations of such cores may include: 1) a general purpose in-order core intended for general-purpose computing; 2) a high performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die the described CPU (sometimes referred to as the application core(s) or application processor(s)), the above described coprocessor, and additional functionality. Exemplary core architectures are described next, followed by descriptions of exemplary processors and computer architectures.

### Exemplary Core Architectures

### In-order and out-of-order core block diagram

**Figure 34A** is a block diagram illustrating both an exemplary in-order pipeline and an exemplary register renaming, out-of-order issue/execution pipeline according to embodiments of the invention. **Figure 34B** is a block diagram illustrating both an exemplary embodiment of an in-order architecture core and an exemplary register renaming, out-of-order issue/execution architecture core to be included in a processor according to embodiments of the invention. Thesolid lined boxes in **Figures 34A-B** illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In **Figure 34A****,** a processor pipeline 3400 includes a fetch stage 3402, a length decode stage 3404, a decode stage 3406, an allocation stage 3408, a renaming stage 3410, a scheduling (also known as a dispatch or issue) stage 3412, a register read/memory read stage 3414, an execute stage 3416, a write back/memory write stage 3418, an exception handling stage 3422, and a commit stage 3424.

**Figure 34B** shows processor core 3490 including a front end unit 3430 coupled to an execution engine unit 3450, and both are coupled to a memory unit 3470. The core 3490 may be a reduced instruction set computing (RISC) core, a complex instruction set computing (CISC) core, a very long instruction word (VLIW) core, or a hybrid or alternative core type. As yet another option, the core 3490 may be a special-purpose core, such as, for example, a network or communication core, compression engine, coprocessor core, general purpose computing graphics processing unit (GPGPU) core, graphics core, or the like.

The front end unit 3430 includes a branch prediction unit 3432 coupled to an instruction cache unit 3434, which is coupled to an instruction translation lookaside buffer (TLB) 3436, which is coupled to an instruction fetch unit 3438, which is coupled to a decode unit 3440. The decode unit 3440 (or decoder) may decode instructions, and generate as an output one or more micro-operations, micro-code entry points, microinstructions, other instructions, or other control signals, which are decoded from, or which otherwise reflect, or are derived from, the original instructions. The decode unit 3440 may be implemented using various different mechanisms. Examples of suitable mechanisms include, but are not limited to, look-up tables, hardware implementations, programmable logic arrays (PLAs), microcode read only memories (ROMs), etc. In one embodiment, the core 3490 includes a microcode ROM or other medium that stores microcode for certain macroinstructions (e.g., in decode unit 3440 or otherwise within the front end unit 3430). The decode unit 3440 is coupled to a rename/allocator unit 3452 in the execution engine unit 3450.

The execution engine unit 3450 includes the rename/allocator unit 3452 coupled to a retirement unit 3454 and a set of one or more scheduler unit(s) 3456. The scheduler unit(s) 3456 represents any number of different schedulers, including reservations stations, central instruction window, etc. The scheduler unit(s) 3456 is coupled to the physical register file(s) unit(s) 3458. Each of the physical register file(s) units 3458 represents one or more physical register files, different ones of which store one or more different data types, such as scalar integer, scalar floating point, packed integer, packed floating point, vector integer, vector floating point, status (e.g., an instruction pointer that is the address of the next instruction to be executed), etc. In one embodiment, the physical register file(s) unit 3458 comprises a vector registers unit, a write mask registers unit, and a scalar registers unit. These register units may provide architectural vector registers, vector mask registers, and general purpose registers. The physical register file(s) unit(s) 3458 is overlapped by the retirement unit 3454 to illustrate various ways in which register renaming and out-of-order execution may be implemented (e.g., using a reorder buffer(s) and a retirement register file(s); using a future file(s), a history buffer(s), and a retirement register file(s); using a register maps and a pool of registers; etc.). The retirement unit 3454 and the physical register file(s) unit(s) 3458 are coupled to the execution cluster(s) 3460. The execution cluster(s) 3460 includes a set of one or more execution units 3462 and a set of one or more memory access units 3464. The execution units 3462 may perform various operations (e.g., shifts, addition, subtraction, multiplication) and on various types of data (e.g., scalar floating point, packed integer, packed floating point, vector integer, vector floating point). While some embodiments may include a number of execution units dedicated to specific functions or sets of functions, other embodiments may include only one execution unit or multiple execution units that all perform all functions. The scheduler unit(s) 3456, physical register file(s) unit(s) 3458, and execution cluster(s) 3460 are shown as being possibly plural because certain embodiments create separate pipelines for certain types of data/operations (e.g., a scalar integer pipeline, a scalar floating point/packed integer/packed floating point/vector integer/vector floating point pipeline, and/or a memory access pipeline that each have their own scheduler unit, physical register file(s) unit, and/or execution cluster - and in the case of a separate memory access pipeline, certain embodiments are implemented in which only the execution cluster of this pipeline has the memory access unit(s) 3464). It should also be understood that where separate pipelines are used, one or more of these pipelines may be out-of-order issue/execution and the rest in-order.

The set of memory access units 3464 is coupled to the memory unit 3470, which includes a data TLB unit 3472 coupled to a data cache unit 3474 coupled to a level 2 (L2) cache unit 3476. In one exemplary embodiment, the memory access units 3464 may include a load unit, a store address unit, and a store data unit, each of which is coupled to the data TLB unit 3472 in the memory unit 3470. The instruction cache unit 3434 is further coupled to a level 2 (L2) cache unit 3476 in the memory unit 3470. The L2 cache unit 3476 is coupled to one or more other levels of cache and eventually to a main memory.

By way of example, the exemplary register renaming, out-of-order issue/execution core architecture may implement the pipeline 3400 as follows: 1) the instruction fetch unit 3438 performs the fetch and length decoding stages 3402 and 3404; 2) the decode unit 3440 performs the decode stage 3406; 3) the rename/allocator unit 3452 performs the allocation stage 3408 and renaming stage 3410; 4) the scheduler unit(s) 3456 performs the schedule stage 3412; 5) the physical register file(s) unit(s) 3458 and the memory unit 3470 perform the register read/memory read stage 3414; the execution cluster 3460 perform the execute stage 3416; 6) the memory unit 3470 and the physical register file(s) unit(s) 3458 perform the write back/memory write stage 3418; 7) various units may be involved in the exception handling stage 3422; and 8) the retirement unit 3454 and the physical register file(s) unit(s) 3458 perform the commit stage 3424.

The core 3490 may support one or more instructions sets (e.g., the x86 instruction set (with some extensions that have been added with newer versions); the MIPS instruction set of MIPS Technologies of Sunnyvale, CA; the ARM instruction set (with optional additional extensions such as NEON) of ARM Holdings of Sunnyvale, CA), including the instruction(s) described herein. In one embodiment, the core 3490 includes logic to support a packed data instruction set extension (e.g., AVX1, AVX2), thereby allowing the operations used by many multimedia applications to be performed using packed data.

It should be understood that the core may support multithreading (executing two or more parallel sets of operations or threads), and may do so in a variety of ways including time sliced multithreading, simultaneous multithreading (where a single physical core provides a logical core for each of the threads that physical core is simultaneously multithreading), or a combination thereof (e.g., time sliced fetching and decoding and simultaneous multithreading thereafter such as in the Intel® Hyperthreading technology).

While register renaming is described in the context of out-of-order execution, it should be understood that register renaming may be used in an in-order architecture. While the illustrated embodiment of the processor also includes separate instruction and data cache units 3434/3474 and a shared L2 cache unit 3476, alternative embodiments may have a single internal cache for both instructions and data, such as, for example, a Level 1 (L1) internal cache, or multiple levels of internal cache. In some embodiments, the system may include a combination of an internal cache and an external cache that is external to the core and/or the processor. Alternatively, all of the cache may be external to the core and/or the processor.

### Specific Exemplary In-Order Core Architecture

**Figures 35A-B** illustrate a block diagram of a more specific exemplary in-order core architecture, which core would be one of several logic blocks (including other cores of the same type and/or different types) in a chip. The logic blocks communicate through a high-bandwidth interconnect network (e.g., a ring network) with some fixed function logic, memory I/O interfaces, and other necessary I/O logic, depending on the application.

**Figure 35A** is a block diagram of a single processor core, along with its connection to the on-die interconnect network 3502 and with its local subset of the Level 2 (L2) cache 3504, according to embodiments of the invention. In one embodiment, an instruction decoder 3500 supports the x86 instruction set with a packed data instruction set extension. An L1 cache 3506 allows low-latency accesses to cache memory into the scalar and vector units. While in one embodiment (to simplify the design), a scalar unit 3508 and a vector unit 3510 use separate register sets (respectively, scalar registers 3512 and vector registers 3514) and data transferred between them is written to memory and then read back in from a level 1 (L1) cache 3506, alternative embodiments of the invention may use a different approach (e.g., use a single register set or include a communication path that allow data to be transferred between the two register files without being written and read back).

The local subset of the L2 cache 3504 is part of a global L2 cache that is divided into separate local subsets, one per processor core. Each processor core has a direct access path to its own local subset of the L2 cache 3504. Data read by a processor core is stored in its L2 cache subset 3504 and can be accessed quickly, in parallel with other processor cores accessing their own local L2 cache subsets. Data written by a processor core is stored in its own L2 cache subset 3504 and is flushed from other subsets, if necessary. The ring network ensures coherency for shared data. The ring network is bi-directional to allow agents such as processor cores, L2 caches and other logic blocks to communicate with each other within the chip. Each ring data-path is 1012-bits wide per direction.

**Figure 35B** is an expanded view of part of the processor core in **Figure 35A** according to embodiments of the invention. **Figure 35B** includes an L1 data cache 3506A part of the L1 cache 3504, as well as more detail regarding the vector unit 3510 and the vector registers 3514. Specifically, the vector unit 3510 is a 16-wide vector processing unit (VPU) (see the 16-wide ALU 3528), which executes one or more of integer, single-precision float, and double-precision float instructions. The VPU supports swizzling the register inputs with swizzle unit 3520, numeric conversion with numeric convert units 3522A-B, and replication with replication unit 3524 on the memory input. Write mask registers 3526 allow predicating resulting vector writes.

**Figure 36** is a block diagram of a processor 3600 that may have more than one core, may have an integrated memory controller, and may have integrated graphics according to embodiments of the invention. The solid lined boxes in **Figure 36** illustrate a processor 3600 with a single core 3602A, a system agent 3610, a set of one or more bus controller units 3616, while the optional addition of the dashed lined boxes illustrates an alternative processor 3600 with multiple cores 3602A-N, a set of one or more integrated memory controller unit(s) 3614 in the system agent unit 3610, and special purpose logic 3608.

Thus, different implementations of the processor 3600 may include: 1) a CPU with the special purpose logic 3608 being integrated graphics and/or scientific (throughput) logic (which may include one or more cores), and the cores 3602A-N being one or more general purpose cores (e.g., general purpose in-order cores, general purpose out-of-order cores, a combination of the two); 2) a coprocessor with the cores 3602A-N being a large number of special purpose cores intended primarily for graphics and/or scientific (throughput); and 3) a coprocessor with the cores 3602A-N being a large number of general purpose in-order cores. Thus, the processor 3600 may be a general-purpose processor, coprocessor or special-purpose processor, such as, for example, a network or communication processor, compression engine, graphics processor, GPGPU (general purpose graphics processing unit), a high-throughput many integrated core (MIC) coprocessor (including 30 or more cores), embedded processor, or the like. The processor may be implemented on one or more chips. The processor 3600 may be a part of and/or may be implemented on one or more substrates using any of a number of process technologies, such as, for example, BiCMOS, Complementary Metal-Oxide Semiconductor (CMOS), or Negative-Channel Metal-Oxide Semiconductor (NMOS).

The memory hierarchy includes one or more levels of cache within the cores, a set or one or more shared cache units 3606, and external memory (not shown) coupled to the set of integrated memory controller units 3614. The set of shared cache units 3606 may include one or more mid-level caches, such as level 2 (L2), level 3 (L3), level 4 (L4), or other levels of cache, a last level cache (LLC), and/or combinations thereof. While in one embodiment a ring based interconnect unit 3612 interconnects the special purpose logic 3608 (e.g., integrated graphics logic), the set of shared cache units 3606, and the system agent unit 3610/integrated memory controller unit(s) 3614, alternative embodiments may use any number of well-known techniques for interconnecting such units. In one embodiment, coherency is maintained between one or more cache units 3606 and cores 3602-A-N.

In some implementation, one or more of the cores 3602A-N are capable of multithreading. The system agent 3610 includes those components coordinating and operating cores 3602A-N. The system agent unit 3610 may include for example a power control unit (PCU) and a display unit. The PCU may be or include logic and components needed for regulating the power state of the cores 3602A-N and the integrated graphics logic 3608. The display unit is for driving one or more externally connected displays.

The cores 3602A-N may be homogenous or heterogeneous in terms of architecture instruction set; that is, two or more of the cores 3602A-N may be capable of execution the same instruction set, while others may be capable of executing only a subset of that instruction set or a different instruction set.

### Exemplary Computer Architectures

**Figures 37-40** are block diagrams of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

Referring now to **Figure 37**, shown is a block diagram of a system 3700 in accordance with one embodiment of the present invention. The system 3700 may include one or more processors 3710, 3715, which are coupled to a controller hub 3720. In one embodiment, the controller hub 3720 includes a graphics memory controller hub (GMCH) 3790 and an Input/Output Hub (IOH) 3750 (which may be on separate chips); the GMCH 3790 includes memory and graphics controllers to which are coupled memory 3740 and a coprocessor 3745; the IOH 3750 couples input/output (I/O) devices 3760 to the GMCH 3790. Alternatively, one or both of the memory and graphics controllers are integrated within the processor (as described herein), the memory 3740 and the coprocessor 3745 are coupled directly to the processor 3710, and the controller hub 3720 in a single chip with the IOH 3750.

The optional nature of additional processors 3715 is denoted in **Figure 37** with broken lines. Each processor 3710, 3715 may include one or more of the processing cores described herein and may be some version of the processor 3600.

The memory 3740 may be, for example, dynamic random access memory (DRAM), phase change memory (PCM), or a combination of the two. For at least one implementation the controller hub 3720 communicates with the processor(s) 3710, 3715 via a multi-drop bus, such as a frontside bus (FSB), point-to-point interface such as QuickPath Interconnect (QPI), or similar connection 3795.

In one implementation, the coprocessor 3745 is a special-purpose processor, such as, for example, a high-throughput MIC processor, a network or communication processor, compression engine, graphics processor, GPGPU, embedded processor, or the like. In one embodiment, controller hub 3720 may include an integrated graphics accelerator.

There can be a variety of differences between the physical resources (e.g., processors 3710, 3715) in terms of a spectrum of metrics of merit including architectural, microarchitectural, thermal, power consumption characteristics, and the like.

In one implementation, the processor 3710 executes instructions that control data processing operations of a general type. Embedded within the instructions may be coprocessor instructions. The processor 3710 recognizes these coprocessor instructions as being of a type that should be executed by the attached coprocessor 3745. Accordingly, the processor 3710 issues these coprocessor instructions (or control signals representing coprocessor instructions) on a coprocessor bus or other interconnect, to coprocessor 3745. Coprocessor(s) 3745 accept and execute the received coprocessor instructions.

Referring now to **Figure 38**, shown is a block diagram of a first more specific exemplary system 3800 in accordance with an embodiment of the present invention. As shown in **Figure 38**, multiprocessor system 3800 is a point-to-point interconnect system, and includes a first processor 3870 and a second processor 3880 coupled via a point-to-point interconnect 3850. Each of processors 3870 and 3880 may be some version of the processor 3600. In one embodiment of the invention, processors 3870 and 3880 are respectively processors 3710 and 3715, while coprocessor 3838 is coprocessor 3745. In another embodiment, processors 3870 and 3880 are respectively processor 3710 coprocessor 3745.

Processors 3870 and 3880 are shown including integrated memory controller (IMC) units 3872 and 3882, respectively. Processor 3870 also includes as part of its bus controller units point-to-point (P-P) interfaces 3876 and 3878; similarly, second processor 3880 includes P-P interfaces 3886 and 3888. Processors 3870, 3880 may exchange information via a point-to-point (P-P) interface 3850 using P-P interface circuits 3878, 3888. As shown in **Figure 38**, IMCs 3872 and 3882 couple the processors to respective memories, namely a memory 3832 and a memory 3834, which may be portions of main memory locally attached to the respective processors.

Processors 3870, 3880 may each exchange information with a chipset 3890 via individual P-P interfaces 3852, 3854 using point to point interface circuits 3876, 3894, 3886, 3898. Chipset 3890 may optionally exchange information with the coprocessor 3838 via a high-performance interface 3892. In one embodiment, the coprocessor 3838 is a special-purpose processor, such as, for example, a high-throughput MIC processor, a network or communication processor, compression engine, graphics processor, GPGPU, embedded processor, or the like.

A shared cache (not shown) may be included in either processor or outside of both processors, yet connected with the processors via P-P interconnect, such that either or both processors' local cache information may be stored in the shared cache if a processor is placed into a low power mode.

Chipset 3890 may be coupled to a first bus 3816 via an interface 3896. In one embodiment, first bus 3816 may be a Peripheral Component Interconnect (PCI) bus, or a bus such as a PCI Express bus or another third generation I/O interconnect bus, although the scope of the present invention is not so limited.

As shown in **Figure 38**, various I/O devices 3814 may be coupled to first bus 3816, along with a bus bridge 3818 which couples first bus 3816 to a second bus 3820. In one implementation, one or more additional processor(s) 3815, such as coprocessors, high-throughput MIC processors, GPGPU's, accelerators (such as, e.g., graphics accelerators or digital signal processing (DSP) units), field programmable gate arrays, or any other processor, are coupled to first bus 3816. In one implementation, second bus 3820 may be a low pin count (LPC) bus. Various devices may be coupled to a second bus 3820 including, for example, a keyboard and/or mouse 3822, communication devices 3827 and a storage unit 3828 such as a disk drive or other mass storage device which may include instructions/code and data 3830, in one implementation. Further, an audio I/O 3824 may be coupled to the second bus 3820. Note that other architectures are possible. For example, instead of the point-to-point architecture of **Figure 38**, a system may implement a multi-drop bus or other such architecture.

Referring now to **Figure 39**, shown is a block diagram of a second more specific exemplary system 3900 in accordance with an implementation of the present invention. Like elements in **Figures 38** **and** **39** bear like reference numerals, and certain aspects of **Figure 38** have been omitted from **Figure 39** in order to avoid obscuring other aspects of **Figure 39****.**

**Figure 39** illustrates that the processors 3870, 3880 may include integrated memory and I/O control logic ("CL") 3872 and 3882, respectively. Thus, the CL 3872, 3882 include integrated memory controller units and include I/O control logic. **Figure 39** illustrates that not only are the memories 3832, 3834 coupled to the CL 3872, 3882, but also that I/O devices 3914 are also coupled to the control logic 3872, 3882. Legacy I/O devices 3915 are coupled to the chipset 3890.

Referring now to **Figure 40****,** shown is a block diagram of a SoC 4000 in accordance with an implementation of the present invention. Similar elements in **Figure 36** bear like reference numerals. Also, dashed lined boxes are optional features on more advanced SoCs. In **Figure 40****,** an interconnect unit(s) 4002 is coupled to: an application processor 4010 which includes a set of one or more cores 3602A-N, which include cache units 3604A-N, and shared cache unit(s) 3606; a system agent unit 3610; a bus controller unit(s) 3616; an integrated memory controller unit(s) 3614; a set or one or more coprocessors 4020 which may include integrated graphics logic, an image processor, an audio processor, and a video processor; an static random access memory (SRAM) unit 4030; a direct memory access (DMA) unit 4032; and a display unit 4040 for coupling to one or more external displays. In one implementation, the coprocessor(s) 4020 include a special-purpose processor, such as, for example, a network or communication processor, compression engine, GPGPU, a high-throughput MIC processor, embedded processor, or the like.

Examples of the mechanisms disclosed herein may be implemented in hardware, software, firmware, or a combination of such implementation approaches. Implementations of the invention may be implemented as computer programs or program code executing on programmable systems comprising at least one processor, a storage system (including volatile and non-volatile memory and/or storage elements), at least one input device, and at least one output device.

Program code, such as code 3830 illustrated in **Figure 38**, may be applied to input instructions to perform the functions described herein and generate output information. The output information may be applied to one or more output devices, in known fashion. For purposes of this application, a processing system includes any system that has a processor, such as, for example; a digital signal processor (DSP), a microcontroller, an application specific integrated circuit (ASIC), or a microprocessor.

The program code may be implemented in a high level procedural or object oriented programming language to communicate with a processing system. The program code may also be implemented in assembly or machine language, if desired. In fact, the mechanisms described herein are not limited in scope to any particular programming language. In any case, the language may be a compiled or interpreted language.

One or more aspects of at least one implementation may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritable's (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, implementations of the invention also include non-transitory, tangible machine-readable media containing instructions or containing design data, such as Hardware Description Language (HDL), which defines structures, circuits, apparatuses, processors and/or system features described herein. Such implementations may also be referred to as program products.

### Emulation (including binary translation, code morphing, etc.)

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

Figure 41 is a block diagram contrasting the use of a software instruction converter to convert binary instructions in a source instruction set to binary instructions in a target instruction set according to implementations of the invention. In the illustrated implementation, the instruction converter is a software instruction converter, although alternatively the instruction converter may be implemented in software, firmware, hardware, or various combinations thereof. **Figure 41** shows a program in a high level language 4102 may be compiled using an x86 compiler 4104 to generate x86 binary code 4106 that may be natively executed by a processor with at least one x86 instruction set core 4116. The processor with at least one x86 instruction set core 4116 represents any processor that can perform substantially the same functions as an Intel® processor with at least one x86 instruction set core by compatibly executing or otherwise processing (1) a substantial portion of the instruction set of the Intel® x86 instruction set core or (2) object code versions of applications or other software targeted to run on an Intel® processor with at least one x86 instruction set core, in order to achieve substantially the same result as an Intel® processor with at least one x86 instruction set core. The x86 compiler 4104 represents a compiler that is operable to generate x86 binary code 4106 (e.g., object code) that can, with or without additional linkage processing, be executed on the processor with at least one x86 instruction set core 4116. Similarly, **Figure 41** shows the program in the high level language 4102 may be compiled using an alternative instruction set compiler 4108 to generate alternative instruction set binary code 4110 that may be natively executed by a processor without at least one x86 instruction set core 4114 (e.g., a processor with cores that execute the MIPS instruction set of MIPS Technologies of Sunnyvale, CA and/or that execute the ARM instruction set of ARM Holdings of Sunnyvale, CA). The instruction converter 4112 is used to convert the x86 binary code 4106 into code that may be natively executed by the processor without an x86 instruction set core 4114. This converted code is not likely to be the same as the alternative instruction set binary code 4110 because an instruction converter capable of this is difficult to make; however, the converted code will accomplish the general operation and be made up of instructions from the alternative instruction set. Thus, the instruction converter 4112 represents software, firmware, hardware, or a combination thereof that, through emulation, simulation or any other process, allows a processor or other electronic device that does not have an x86 instruction set processor or core to execute the x86 binary code 4106.

Though the flow diagrams in the figures show a particular order of operations performed by certain embodiments, it should be understood that such order is exemplary. Thus, alternative implementations may perform the operations in a different order, combine certain operations, overlap certain operations, etc.

## Claims

1. A hardware accelerator (502) comprising:
one or more sparse tiles (112A-112N) configured to execute a first set of operations for a k-means clustering task involving a matrix, each of the sparse tiles (112A-112N) comprising a first plurality of processing units (506A-506Z) configured to operate upon a first plurality of sparse blocks of the matrix that have been streamed to one or more random access memories (508) of the one or more sparse tiles (112A-112N) over a high bandwidth interface (120) from a first memory unit (116A-116M); and
one or more very/hyper sparse tiles (114A-114N) configured to execute a second set of operations for the k-means clustering task involving the matrix, each of the very/hyper sparse tiles (114A-114N) comprising a second plurality of processing units (506A-506Z) configured to operate upon a second plurality of very/hyper sparse blocks of the matrix,
**characterized in that** said very/hyper sparse blocks of the matrix have been randomly accessed over a low-latency interface (122) from a second off-tile memory unit (118A-118M) adapted for low latency, parallel, short, irregular accesses.

2. The hardware accelerator (502) of claim 1, further comprising a control unit (560) configured to:
determine that the k-means clustering task involving the matrix is to be performed; and
partition the matrix into the first plurality of sparse blocks and the second plurality of very/hyper sparse blocks, wherein the first plurality of sparse blocks includes one or more sections of the matrix that are sparse, and wherein the second plurality of very/hyper sparse blocks includes another one or more sections of the data that are very-sparse or hyper-sparse.

3. The hardware accelerator (502) of claim 2, wherein the control unit (560) is further configured to:
cause the one or more sparse tiles (112A-112N) to execute the first set of operations using the first plurality of sparse blocks and further cause the one or more very/hyper sparse tiles (114A-114N) to execute the second set of operations using the second plurality of very/hyper sparse blocks.

4. The hardware accelerator (502) of any one of claims 1-3, wherein the one or more sparse tiles (112A-112N), configured to execute the first set of operations, are configured to:
update a set of center values within one or more random access memories (508) of the one or more sparse tiles (112A-112N).

5. The hardware accelerator (502) of claim 4, wherein the one or more sparse tiles (112A-112N), configured to execute the first set of operations, are further configured to:
stream, by one or more data management units (510) of the one or more sparse tiles (112A-112N), values of a plurality of rows of the matrix over the high bandwidth interface (120) from the first memory unit (116A-116M) to local memories of the first plurality of processing elements (506A-506N).

6. The hardware accelerator (502) of claim 5, wherein the one or more sparse tiles (112A-112N), configured to execute the first set of operations, are further configured to:
execute, by the first plurality of processing elements (506A-506N), a plurality of distance calculations using at least some of the streamed values and a clustering computation subsystem (130) that is separate from the one or more sparse tiles (112A-112N).

7. The hardware accelerator (502) of claim 5, wherein the one or more sparse tiles (112A-112N), configured to execute the first set of operations, are further configured to:
execute, by the first plurality of processing elements (506A-506N), one or more scale-update operations using the set of center values.

8. The hardware accelerator (502) of any one of claims 1-7, wherein the one or more very/hyper sparse tiles (114A-114N), configured to execute the second set of operations, are configured to:
update, during the second set of operations, a set of center values within the second memory unit (118A-118M) over the low-latency interface (122).

9. The hardware accelerator (502) of claim 8, wherein the one or more very/hyper sparse tiles (114A-114N), configured to execute the second set of operations, are further 2. configured to:
retrieve, by one or more data management units (516) of the one or more very/hyper sparse tiles (114A-114N) through use of random access requests, values of a plurality of rows of the matrix over the low-latency interface (122) from the second memory unit (118A-118M).

10. The hardware accelerator (502) of any one of claims 1-9, wherein each of the one or more very/hyper sparse tiles (114A-114N) and each of the one or more sparse tiles (112A-112N), while executing the first set of operations and the second set of operations respectively, are configured to:
provide partial distance values to a clustering computation subsystem (130) that is separate from the one or more sparse tiles (112A-112N) and separate from the one or more very/hyper sparse tiles (114A-114N); and
obtain nearest cluster identifiers from the clustering computation subsystem (130).

11. A method (700) performed by a hardware accelerator for executing web-scale k-means clustering comprising:
executing, by one or more sparse tiles of the hardware accelerator, a first set of operations for a k-means clustering task involving a matrix (705), each of the sparse tiles comprising a first plurality of processing units to operate upon a first plurality of sparse blocks of the matrix that have been streamed to one or more random access memories of the one or more sparse tiles over a high bandwidth interface from a first memory unit; and
executing, by one or more very/hyper sparse tiles of the hardware accelerator, a second set of operations for the k-means clustering task involving the matrix (710), each of the very/hyper sparse tiles comprising a second plurality of processing units to operate upon a second plurality of very/hyper sparse blocks of the matrix,
**characterized in that** said very/hyper sparse blocks of the matrix have been randomly accessed over a low-latency interface from a second off-tile memory unit adapted for low latency, parallel, short, irregular accesses.

12. The method (700) of claim 11, further comprising:
determining, by the hardware accelerator, that the k-means clustering task involving a matrix is to be performed (605); and
partitioning, by the hardware accelerator, the matrix into the first plurality of sparse blocks and the second plurality of very/hyper sparse blocks (615), wherein the first plurality of sparse blocks includes one or more sections of the matrix that are sparse, and wherein the second plurality of very/hyper sparse blocks includes another one or more sections of the matrix that are very- or hyper-sparse.

13. The method (700) of claim 12, further comprising:
causing the one or more sparse tiles of the hardware processor to perform the first set of operations using the first plurality of sparse blocks and further causing the one or more very/hyper sparse tiles of the hardware processor to perform the second set of operations using the second plurality of very/hyper sparse blocks (620).

14. The method (700) of any one of claims 11-13, wherein executing the first set of operations (710) comprises:
updating, by the first plurality of processing elements of each of the one or more sparse tiles, a set of center values within one or more random access memories of the one or more sparse tiles.

15. The method (700) of claim 14, wherein executing the first set of operations (710) further comprises streaming, by one or more data management units of the one or more sparse tiles, values of a plurality of rows of the matrix over the high bandwidth interface from the first memory unit to local memories of the first plurality of processing elements, and wherein executing the first set of operations (710) further comprises at least one of:
executing, by the first plurality of processing elements of each of the one or more sparse tiles, a plurality of distance calculations using at least some of the streamed values and a clustering computation subsystem that is separate from the one or more sparse tiles; or
executing, by the first plurality of processing elements of each of the one or more sparse tiles, one or more scale-update operations using the set of center values.

## Patentansprüche

1. Hardware-Beschleuniger (502), der Folgendes umfasst:
eine oder mehrere dünn besetzte Kacheln (112A-112N), die konfiguriert sind, einen ersten Satz von Operationen für eine K-Mittelwerte-Gruppierungsaufgabe, die eine Matrix umfasst, auszuführen, wobei jede der dünn besetzten Kacheln (112A-112N) mehrere erste Verarbeitungseinheiten (506A-506Z) umfasst, die konfiguriert sind, an mehreren ersten dünn besetzten Blöcken der Matrix, die von einer ersten Speichereinheit (116A-116M) über eine Schnittstelle mit hoher Bandbreite (120) zu einem oder mehreren Schreib-/Lese-Speichern (508) der einen oder der mehreren dünn besetzten Kacheln (112A-112N) gestreamt wurden, zu arbeiten; und
eine oder mehrere sehr dünn/hyperdünn besetzte Kacheln (114A-114N), die konfiguriert sind, einen zweiten Satz von Operationen für die K-Mittelwerte-Gruppierungsaufgabe, die die Matrix umfasst, auszuführen,
wobei jede der sehr dünn/hyperdünn besetzten Kacheln (114A-114N) mehrere zweite Verarbeitungseinheiten (506A-506Z) umfasst, die konfiguriert sind, an mehreren zweiten sehr dünn/hyperdünn besetzten Blöcken der Matrix zu arbeiten,
**dadurch gekennzeichnet, dass** auf die sehr dünn/hyperdünn besetzten Blöcke der Matrix über eine Schnittstelle (122) mit geringer Latenz von einer zweiten kachelexternen Speichereinheit (118A-118M), die für parallele, kurze, unregelmäßige Zugriffe mit geringer Latenz ausgelegt ist, wahlfrei zugegriffen wurde.

2. Hardware-Beschleuniger (502) nach Anspruch 1, der ferner eine Steuereinheit (560) umfasst, die konfiguriert ist zum
Bestimmen, dass die K-Mittelwerte-Gruppierungsaufgabe, die die Matrix umfasst, durchgeführt werden soll; und Partitionieren der Matrix in die mehreren ersten dünn besetzten Blöcke und die mehreren zweiten sehr dünn/hyperdünn besetzten Blöcke, wobei die mehreren ersten dünn besetzten Blöcke einen oder mehrere Abschnitte der Matrix, die dünn besetzt sind, enthalten, und die mehreren zweiten sehr dünn/hyperdünn besetzten Blöcke einen oder mehrere weitere Abschnitte der Daten, die sehr dünn oder hyperdünn besetzt sind, enthalten.

3. Hardware-Beschleuniger (502) nach Anspruch 2, wobei die Steuereinheit (560) ferner konfiguriert ist zum Verursachen, dass die eine oder die mehreren dünn besetzten Kacheln (112A-112N) den ersten Satz von Operationen unter Verwendung der mehreren ersten dünn besetzten Blöcke ausführen, und ferner Verursachen, dass die eine oder die mehreren sehr dünn/hyperdünn besetzten Kacheln (114A-114N) den zweiten Satz von Operationen unter Verwendung der mehreren zweiten sehr dünn/hyperdünn besetzten Blöcke ausführen.

4. Hardware-Beschleuniger (502) nach einem der Ansprüche 1-3, wobei die eine oder die mehreren dünn besetzten Kacheln (112A-112N), die konfiguriert sind, den ersten Satz von Operationen auszuführen, konfiguriert sind zum
Aktualisieren eines Satzes von Zentralwerten in einem oder mehreren Schreib-/Lese-Speichern (508) der einen oder der mehreren dünn besetzten Kacheln (112A-112N).

5. Hardware-Beschleuniger (502) nach Anspruch 4, wobei die eine oder die mehreren dünn besetzten Kacheln (112A-112N), die konfiguriert sind, den ersten Satz von Operationen auszuführen, ferner konfiguriert sind zum Streamen von Werten mehrerer Zeilen der Matrix durch eine oder mehrere Datenmanagementeinheiten (510) der einen oder der mehreren dünn besetzten Kacheln (112A-112N) von der ersten Speichereinheit (116A-116M) über die Schnittstelle mit hoher Bandbreite (120) zu lokalen Speichern der mehreren ersten Verarbeitungselemente (506A-506N).

6. Hardware-Beschleuniger (502) nach Anspruch 5, wobei die eine oder die mehreren dünn besetzten Kacheln (112A-112N), die konfiguriert sind, den ersten Satz von Operationen auszuführen, ferner konfiguriert sind zum Ausführen durch die mehreren ersten Verarbeitungselemente (506A-506N) mehrerer Entfernungsberechnungen unter Verwendung von mindestens einigen der gestreamten Werte und eines Gruppierungsberechnungsuntersystems (130), das von der einen oder den mehreren dünn besetzten Kacheln (112A-112N) getrennt ist.

7. Hardware-Beschleuniger (502) nach Anspruch 5, wobei die eine oder die mehreren dünn besetzten Kacheln (112A-112N), die konfiguriert sind, den ersten Satz von Operationen auszuführen, ferner konfiguriert sind zum Ausführen durch die mehreren ersten Verarbeitungselemente (506A-506N) einer oder mehrerer Skalenaktualisierungsoperationen unter Verwendung des Satzes von Zentralwerten.

8. Hardware-Beschleuniger (502) nach einem der Ansprüche 1-7, wobei die eine oder die mehreren sehr dünn/hyperdünn besetzten Kacheln (114A-114N), die konfiguriert sind, den zweiten Satz von Operationen auszuführen, konfiguriert sind zum
Aktualisieren während des zweiten Satzes von Operationen eines Satzes von Zentralwerten in der zweiten Speichereinheit (118A-118M) über die Schnittstelle (122) mit geringer Latenz.

9. Hardware-Beschleuniger (502) nach Anspruch 8, wobei die eine oder die mehreren sehr dünn/hyperdünn besetzten Kacheln (114A-114N), die konfiguriert sind, den zweiten Satz von Operationen auszuführen, ferner konfiguriert sind zum
Abrufen durch eine oder mehrere Datenmanagementeinheiten (516) der einen oder der mehreren sehr dünn/hyperdünn besetzten Kacheln (114A-114N) unter Verwendung von Anforderungen für wahlfreien Zugriff von Werten mehrerer Zeilen der Matrix über die Schnittstelle (122) mit geringer Latenz von der zweiten Speichereinheit (118A-118M).

10. Hardware-Beschleuniger (502) nach einem der Ansprüche 1-9, wobei jede der einen oder der mehreren sehr dünn/hyperdünn besetzten Kacheln (114A-114N) und jede der einen oder der mehreren dünn besetzten Kacheln (112A-112N) während des Ausführens des ersten Satzes von Operationen bzw. des zweiten Satzes von Operationen konfiguriert sind zum
Liefern von Teilentfernungswerten zu einem Gruppierungsberechnungsuntersystem (130), das von der einen oder den mehreren dünn besetzten Kacheln (112A-112N) getrennt ist und von der einen oder den mehreren sehr dünn/hyperdünn besetzten Kacheln (114A-114N) getrennt ist; und
Erhalten nächstliegender Clusterkennungen vom Gruppierungsberechnungsuntersystem (130).

11. Verfahren (700), das durch einen Hardware-Beschleuniger zum Ausführen einer "Web-Scale"-K-Mittelwerte-Gruppierung durchgeführt wird und Folgendes umfasst:
Ausführen durch eine oder mehrere dünn besetzte Kacheln des Hardware-Beschleunigers eines ersten Satzes von Operationen für eine K-Mittelwerte-Gruppierungsaufgabe, die eine Matrix (705) umfasst, wobei jede der dünn besetzten Kacheln mehrere erste Verarbeitungseinheiten umfasst, die ausgelegt sind, an mehreren ersten dünn besetzten Blöcken der Matrix, die von einer ersten Speichereinheit über eine Schnittstelle mit hoher Bandbreite zu einem oder mehreren Schreib-/Lese-Speichern der einen oder der mehreren dünn besetzten Kacheln gestreamt wurden, zu arbeiten; und
Ausführen durch eine oder mehrere sehr dünn/hyperdünn besetzte Kacheln des Hardware-Beschleunigers eines zweiten Satzes von Operationen für die K-Mittelwerte-Gruppierungsaufgabe, die die Matrix (710) umfasst, wobei jede der sehr dünn/hyperdünn besetzten Kacheln mehrere zweite Verarbeitungseinheiten umfasst, die ausgelegt sind, an mehreren zweiten sehr dünn/hyperdünn besetzten Blöcken der Matrix zu arbeiten,
**dadurch gekennzeichnet, dass** auf die sehr dünn/hyperdünn besetzten Blöcke der Matrix über eine Schnittstelle mit geringer Latenz von einer zweiten kachelexternen Speichereinheit, die für parallele, kurze, unregelmäßige Zugriffe mit geringer Latenz ausgelegt ist, wahlfrei zugegriffen wurde.

12. Verfahren (700) nach Anspruch 11, das ferner Folgendes umfasst:
Bestimmen durch den Hardware-Beschleuniger, dass die K-Mittelwerte-Gruppierungsaufgabe, die eine Matrix umfasst, durchgeführt werden soll (605); und
Partitionieren durch den Hardware-Beschleuniger der Matrix in die mehreren ersten dünn besetzten Blöcke und die mehreren zweiten sehr dünn/hyperdünn besetzten Blöcke (615), wobei die mehreren ersten dünn besetzten Blöcke einen oder mehrere Abschnitte der Matrix, die dünn besetzt sind, enthalten, und die mehreren zweiten sehr dünn/hyperdünn besetzten Blöcke einen oder mehrere weitere Abschnitte der Matrix, die sehr dünn oder hyperdünn besetzt sind, enthalten.

13. Verfahren (700) nach Anspruch 12, das ferner Folgendes umfasst:
Verursachen, dass die eine oder die mehreren dünn besetzten Kacheln des Hardware-Prozessors den ersten Satz von Operationen unter Verwendung der mehreren ersten dünn besetzten Blöcke durchführen, und ferner Verursachen,
dass die eine oder die mehreren sehr dünn/hyperdünn besetzten Kacheln des Hardware-Prozessors den zweiten Satz von Operationen unter Verwendung der mehreren zweiten sehr dünn/hyperdünn besetzten Blöcke durchführen (620) .

14. Verfahren (700) nach einem der Ansprüche 11-13, wobei ein Ausführen des ersten Satzes von Operationen (710) Folgendes umfasst:
Aktualisieren durch die mehreren ersten Verarbeitungselemente jeder der einen oder der mehreren dünn besetzten Kacheln eines Satzes von Zentralwerten in einem oder mehreren Schreib-/Lese-Speichern der einen oder der mehreren dünn besetzten Kacheln.

15. Verfahren (700) nach Anspruch 14, wobei ein Ausführen des ersten Satzes von Operationen (710) ferner ein Streamen von Werten mehrerer Zeilen der Matrix durch eine oder mehrere Datenmanagementeinheiten der einen oder der mehreren dünn besetzten Kacheln von der ersten Speichereinheit über die Schnittstellen mit hoher Bandbreite zu lokalen Speichern der mehreren ersten Verarbeitungselemente umfasst und wobei ein Ausführen des ersten Satzes von Operationen (710) ferner Folgendes umfasst:
Ausführen durch die mehreren ersten Verarbeitungselemente jeder der einen oder der mehreren dünn besetzten Kacheln mehrerer Entfernungsberechnungen unter Verwendung mindestens einiger der gestreamten Werte und eines Gruppierungsberechnungsuntersystems, das von der einen oder den mehreren dünn besetzten Kacheln getrennt ist; und/oder
Ausführen durch die mehreren ersten Verarbeitungselemente jeder der einen oder der mehreren dünn besetzten Kacheln einer oder mehrerer Skalenaktualisierungsoperationen unter Verwendung des Satzes von Zentralwerten.

## Revendications

1. Accélérateur matériel (502) comprenant :
une ou plusieurs tuiles clairsemées (112A-112N) configurées pour exécuter un premier ensemble d'opérations pour une tâche de regroupement en k moyens impliquant une matrice, chacune des tuiles clairsemées (112A-112N) comprenant une première pluralité d'unités de traitement (506A-506Z) configurées pour fonctionner sur une première pluralité de blocs clairsemés de la matrice qui ont été diffusés vers une ou plusieurs mémoires vives (508) des une ou plusieurs tuiles clairsemées (112A-112N) sur une interface à large bande passante (120) à partir d'une première unité de mémoire (116A-116M) ; et
une ou plusieurs tuiles très/hyper clairsemées (114A-114N) configurées pour exécuter un second ensemble d'opérations pour la tâche de regroupement en k moyens impliquant la matrice, chacune des tuiles très/hyper clairsemées (114A-114N) comprenant une seconde pluralité d'unités de traitement (506A-506Z) configurées pour fonctionner sur une seconde pluralité de blocs très/hyper clairsemés de la matrice,
**caractérisé en ce que** lesdits blocs très/hyper clairsemés de la matrice ont été aléatoirement accessibles par le biais d'une interface à faible latence (122) à partir d'une deuxième unité de mémoire hors tuile (118A-118M) conçue pour des accès à faible latence, parallèles, courts, irréguliers.

2. Accélérateur matériel (502) selon la revendication 1, comprenant en outre une unité de commande (560) configurée pour :
déterminer que la tâche de regroupement en k-moyens impliquant la matrice doit être réalisée ; et
partitionner la matrice en la première pluralité de blocs clairsemés et la seconde pluralité de blocs très/hyper clairsemés, la première pluralité de blocs clairsemés comprenant une ou plusieurs sections de la matrice qui sont clairsemées, et la seconde pluralité de blocs très/hyper clairsemés comprenant une ou plusieurs autres sections des données qui sont très clairsemées ou hyper-clairsemées.

3. Accélérateur matériel (502) selon la revendication 2, dans lequel l'unité de commande (560) est en outre configurée pour :
commander les une ou plusieurs tuiles clairsemées (112A-112N) pour exécuter le premier ensemble d'opérations à l'aide de la première pluralité de blocs clairsemés et
commander en outre les une ou plusieurs tuiles très/hyper clairsemées (114A-114N) pour exécuter le second ensemble d'opérations à l'aide de la seconde pluralité de blocs très/hyper clairsemés.

4. Accélérateur matériel (502) selon l'une quelconque des revendications 1 à 3, dans lequel les une ou plusieurs tuiles clairsemées (112A-112N), configurées pour exécuter le premier ensemble d'opérations, sont configurées pour :
mettre à jour un ensemble de valeurs centrales dans une ou plusieurs mémoires vives (508) des une ou plusieurs tuiles clairsemées (112A-112N).

5. Accélérateur matériel (502) selon la revendication 4, dans lequel les une ou plusieurs tuiles clairsemées (112A-112N), configurées pour exécuter le premier ensemble d'opérations, sont en outre configurées pour : diffuser en continu, par une ou plusieurs unités de gestion de données (510) des une ou plusieurs tuiles clairsemées (112A-112N), des valeurs d'une pluralité de rangées de la matrice sur l'interface à large bande passante (120) depuis la première unité de mémoire (116A-116M) vers des mémoires locales de la première pluralité d'éléments de traitement (506A-506N).

6. Accélérateur matériel (502) selon la revendication 5, dans lequel les une ou plusieurs tuiles clairsemées (112A-112N), configurées pour exécuter le premier ensemble d'opérations, sont en outre configurées pour : exécuter, par la première pluralité d'éléments de traitement (506A-506N), une pluralité de calculs de distance à l'aide d'au moins certaines des valeurs diffusées et d'un sous-système de calcul de regroupement (130) distinct des une ou plusieurs tuiles clairsemées (112A-112N) .

7. Accélérateur matériel (502) selon la revendication 5, dans lequel les une ou plusieurs tuiles clairsemées (112A-112N), configurées pour exécuter le premier ensemble d'opérations, sont en outre configurées pour : exécuter, par la première pluralité d'éléments de traitement (506A-506N), une ou plusieurs opérations de mise à jour - mise à l'échelle à l'aide de l'ensemble des valeurs centrales.

8. Accélérateur matériel (502) selon l'une quelconque des revendications 1 à 7, dans lequel les une ou plusieurs tuiles très/hyper clairsemées (114A-114N), configurées pour exécuter le second ensemble d'opérations, sont configurées pour :
mettre à jour, durant le second ensemble d'opérations, un ensemble de valeurs centrales dans la deuxième unité de mémoire (118A-118M) sur l'interface à faible latence (122).

9. Accélérateur matériel (502) selon la revendication 8, dans lequel les une ou plusieurs tuiles très/hyper clairsemées (114A-114N), configurées pour exécuter le second ensemble d'opérations, sont en outre configurées pour :
récupérer, par une ou plusieurs unités de gestion de données (516) des une ou plusieurs tuiles très/hyper clairsemées (114A-114N) par le biais de demandes d'accès aléatoire, des valeurs d'une pluralité de rangées de la matrice sur l'interface à faible latence (122) à partir de la deuxième unité de mémoire (118A-118M).

10. Accélérateur matériel (502) selon l'une quelconque des revendications 1 à 9, dans lequel chacune des ou plusieurs tuiles très/hyper clairsemées (114A-114N) et chacune des une ou plusieurs tuiles clairsemées (112A-112N), durant l'exécution respective du premier ensemble d'opérations et du second ensemble d'opérations, sont configurées pour :
fournir des valeurs de distance partielles à un sous-système de calcul de regroupement (130) qui est distinct des une ou plusieurs tuiles clairsemées (112A-112N) et
distinct des une ou plusieurs tuiles très/hyper clairsemées (114A-114N) ; et
obtenir des identifiants de groupes les plus proches à partir du sous-système de calcul de regroupement (130).

11. Procédé (700) réalisé par un accélérateur matériel pour l'exécution d'un regroupement en k moyens à l'échelle du Web comprenant :
l'exécution, par une ou plusieurs tuiles clairsemées de l'accélérateur matériel, d'un premier ensemble d'opérations pour une tâche de regroupement en k moyens impliquant une matrice (705), chacune des tuiles clairsemées comprenant une première pluralité d'unités de traitement destinées à fonctionner sur une première pluralité de blocs clairsemés de la matrice qui ont été diffusés vers une ou plusieurs mémoires vives des une ou plusieurs tuiles clairsemées sur une interface à large bande passante à partir d'une première unité de mémoire ; et
l'exécution, par une ou plusieurs tuiles très/hyper clairsemées de l'accélérateur matériel, d'un second ensemble d'opérations pour la tâche de regroupement en k moyens impliquant la matrice (710), chacune des tuiles très/hyper clairsemées comprenant une seconde pluralité d'unités de traitement destinées à fonctionner sur une seconde pluralité de blocs très/hyper clairsemés de la matrice,
**caractérisé en ce que** lesdits blocs très/hyper clairsemés de la matrice ont été accessibles de manière aléatoire sur une interface à faible latence à partir d'une deuxième unité de mémoire hors tuile conçue pour des accès à faible latence, parallèles, courts, irréguliers.

12. Procédé (700) selon la revendication 11, comprenant en outre :
la détermination, par l'accélérateur matériel, que la tâche de regroupement en k moyens impliquant une matrice doit être réalisée (605) ; et
le partitionnement, par l'accélérateur matériel, de la matrice en la première pluralité de blocs clairsemés et la seconde pluralité de blocs très/hyper clairsemés (615), la première pluralité de blocs clairsemés comprenant une ou plusieurs sections de la matrice qui sont clairsemées, et la seconde pluralité de blocs très/hyper clairsemés comprenant une ou plusieurs autres sections de la matrice qui sont très ou hyper-clairsemées.

13. Procédé (700) selon la revendication 12, comprenant en outre :
la commande des une ou plusieurs tuiles clairsemées du processeur matériel pour réaliser le premier ensemble d'opérations à l'aide de la première pluralité de blocs clairsemés et la commande des une ou plusieurs tuiles très/hyper clairsemées du processeur matériel pour réaliser le second ensemble d'opérations à l'aide de la seconde pluralité de blocs très/hyper clairsemés (620).

14. Procédé (700) selon l'une quelconque des revendications 11 à 13, dans lequel l'exécution du premier ensemble d'opérations (710) comprend :
la mise à jour, par la première pluralité d'éléments de traitement de chacune des tuiles clairsemées, d'un ensemble de valeurs centrales dans une ou plusieurs mémoires vives des une ou plusieurs tuiles clairsemées.

15. Procédé (700) selon la revendication 14, dans lequel l'exécution du premier ensemble d'opérations (710) comprend en outre la diffusion en continu, par une ou plusieurs unités de gestion de données des une ou plusieurs tuiles clairsemées, de valeurs d'une pluralité de rangées de la matrice sur l'interface à large bande passante depuis la première unité de mémoire vers des mémoires locales de la première pluralité d'éléments de traitement, et dans lequel l'exécution de la première série d'opérations (710) comprend en outre :
l'exécution, par la première pluralité d'éléments de traitement de chacune des tuiles clairsemées, d'une pluralité de calculs de distance à l'aide d'au moins certaines des valeurs diffusées et d'un sous-système de calcul de regroupement distinct des une ou plusieurs tuiles clairsemées; et/ou
l'exécution, par la première pluralité d'éléments de traitement de chacune des tuiles clairsemées, d'une ou plusieurs opérations de mise à jour - mise à l'échelle à l'aide de l'ensemble de valeurs centrales.
